(19) Europäisches Patentamt / European Patent Office / Office européen des brevets

(11) **EP 2 422 225 B1**

(12) **EUROPEAN PATENT SPECIFICATION**

(45) Date of publication and mention
of the grant of the patent:
**22.07.2015 Bulletin 2015/30**

(21) Application number: **10767737.9**

(22) Date of filing: **21.04.2010**

(51) Int Cl.:
*G01W 1/08* (2006.01)  *G01W 1/02* (2006.01)
*G01B 9/02* (2006.01)  *G01N 21/45* (2006.01)
*G01N 21/53* (2006.01)  *G01N 21/47* (2006.01)
*G01N 21/17* (2006.01)  *G01P 5/26* (2006.01)
*G01S 17/95* (2006.01)  *G01S 17/58* (2006.01)
*G01K 11/30* (2006.01)  *G01S 7/481* (2006.01)

(86) International application number:
**PCT/US2010/031965**

(87) International publication number:
**WO 2010/124038 (28.10.2010 Gazette 2010/43)**

(54) **ATMOSPHERIC MEASUREMENT SYSTEM**

ATMOSPHÄRENMESSSYSTEM

SYSTÈME DE MESURE ATMOSPHÉRIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.04.2009 US 171080 P**
**15.05.2009 US 178550 P**
**24.12.2009 US 290004 P**

(43) Date of publication of application:
**29.02.2012 Bulletin 2012/09**

(73) Proprietor: **Michigan Aerospace Corporation**
**Ann Arbor, Michigan 48108-2285 (US)**

(72) Inventors:
• **HAYS, Paul Byron**
**Ann Arbor**
**Michigan 48104 (US)**

• **JOHNSON, David Keith**
**Canton**
**Michigan 48187 (US)**
• **ZUK, David Michael**
**Dexter**
**Michigan 48130 (US)**
• **LINDEMANN, Scott Kevin**
**Howell**
**Michigan 48843 (US)**

(74) Representative: **Puschmann Borchert Bardehle Patentanwälte Partnerschaft mbB**
**Postfach 10 12 31**
**80086 München (DE)**

(56) References cited:
**JP-A- 2007 303 855**   **US-A- 5 214 484**
**US-A1- 2006 262 324**   **US-A1- 2007 176 077**
**US-A1- 2008 264 164**   **US-B1- 7 098 871**

**Description**

FIELD OF THE INVENTION

The present invention relates to interferometric atmospheric sensing.

BACKGROUND OF THE INVENTION

US 2006262324 discloses a laser interferometric sensing system for measuring density, speed and temperature of the atmosphere based on generating separate fringe patterns for different regions. The optical element between the detector and the Fabry-Perot interferometer is a circle to line interferometer optic (CLIO) to allow detection and analysis of air parameters.

In order to adapt the atmospheric sesning system to environment changes, there is a need to reconfigure the pattern parameters rapidly.

BRIEF DESCRIPTION OF THE DRAWINGS

FIG. 1 illustrates a schematic block diagram of a first aspect of an atmospheric measurement system;
FIG. 2 illustrates an optical head of a biaxial system;
FIG. 3 illustrates an optical head of a coaxial system;
FIG. 4 illustrates a portion of an atmospheric measurement system including a Filter System of a Fabry-Pérot Interferometer;
FIG. 5a illustrates an isometric view of a Fabry-Pérot interferometer;
FIG. 5b illustrates a side view of the Fabry-Pérot interferometer illustrated in FIG. 5a for one associated fiber optic input and a corresponding output;
FIG. 6 illustrates a solid Fabry-Pérot etalon;
FIG. 7 illustrates a schematic block diagram of a second aspect of an atmospheric measurement system;
FIG. 8a illustrates a half-tone image of fringes from a fully illuminated Fabry-Perot etalon;
FIG. 8b illustrates a schematic view of fringes from a fully illuminated Fabry-Pérot etalon;
FIG. 8c illustrates fringes from a Fabry-Pérot etalon illuminated with two fiber input channels;
FIG. 9a illustrates a schematic diagram of a Fabry-Pérot interferometer in cooperation with an associated detection system, of an atmospheric measurement system;
FIG. 9b illustrates a plan view of a digital micromirror device incorporated in the detection system illustrated in FIG. 9a;
FIG. 10 illustrates a pixel element of a digital micromirror device;
FIG. 11 illustrates two adjacent pixel elements of a digital micromirror device, each in a different pixel mirror rotational state;
FIG. 12a illustrates a radial cross-section of an intensity distribution of a set of fringes from a Fabry-Pérot etalon;
FIG. 12b illustrates fringes from the Fabry-Pérot etalon from two scattered signals associated with different velocities;
FIG. 12c illustrates a fringe associated with a backscatter signal channel processed by the Fabry-Pérot etalon, wherein the fringe comprises an aerosol (Mie), molecular (Rayleigh) and background signal components;
FIG. 13 illustrates a partial derivative with respect to velocity of the intensity distribution of FIG. 12a;
FIG. 14 illustrates a partial derivative with respect to temperature of the intensity distribution of FIG. 12a;
FIG. 15 illustrates a set of complementary reflection patterns of a digital micromirror device programmed to gather associated complementary aerosol signal components;
FIG. 16 illustrates a set of complementary reflection patterns of a digital micromirror device programmed to gather associated complementary molecular signal components;
FIG. 17 illustrates a set of complementary reflection patterns of a digital micromirror device programmed to gather associated complementary velocity signal components;
FIG. 18 illustrates a set of complementary reflection patterns of a digital micromirror device programmed to gather associated complementary temperature signal components;
FIG. 19 illustrates a set of complementary reflection patterns of a digital micromirror device programmed to gather associated complementary background signal components;
FIGs. 20a-e illustrate radial cross-sections through the complementary reflection patterns illustrated in FIGS. 15-19, respectively;
FIG. 21 illustrates a partial derivative with respect to velocity of the intensity distribution of FIG. 12a as in FIG. 13, upon which is superimposed a corresponding radial cross-section of a first set of associated complementary reflection patterns of a digital micromirror device programmed to gather associated complementary velocity signal components, for a first value of a velocity threshold that distinguishes the complementary components of the associated complementary reflection patterns;

FIG. 22 illustrates a partial derivative with respect to velocity of the intensity distribution of **FIG. 12a** as in **FIG. 13,** upon which is superimposed a corresponding radial cross-section of a second set of associated complementary reflection patterns of a digital micromirror device programmed to gather associated complementary velocity signal components, for a second value of a velocity threshold that distinguishes the complementary components of the associated complementary reflection patterns;

FIG. 23 illustrates a flowchart of a Monte Carlo simulation process;

FIG. 24 illustrates the results from a Monte Carlo simulation used to optimize parameters associated with the complementary reflection patterns used to program a digital micromirror device for gathering signals used to determine atmospheric measurements from a fringe pattern output from a Fabry-Pérot interferometer;

FIG. 25 illustrates a flowchart of a Genetic Algorithm process;

FIG. 26 illustrates a composite of radial cross-sections through a first alternative set of complementary reflection patterns;

FIG. 27 illustrates a composite of radial cross-sections through a second alternative set of complementary reflection patterns;

FIG. 28 illustrates a block diagram of an atmospheric measurement system data analysis process;

FIG. 29 illustrates a block diagram of various atmospheric measurement system embodiments;

FIG. 30 illustrates an exploded view of thermal chamber assembly enclosing a Fabry-Pérot etalon;

FIG. 31 illustrates a first exploded view of a core assembly incorporated in the thermal chamber assembly illustrated in **FIG. 30;**

FIG. 32 illustrates a second exploded view of the core assembly incorporated in the thermal chamber assembly illustrated in **FIG. 30;**

FIG. 33 illustrates a third exploded view of the core assembly incorporated in the thermal chamber assembly illustrated in **FIG. 30**;

FIG. 34 illustrates an embodiment of a range imaging LIDAR system in accordance with a third aspect of an atmospheric measurement system;

FIG. 35 illustrates an example of a composite of an image of backscattered light from an interaction region and an associated reference beam, as input to a Fabry-Pérot interferometer of the third aspect of an atmospheric measurement system illustrated in **FIG. 34;**

FIG. 36 illustrates an example of an image of a fringe pattern output from the Fabry-Pérot interferometer, and the input to an associated detection system, of the third aspect of an atmospheric measurement system illustrated in **FIG. 34,** processing the image illustrated in **FIG. 35;**

FIG. 37 illustrates a flow chart of a process for determining atmospheric measurements using a range imaging LIDAR system;

FIG. 38 illustrates an embodiment of a first aspect of a detection system associated with the third aspect of the atmospheric measurement system illustrated in **FIG. 34;**

FIG. 39 illustrates an embodiment of a second aspect of a detection system associated with the third aspect of the atmospheric measurement system illustrated in **FIG. 34;**

FIG. 40a illustrates a schematic block diagram of a fourth aspect of an atmospheric measurement system;

FIG. 40b illustrates an image in the output focal plane of the Fabry-Pérot interferometer incorporated in the fourth aspect of an atmospheric measurement system illustrated in **FIG. 40a,** absent the associated Fabry-Pérot etalon;

FIG. 40c illustrates an image in the output focal plane of the Fabry-Pérot interferometer incorporated in the fourth aspect of an atmospheric measurement system illustrated in **FIG. 40a,** with the associated Fabry-Pérot etalon in place;

FIG. 41a illustrates a schematic block diagram of a fourth aspect of an atmospheric measurement system;

FIG. 41b illustrates an image in the output focal plane of the Fabry-Pérot interferometer incorporated in the fourth aspect of an atmospheric measurement system illustrated in **FIG. 41a,** absent the associated Fabry-Pérot etalon;

FIG. 41c illustrates an image in the output focal plane of the Fabry-Pérot interferometer incorporated in the fourth aspect of an atmospheric measurement system illustrated in **FIG. 41a,** with the associated Fabry-Pérot etalon in place;

FIGS. 42a and 42b illustrate a circular image compression process operating on a fringe pattern from a Fabry-Pérot interferometer;

FIG. 43 illustrates an image of a set of circular fringe patterns and regions of interest associated with a circular binning process;

FIG. 44a illustrates a flow chart of a first embodiment of a circular binning process;

FIG. 44b illustrates an alternate decision block of the first embodiment of a circular binning process illustrated in **FIG. 44a**;
**FIG. 45** illustrates a flow chart of a second embodiment of a circular binning process;
**FIG. 46** illustrates a flow chart of a process for determining measured air data products with an atmospheric measurement system;
**FIG. 47** illustrates a flow chart of a process for determining derived air data products with an atmospheric measurement system; and
*FIG. 48* illustrates various applications of an atmospheric measurement system.

DESCRIPTION OF EMBODIMENT(S)

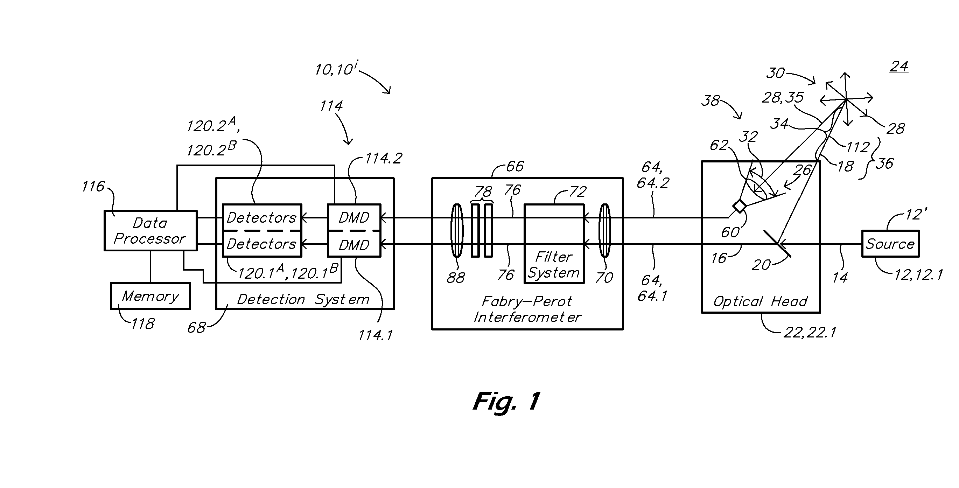

Referring to **FIG. 1,** a first aspect of an **atmospheric measurement system 10, 10$^i$** comprises an at least substantially monochromatic **light source 12',** for example, a **laser 12,** that generates a **first laser beam 14** which is split into a **reference beam 16** and one or more **second laser beams 18** by a **beam splitter optic 20** in an **optical head 22.** The **optical head 22** provides for directing the one or more **second laser beams 18** into an **atmosphere 24** within sight thereof, and further incorporates a corresponding one or more **telescopes 26,** each associated with one of the one or more **second laser beams 18,** wherein each of the **telescopes 26** provides for receiving **light 28** that is backscattered by the **atmosphere 24** from a corresponding **interaction region 30** therein defined by the intersection of the associated **second laser beam 18** with an associated **field of view 32** of the corresponding **telescope 26.** Each **second laser beam 18** and its associated **telescope 26** define a channel, and neither the number of channels, nor the geometry of the channels in relation to each other, is limiting.

For example, in one embodiment, the **first 14 and second 18 laser beams** comprise ultraviolet (UV) laser light at a wavelength of about **266** nm that is emitted into the **atmosphere 24** by one or more associated **second laser beams 18,** and the associated one or more **telescopes 26** provide for detecting the return from scattering of the one or more **second laser beams 18** by atmospheric molecules and aerosols. A wavelength of about **266** nm, being invisible to the human eye and substantially absorbed by the atmosphere, is beneficial for its stealth, eye safety and molecular scattering properties. There is very little natural background light due to absorption of most natural **266** nm light by ozone and molecular oxygen. Ultraviolet light at about **266** nm is readily absorbed by glass and plastic, such as used in aircraft wind screens, which provides for improved eye safety. The particular operating wavelength of the **atmospheric measurement system 10** is not limiting, and it should be understood that any optical wavelength that interacts with that which is being sensed in the associated **interaction region 30** may be used.

For example, a **Nd:YAG laser 12.1** can operate at relatively high power levels so as to provide sufficiently intense illumination so as to provide for relatively long range atmospheric sensing applications. An **Nd:YAG laser 12.1** has a fundamental wavelength of **1064** nanometers (nm), from which shorter wavelengths/higher frequencies may be generated using one or more harmonic generators operatively associated with or a part of the **Nd:YAG laser 12.1.** For example, a second-harmonic generator could be used to convert the fundamental **1064** nm light to second-harmonic **532** nm light which could then be transformed with either a third- or fourth-harmonic generator to generate associated **355** nm or **266** nm light respectively. Heretofore these second-, third- and/or fourth-harmonic generators would be either incorporated in, or free-space coupled to, the **laser 12** generally or, more particularly, the **Nd:YAG laser 12.1.** Accordingly, alternative embodiments of the **atmospheric measurement system 10** incorporating a **Nd:YAG laser 12.1** may be operated at frequencies other than **266** nm, for example, at either the second or third harmonics, respectively, for example, as described in U.S. Patent No. 7,495,774**.**

The particular operating wavelength of the **light source 12'** is not limiting, and it should be understood that any optical wavelength that interacts with that which is being sensed in the associated **interaction region 30** may be used.

The **atmospheric measurement system 10** is a laser remote sensing instrument that senses within the volume of the **interaction region 30.** The **range 34** to the **interaction region 30,** e.g. the distance thereof from the **optical head 22,** is defined by the geometry of the associated **second laser beam 18** and the corresponding **telescope 26** as embodied in the **optical head 22.** The **range 34** within the **interaction region 30** can optionally be further resolved with associated temporal range gating, or range-resolved imaging, of the associated **light signals 35** if desired or necessary for a particular application.

The **atmospheric measurement system 10** is responsive substantially only to scattering from the **interaction region 30** where the **field of view 32** of the detecting **telescope 26** and the **second laser beam 18** overlap, and the geometry of the **optical head 22** can be adapted to locate the **interaction region 30** at substantially any distance, e.g. near or far, from the **optical head 22** provided there is sufficient backscattered **light 28** to be subsequently processed. For example, with the **optical head 22** adapted to locate the **interaction region 30** relatively far from the **optical head 22,** e.g. so as to be substantially not influenced by any turbulence proximate thereto, there would be substantially no signal from any associated **near-field region 36** relatively proximate thereto.

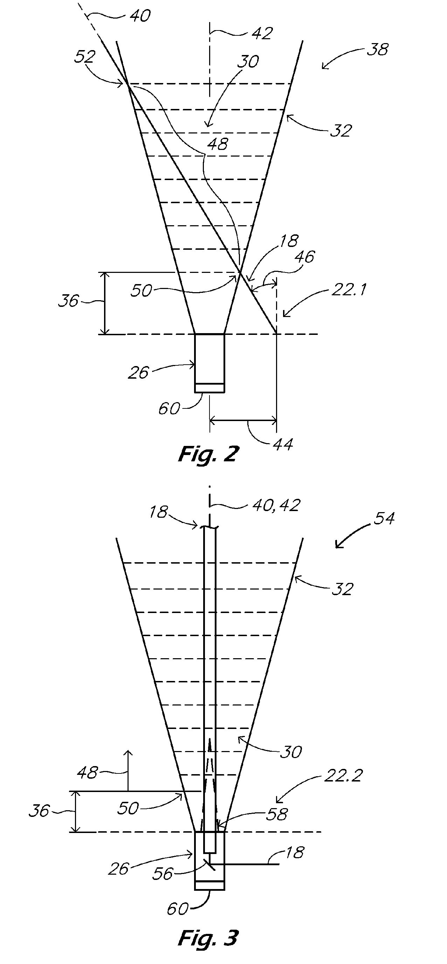

Referring to **FIGS. 1 and 2,** in accordance with a **first aspect 22.1,** each channel of the **optical head 22, 22.1** is adapted as a **biaxial system 38** wherein, for a given channel, the associated **second laser beam 18** and **telescope**

26 do not share a common axis. For example, at the **optical head 22, 22.1,** the respective **axes 40, 42** of the **second laser beam 18** and **telescope 26** are separated by an **offset distance 44,** and the **axes 40, 42** are oriented at a **relative angle 46** and directed so that the **second laser beam 18** intersects the **field of view 32** of the **telescope 26** so as to define the associated **interaction region 30.** The **length 48** of the **interaction region 30** is defined between an **entrance 50** where the **second laser beam 18** enters the **field of view 32** of the **telescope 26,** and an **exit 52** where the **second laser beam 18** exits the **field of view 32** of the **telescope 26,** wherein the **interaction region 30** is bounded by the **second laser beam 18** between the associated **entrance 50** and **exit 52.**

Referring to **FIG. 3,** in accordance with a **second aspect 22.2,** the **optical head 22, 22.2** is adapted as a **coaxial system 54** wherein, for a given channel, the associated **second laser beam 18** and **telescope 26** substantially share a common **axis 40, 42.** For example, a **mirror 56** located within a portion, e.g. a central portion, of the **field of view 32** of the **telescope 26.** The **second laser beam 18** is reflected off the **mirror 56,** and the **mirror 56** is oriented so as to substantially align the **axis 40** of the **second laser beam 18** reflected from the **mirror 56,** with the **axis 42** of the **telescope 26.** The **mirror 56** partially obstructs the **field of view 32** of the **telescope 26,** which provides for a **near-field region 36** in the **shadow 58** of the **mirror 56** within which the **second laser beam 18** is not visible to the **telescope 26** and therefore outside the **interaction region 30,** thereby providing for substantially preventing any signal return from a prospective turbulent region proximate to the **optical head 22, 22.2** for an **atmospheric measurement system 10, 10i** operatively associated therewith. The **interaction region 30** extends from an **entrance 50** where the size of **second laser beam 18** exceeds the size of the **shadow 58** in the **near-field region 36,** and therebeyond the **interaction region 30** remains within the **field of view 32** of the **telescope 26.** The **interaction region 30** can then be tuned by adjusting the size of the central obstruction, the **field of view 32** of the **telescope 26,** the divergence angle of the **second laser beam 18,** and by translating a **final light-collecting element 60** of the **telescope 26** along the **axis 42** thereof so as to effectively change the **field of view 32** of the **telescope 26** and the focal plane for the **final light-collecting element 60.**

The **telescope 26** comprises a **lens system 62,** and the **light signal 35** collected thereby is collected by the **final light-collecting element 60** thereof into a **fiber optic 64** that directs the returned photons into associated portions of a **Fabry-Pérot interferometer 66** for subsequent detection by an associated **detection system 68.** The **reference beam 16** from the **laser 12** and **beam splitter optic 20** is directed to a separate portion of the **Fabry-Perot interferometer 66** and an associated **detection system 68** for simultaneous processing thereby.

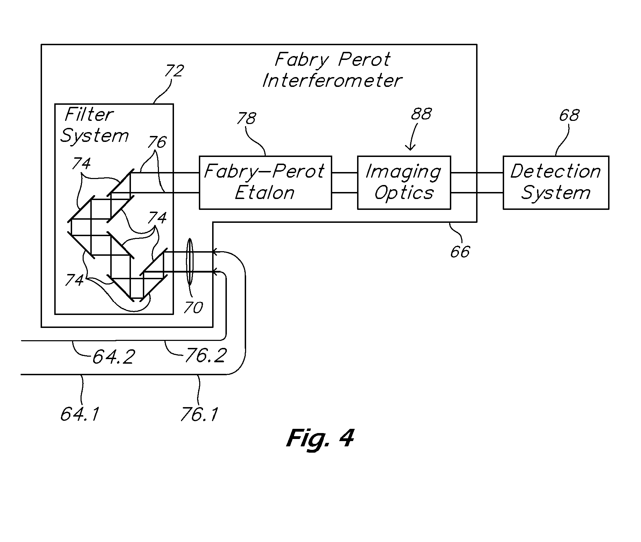

Referring to **FIGS. 1 and 4,** the **reference beam 16** and the **light signal 35** from the **lens system 62** are each collimated by a **collimating lens 70** of the **Fabry-Pérot interferometer 66** and then filtered by a **filter system 72** which, for example, as illustrated in **FIG. 4,** incorporates eight **bandpass filter mirrors 74** having associated filter pass bands centered about the operating frequency of the **laser 12** -- e.g. about **266** nm for the above-described embodiment -- which provides for filtering out associated background light. The **filter system 72** exhibits high out-of-band rejection, as well as low in-band attenuation, and the bandwidth of the **filter system 72** is sufficiently narrow so as to substantially filter or remove components of solar radiation or stray light in the collected **light signals 35,** yet sufficiently broad so as to be substantially larger than the bandwidth of the thermally-broadened spectrum in combination with the largest expected associated Doppler shift. For example, in one embodiment, the **filter system 72** is adapted so as to provide for maximum filtering of light frequencies that are outside the frequency band of interest, e.g. greater than about **2** nanometers above or below the nominal center frequency of the **first laser beam 14.**

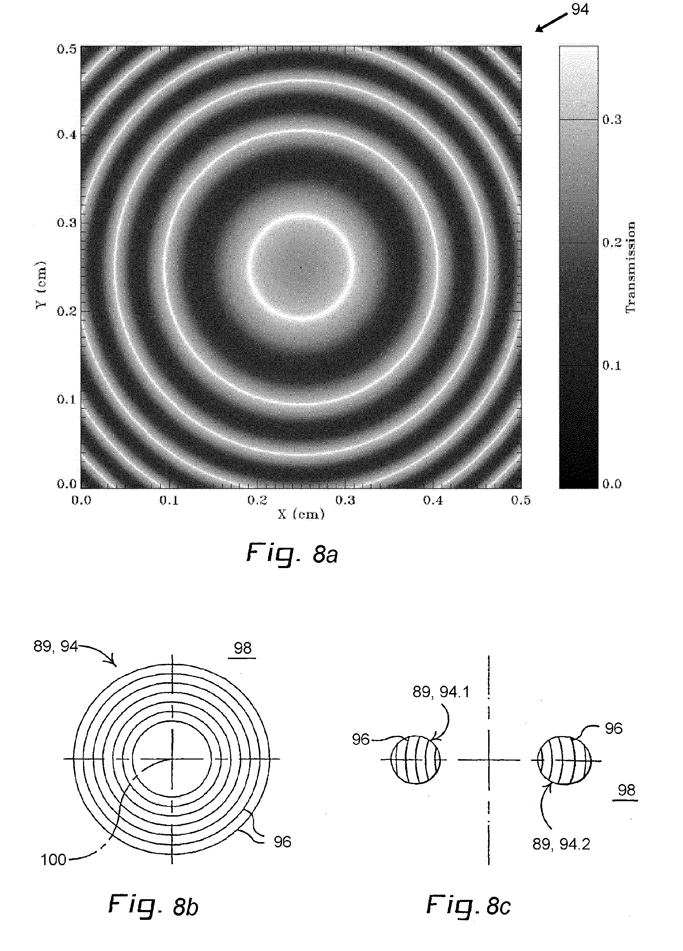

Referring to **FIGS. 1, 5a, 5b, 8a, 8b and 8c** the **light signals 76** from the **filter system 72** are input to a **Fabry-Pérot etalon 78** of the **Fabry-Pérot interferometer 66,** which provides for generating a **fringe pattern 80** responsive to the optical frequency of the associated **light signals 76,** which optical frequency can exhibit a Doppler shift responsive to a relative velocity of the **atmosphere 24** within the **interaction region 30** from which the associated **light 28** is backscattered. The **Fabry-Pérot etalon 78** of the **Fabry-Pérot interferometer 66** comprises **first 82 and second 84 partially-reflective surfaces** which are parallel to one another and separated by a fixed **gap 86,** and located between the **collimating lens 70** and associated **imaging optics 88. Light 90** at a **focal plane 92** of the **collimating lens 70** is substantially collimated thereby, and the angles at which the **light 90** is passed through the **Fabry-Pérot etalon 78** is dependent upon the optical frequency of the **light 90,** which, referring to **FIGS. 8a and 8b,** becomes imaged as a **circular fringe pattern 94** -- also known as *Haidinger fringes* -- comprising a plurality of concentric **circular fringes 96** in the **focal plane 98** of the **imaging optics 88.** Referring to **FIGS. 8a and 8b,** for a fully-illuminated **Fabry-Pérot etalon 78,** the resulting **circular fringe pattern 94** is in the form of closed concentric circles centered about the **optic axis 100** of the **imaging optics 88.**

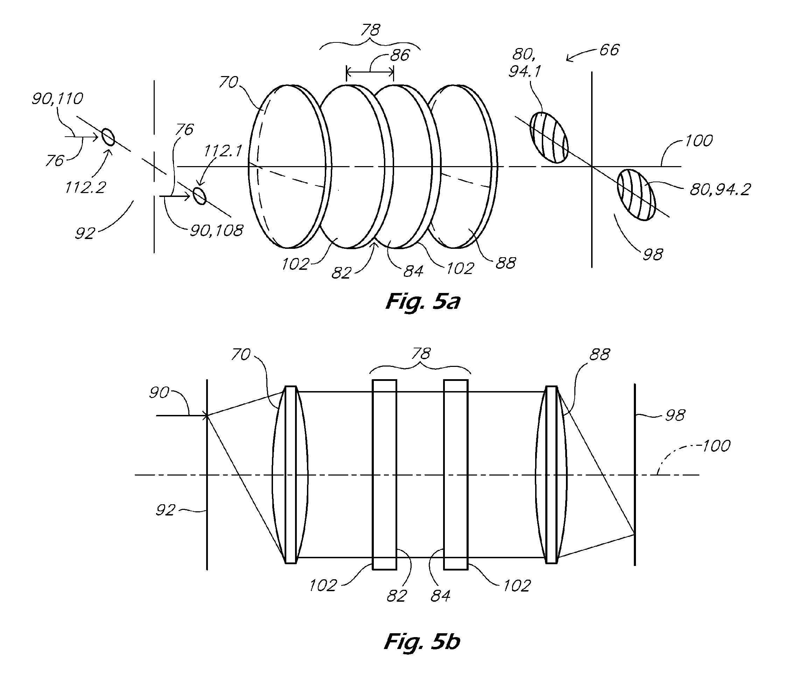

For example, in the embodiment illustrated in **FIGS. 1, 5a and 5b,** the **Fabry-Pérot etalon 78** comprises a pair of **planar optical windows 102** -- for example, constructed of either optical glass or fused quartz -- aligned parallel to and facing one another and spaced apart from one another by a **gap 86,** wherein, for example, the **first 82 and second 84 partially-reflective surfaces** are on separate facing surfaces of the **planar optical windows 102,** e.g. partially-silvered surfaces or other partially-reflective surfaces. Alternatively, the **first 82 and second 84 partially-reflective**

**surfaces** could be on the outside opposing faces of the **planar optical windows 102,** or one of the **first 82 and second 84 partially-reflective surfaces** could be on a inner facing surface of one of the **planar optical windows 102,** and the other of the **first 82 and second 84 partially-reflective surfaces** could be on a outer facing surface of the other of the **planar optical windows 102.** In one embodiment, the **gap 86** is substantially fixed, whereas in other embodiments, the **gap 86** is moveable, e.g. adjustable, so as to provide for a tunable **Fabry-Perot etalon 78.**

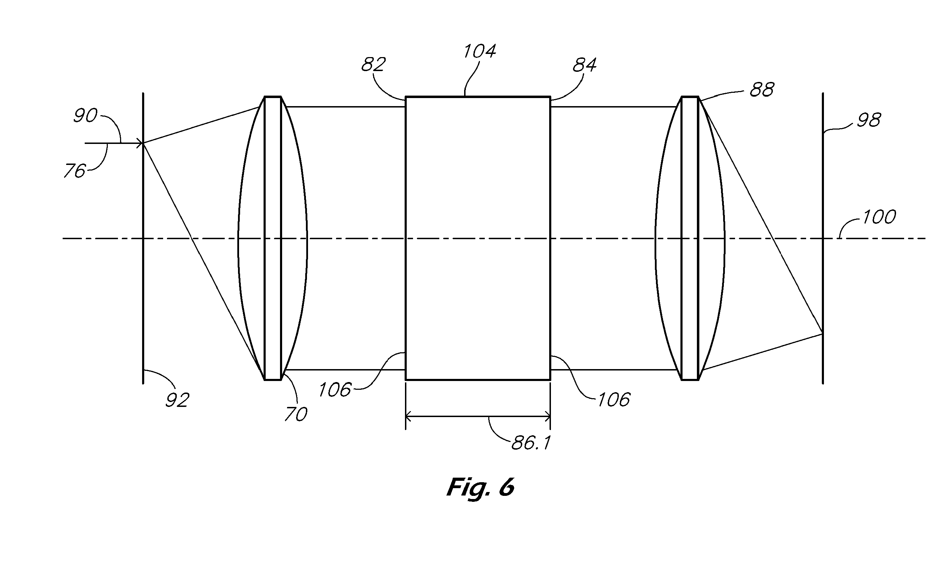

Referring to **FIG. 6,** alternatively, the **Fabry-Pérot etalon 78** could comprise a **solid optical element 104** -- for example, constructed of either optical glass or fused quartz -- with **planar parallel faces 106** comprising **first 82 and second 84 partially-reflective surfaces** separated by a **gap 86.1** constituting the length of the **solid optical element 104.**

Referring to FIGS. 5a and 5b, the **atmospheric measurement system 10** provides for an efficient use of the **Fabry- Pérot etalon 78** by simultaneously processing a plurality of different channels of **light 90** with a single, common **Fabry-Pérot etalon 78.** In one embodiment, a single **Fabry-Pérot etalon 78** is used with two channels of light 90, i.e. a **reference channel 108** from the **reference beam 16,** and one or more **backscatter signal channels 110** from the associated one or more **lens system 62** associated with each of the one or more **telescopes 26** having an associated line of sight. Referring also to **FIGS. 1 and 4,** respective **fiber optics 64.1 and 64.2** receive light from the **reference beam 16** and from each **lens systems 62,** respectively, and illuminate corresponding portions of the **Fabry-Pérot etalon 78** from respective **off-axis locations 112.1 and 112.2** in the **focal plane 92** of the **collimating lens 70,** producing associated images of partial **circular fringe patterns 94.1 and 94.2,** for example, as illustrated in **FIGS. 5a and 8c.**

The off-axis illumination of the **Fabry-Pérot etalon 78** provides for increasing the geometric etendue of the **atmospheric measurement system 10** than would result otherwise, wherein **geometric etendue G** characterizes the ability of an optical system to accept light. **Geometric etendue G** is defined as a product of the **area A** of the emitting source and the **solid angle** $\Omega$ into which the light therefrom propagates, i.e. **(G = A * $\Omega$). Geometric etendue G** is a constant of the optical system, and is determined by the least optimized portion thereof. For a fixed divergence and aperture size of the associated **fiber optic 64,** for a given value of **geometric etendue G,** the **area A** of the emitting source (i.e. that of the **fiber optic 64)** -- and the associated diameter of the optical system -- may be reduced by increasing the **solid angle** $\Omega$, i.e. the divergence of the associated optical system, so as to provide for reducing the size of the associated optical system without sacrificing performance. Alternatively, for a given **area A** and associated diameter of the optical system, the **geometric etendue G** of the optical system may be increased by increasing the **solid angle** $\Omega$. For a **Fabry-Pérot interferometer 66,** increasing the angular divergence, i.e. **solid angle** $\Omega$, of the associated optical system provides for a greater fraction and/or number of **circular fringes 96.** The **atmospheric measurement system 10** simultaneously processes a **reference channel 108** and one or more **backscatter signal channels 110** using a common **Fabry-Pérot etalon 78,** each **channel 108, 110** occupying a separate portion of the **Fabry- Pérot etalon 78,** the collection of **channels 108, 110** thereby necessitating a larger-diameter **Fabry-Pérot etalon 78** than would be required otherwise if only a single **channel 108** or **110** were to be processed thereby. Accordingly associated respective **off-axis locations 112.1 and 112.2** of the respective **fiber optics 64.1, 64.2, 64.3 and 64.4** provides for both simultaneously accommodating the plurality of **fiber optics 64.1 and 64.2** input to the common **Fabry-Pérot etalon 78,** and provides for increasing the associated angular divergence through the optical system which provides for either relatively increasing the **geometric etendue G** and associated light gathering capability of the of the associated optical system for a given-sized optical system, or for relatively decreasing the size (i.e. diameter) of the optical system for a given **geometric etendue G** thereof.

Signals from the **backscatter signal channel 110** for each of the associated **interaction regions 30** are substantially simultaneously processed together with a signal from the **reference channel 108** so as to provide for calibrating, and maintaining the calibration of, the **atmospheric measurement system 10,** and so as to provide for determining the associated air data products such as the speed, temperature and density of the **atmosphere 24.** This provides for an inherent self-calibration of the associated measurements or quantities derived therefrom. If wavelength drift of the **first laser beam 14** is not otherwise accounted for in the data, then errors can arise when making a measurement of the Doppler shift and resulting wavelength shift of the **backscatter signal channel 110.** The **atmospheric measurement system 10** provides for automatically compensating for wavelength drift of the **first laser beam 14** from the data because each measurement from a **backscatter signal channel 110** is corrected using a corresponding measurement from the **reference channel 108** associated with the **reference beam 16.**

The **light signal 35** collected by the **telescope 26,** and the **reference beam 16,** are transmitted to the **Fabry-Pérot interferometer 66** by the associated **fiber optics 64.1 and 64.2** and are each simultaneously processed by a separate portion of a **Fabry-Pérot interferometer 66,** wherein the **light signals 35** and **reference beam 16** passing through the **Fabry-Pérot interferometer 66.** The **light signal 35** and **reference beam 16** are each collimated by a **collimating lens 70,** then filtered by a **filter system 72** as described hereinabove, and then processed by the associated **Fabry-Pérot etalon 78,** the output of which is imaged by associated **imaging optics 88** as associated **circular fringe patterns 94.1 and 94.2** onto a corresponding **digital micromirror device (DMD) 114.1, 114.2,** each under control of a **data processor 116** incorporating or in communication with an associated **memory 118,** which provide for selectively reflecting portions of the associated **circular fringe patterns 94.1 and 94.2** onto corresponding pair of associated **photodetectors 120.1$^A$, 120.1$^B$, 120.2$^A$, 120.2$^B$**. The signals from the **photodetectors 120.$^A$, 120.$^B$, 120.2$^A$, 120.2$^B$** are then processed by the **data processor 116,** which provides for the **data processor 116** to determine the associated air measurements therefrom. The **Fabry-Pérot interferometer 66** and the associated **detection system 68** may be mounted within a common housing.

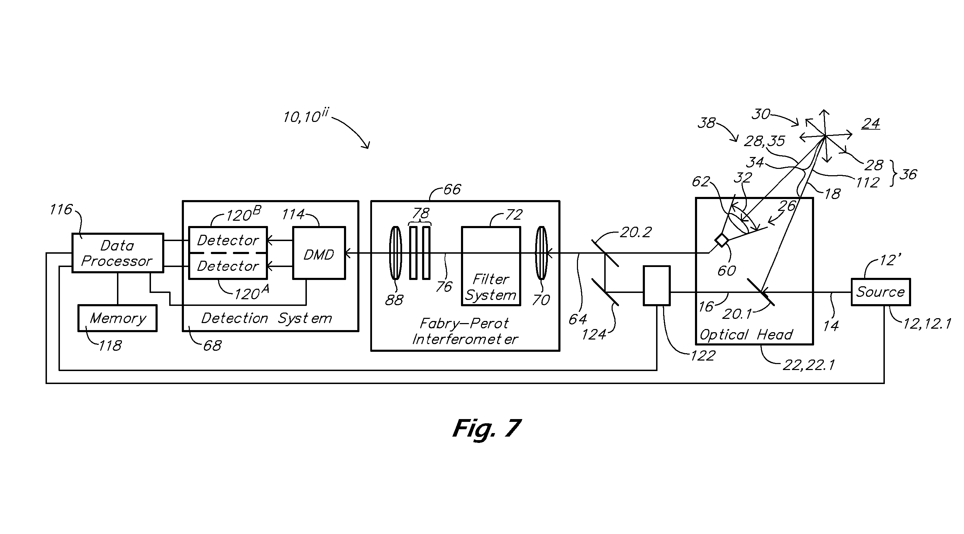

Referring to **FIG. 7,** a second aspect of an **atmospheric measurement system 10, 10"** comprises a **laser 12** that generates a **first laser beam 14** which is split into a **reference beam 16** and one or more **second laser beams 18** by a **first beam splitter optic 20.1** in an **optical head 22.** The **optical head 22** provides for directing the one or more **second laser beams 18** into an **atmosphere 24** within sight thereof, and further incorporates a corresponding one or more **telescopes 26,** each associated with one of the one or more **second laser beams 18,** wherein each of the **telescopes 26** provides for receiving **light 28** that is backscattered by the **atmosphere 24** from a corresponding **interaction region 30** therein defined by the intersection of the associated **second laser beam 18** with an associated **field of view 32** of the corresponding **telescope 26.** Each **second laser beam 18** and its associated **telescope 26** define a channel, and neither the number of channels, nor the geometry of the channels in relation to each other, is limiting.

As with the first aspect, the **range 34** to the **interaction region 30,** e.g. the distance thereof from the **optical head 22,** is defined by the geometry of the associated **second laser beam 18** and the corresponding **telescope 26** as embodied in the **optical head 22,** and the **range 34** within the **interaction region 30** can optionally be further resolved with associated temporal range gating, or range-resolved imaging, of the associated **light signals 35** if desired or necessary for a particular application. Furthermore, the associated **optical head 22** may be adapted either in accordance with the above-described **first 22.1 or second 22.2 aspects** thereof.

The **atmospheric measurement system 10, 10"** is responsive substantially only to scattering from the **interaction region 30** where the **field of view 32** of the detecting **telescope 26** and the **second laser beam 18** overlap, and the geometry of the **optical head 22** can be adapted to locate the **interaction region 30** at substantially any distance, e.g. near or far, from the **optical head 22** provided there is sufficient backscattered **light 28** to be subsequently processed.

The **telescope 26** comprises a **lens system 62,** and the **light signal 35** collected thereby is collected by the **final light-collecting element 60** thereof into a **fiber optic 64** that directs the returned photons of the associated **backscatter signal channel 110** through a **second beam splitter optic 20.2** into a **Fabry-Pérot interferometer 66,** or an associated portion thereof, for subsequent detection by an associated **detection system 68.**

For at least one **backscatter signal channel 110,** the **reference beam 16** from the **laser 12** and **beam splitter optic 20** is directed through a **shutter 122** and reflected off a **first surface mirror 124** and then off the **second beam splitter optic 20.2** and into the **Fabry-Pérot interferometer 66,** or the same portion thereof as the corresponding **backscatter signal channel 110,** for detection by the associated **detection system 68.** The **shutter 122** is controlled by the **data processor 116,** which also control the **laser 12** or a shutter associated therewith, so as to provide for time multiplexing the **reference 108 and backscatter signal 110 channels** through the **Fabry-Pérot interferometer 66** and associated **detection system 68,** for at least one **backscatter signal channel 110.** Accordingly, in operation, the **laser 12,** or an associated shutter, is periodically activated so as to cause the associated **first laser beam 14** to be emitted thereby, a portion of which is reflected as at least one **second laser beam 18** into the **atmosphere 24** by the **first beam splitter optic 20.1,** a remaining portion of which forms the associated **reference beam 16.** The **shutter 122** is activated by the **data processor 116** in synchronism with the **laser 12,** or shutter associated therewith, so as to provide for immediately directing the **reference beam 16** into the **Fabry-Pérot interferometer 66** and associated **detection system 68.** The **shutter 122** is then later deactivated by the **data processor 116** before the **light signal 35** of the **backscatter signal channel 110** reaches the **second beam splitter optic 20.2.** For example, for a **interaction region 30** about **300** meters from the **optical head 22,** the **shutter 122** would be gated on for about one microsecond, during which time the **detection system 68** would provide for detecting the **reference channel 108,** after which, the **detection system 68** would provide for detecting the corresponding **backscatter signal channel 110.**

Accordingly, referring to **FIGS. 8a and 8b,** for a single **backscatter signal channel 110,** the second aspect of the **atmospheric measurement system 10, 10"** provides for illuminating the entire **Fabry-Pérot etalon 78,** and for generating and using a complete resulting **circular fringe pattern 94.** Alternatively, referring to **FIG. 8c,** in accordance with the first aspect of the **atmospheric measurement system 10, 10$^i$,** or in accordance with the second aspect of the **atmospheric measurement system 10, 10$^{ii}$** with a plurality of **backscatter signal channels 110,** a plurality of different portions of the **Fabry-Pérot etalon 78** are illuminated with different **reference 108 and/or backscatter signal 110 channels,** resulting in a corresponding plurality of associated **circular fringe patterns 94.1 and 94.2.**

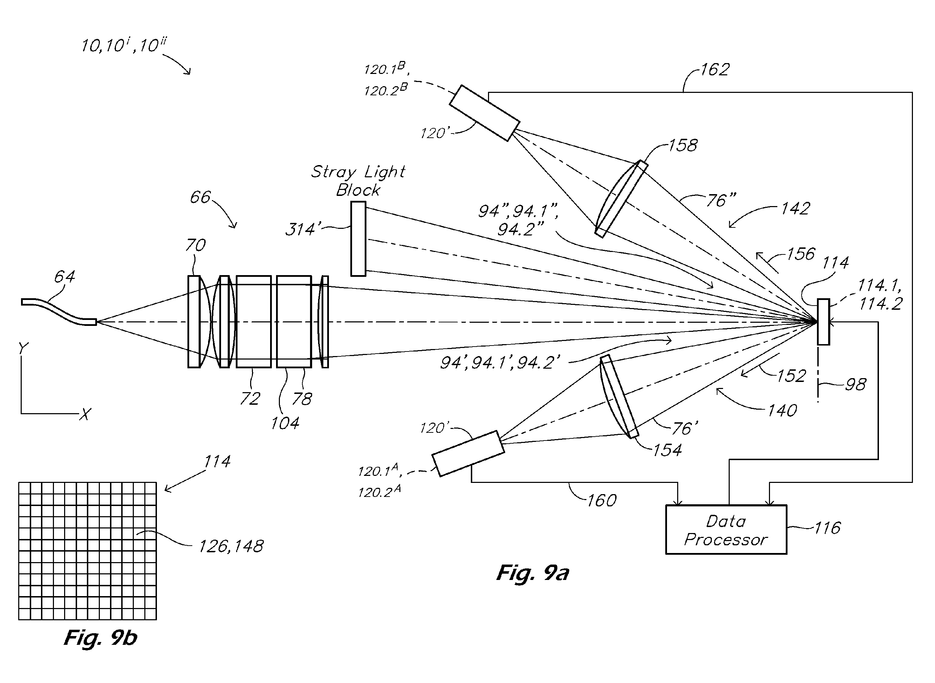

Referring to **FIG. 9a,** for each channel of information, i.e. for either the **reference channel 108** or the **backscatter signal channel 110,** the associated **circular fringe pattern 94.1** and **94.2** is imaged onto the associated **digital micromirror device (DMD) 114.1, 114.2,** or onto a corresponding portion of a common **digital micromirror device (DMD) 114,** with the **digital micromirror device (DMD) 114.1, 114.2, 114** being located in the **focal plane 98** of the **imaging optics 88** of the **Fabry-Pérot interferometer 66.** For example, referring to **FIG. 9b,** the **digital micromirror device (DMD) 114.1, 114.2, 114** comprises an array of **micromirrors 126,** for example, a Cartesian array of N rows and M columns of **micromirror 126** elements or pixels, each of which is individually addressable and controllable to one of at least two pixel mirror rotational states.

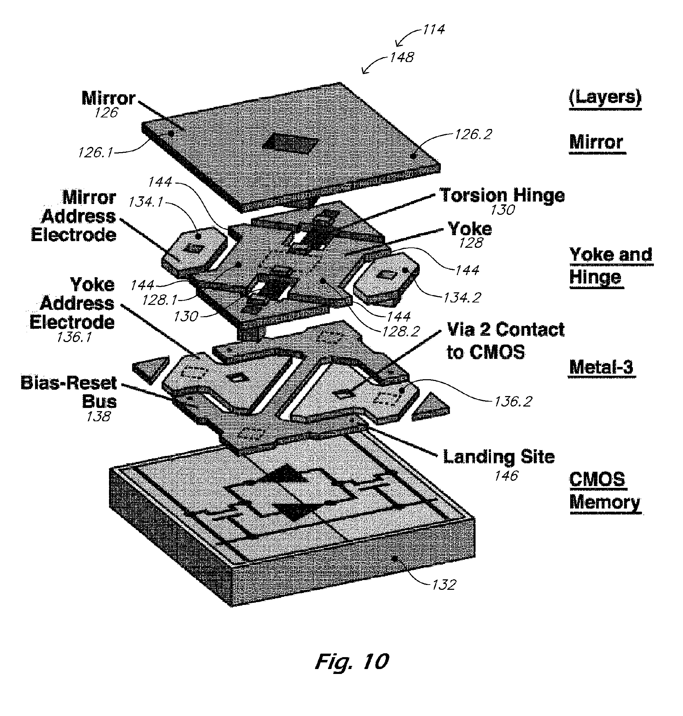

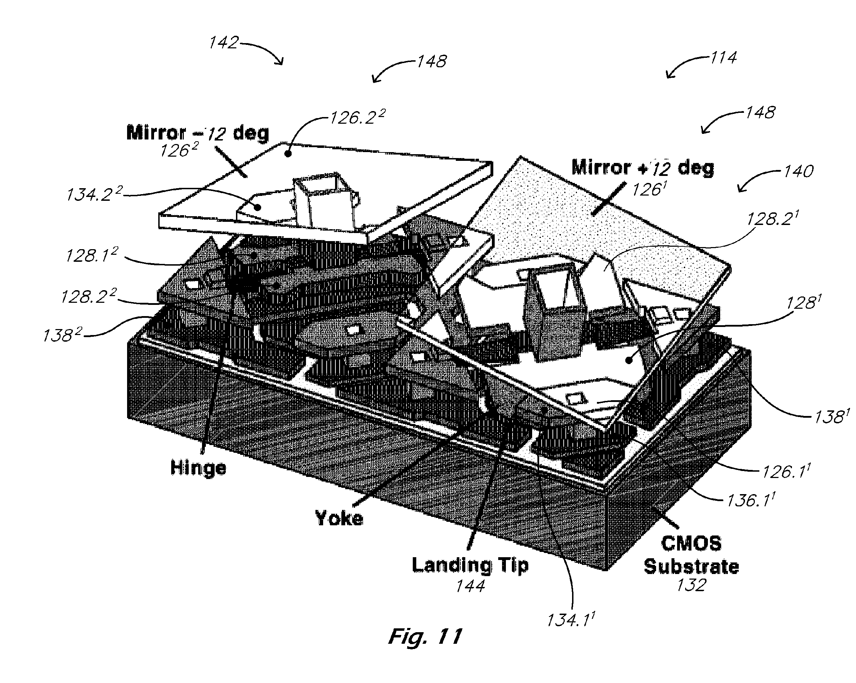

For example, referring also to **FIGS. 10 and 11,** in accordance with the teachings of U.S. Patent No. 5,535,047, and with the publication entitled "The Digital Micromirror Device: A Historic Mechanical Engineering Landmark", published by Texas Instruments Inc. and the American Society of Mechanical Engineers on **1 May 2008** with **20** pages, one embodiment of the **digital micromirror device (DMD) 114.1, 114.2, 114** comprises an array of **16** micron square movable **micromirrors 126** on **17** micron centers, each **micromirror 126** of which is mechanically supported by a **yoke 128** suspended from a pair of **compliant torsion hinges or flexures 130** operatively coupled to a common **CMOS substrate 132.** Each **micromirror 126** is rotatable into one of two stable pixel mirror rotational states responsive to electrostatic attraction between a **corner portion 126.1, 126.2** of the **micromirror 126** and one of two associated elevated **mirror address electrodes 134.1, 134.2,** and responsive to electrostatic attraction between a corresponding on of two **opposed portions 128.1, 128.2** of the **yoke 128** and one of two associated **yoke address electrodes 136.1, 136.2.** The **micromirror 126** is rotated to one of the two stable pixel mirror rotational states by applying a first voltage to the **micromirror 126** and **yoke 128** via a **bias-reset bus 138** in electrical connection therewith, and applying a second voltage to one of the **mirror address electrodes 134.1, 134.2,** and a corresponding one of the **yoke address electrodes 136.1, 136.2,** wherein **first corresponding mirror 134.1 and yoke 136.1 address electrodes** are electrically connected with one another, **second corresponding mirror 134.2 and yoke 136.2 address electrodes** are electrically connected with one another, and the first and second voltages are set so as to provide for attraction between the **first or second mirror 134.1, 134.2 and yoke 136.1, 136.2 address electrodes** and corresponding **portions of the micromirror 126.1, 126.2 and yoke 128.1, 128.2.**

For example, referring to **FIG. 11,** with the first voltage applied to a first **micromirror $126^1$** and associated **yoke $128^1$** via the associated **bias-reset bus $138^1$,** a second voltage applied to the associated **first mirror address electrode $134.1^1$** and to the associate **first yoke address electrode $136.1^1$,** causes the **first corner portion $126.1^1$** of the **first micromirror $126^1$** to be electrostatically attracted to the associated **first mirror address electrode $134.1^1$,** and causes the **first opposed portion $128.1^1$** of the associated **yoke $128^1$** to be electrostatically attracted to the associated **first yoke address electrode $136.1^1$,** thereby causing the **first micromirror $126^1$** to rotate to a **first pixel mirror rotational state 140,** which for example, is illustrated in **FIG. 11** as **+12** degrees for a particular commercial embodiment, wherein the first and second voltages are adapted to provide for an electrostatically attractive force therebetween. Similarly, with the first voltage applied to a **second micromirror $126^2$** and associated **yoke $128^2$** via the associated **bias-reset bus $138^2$,** a third voltage applied to the associated **second mirror address electrode $134.2^2$** and to the associate **second yoke address electrode $136.2^2$,** causes the **second corner portion $126.2^2$** of the **second micromirror $126^2$** to be electrostatically attracted to the associated **second mirror address electrode $134.2^2$,** and causes the **second opposed portion $128.2^2$** of the associated **yoke $128^2$** to be electrostatically attracted to the associated **second yoke address electrode $136.2^2$,** thereby causing the **second micromirror $126^2$** to rotate to a **second pixel mirror rotational state 142,** which for example, is illustrated in **FIG. 11** as **-12** degrees for the particular commercial embodiment, wherein the first and third voltages are adapted to provide for an electrostatically attractive force therebetween. The **tips 144** of the **yoke 128** contact corresponding **landing sites 146** on the associated **bias-reset bus 138,** and the **landing sites 146** may be passivated so as to prevent or reduce stiction, so as to provide for reducing the voltage needed to either reset the **micromirror 126** to a flat state, or to rotate the **micromirror 126** to the other pixel mirror rotational state. Another commercial embodiment, for example, provides for mirror rotational states of +/- **10** degrees. In the rest state, the **micromirror 126** is flat, but this state is not addressable for individual pixels in one set of commercial embodiments.

Commercial **digital micromirror devices (DMD) 114** comprise arrays of **micromirrors 126** ranging from an array of **640 x 480 micromirrors 126** containing approximately a half million **micromirrors 126** in total, to an array of **2048 x 1080 micromirrors 126** containing over two million **micromirrors 126** in total. Each **micromirror 126** of the array represents one **pixel 148** of a **pattern 150** of associated pixel mirror rotational states, wherein each pixel is independently controllable or programmable responsive to a signal from the **data processor 116.**

Referring again to **FIG. 9a,** the **digital micromirror devices (DMD) 114** is located in the **focal plane 98** of the **imaging optics 88** and in relation to a corresponding pair of **first $120^A$ and second $120^B$ photodetectors,** for example **photomultiplier detectors 120', $120^{A'}$, $120^{B'}$,** so that **micromirrors 126** of the associated array of **micromirrors 126** of the **digital micromirror device (DMD) 114** in the **first pixel mirror rotational state 140** cause **first portions 76'** of the **light signal 76** of the resulting **circular fringe pattern 94** from the **Fabry-Pérot interferometer 66** impinging thereupon to be reflected in a **first direction 152** to an associated **first objective lens 154,** and to be directed thereby to the a **first photomultiplier detector $120^{A'}$.** Similarly, **micromirrors 126** of the associated array of **micromirrors 126** of the **digital micromirror devices (DMD) 114** in the **second pixel mirror rotational state 142** cause **second portions 76"** of the **light signal 76** of the resulting **circular fringe pattern 94** from the **Fabry-Pérot interferometer 66** impinging thereupon to be reflected in a **second direction 156** to an associated **second objective lens 158,** and to be directed thereby to the a **second photomultiplier detector $120^{B'}$.** The **micromirrors 126** of the **digital micromirror device (DMD) 114** are relatively efficient, with overall efficiency approaching **90%** in one set of embodiments. Accordingly, the **digital micromirror device (DMD) 114** provides for digitally isolating light impinging thereupon into two disjoint sets. More particularly, the **digital micromirror device (DMD) 114** is used to interrogate the **circular fringe pattern(s) 94, 94.1, 94.2** created by the **Fabry-Pérot interferometer 66** and in cooperation with the associated **first 120$^{A'}$ and second 120$^{B'}$ photomultiplier detectors** thereby provide for generating one or more pairs of associated **complementary signals 160, 162** responsive to the number of photons in the associated two disjoint sets of light reflected by the **digital micromirror device (DMD) 114** resulting from a particular **pattern 150** of pixel mirror rotational states programmed into the associated array of **micromirrors 126** of the **digital micromirror device (DMD) 114** for a particular set of measurements, wherein the associated **first 120$^{A'}$ and second 120$^{B'}$ photomultiplier detectors** provide for counting the corresponding number of photons associated with each of the disjoint sets of light reflected by the **digital micromirror device (DMD) 114.**

The **atmospheric measurement system 10** provides for directly detecting laser energy scattered off of either molecules of the atmosphere, aerosols in the atmosphere, or a combination of the two, provides for directly measuring the associated velocity and direction, density, and temperature of the atmosphere, and provides for deriving other measurements therefrom, for example, a set of air data products. For example, relatively short wavelength laser energy is scattered by molecules of the atmosphere in accordance with Rayleigh scattering. Laser energy can also be scattered by aerosols in the atmosphere in accordance with Mie scattering. Rayleigh scattering generally refers to the scattering of light by either molecules or particles having a size less than about **1/10$^{th}$** the wavelength of the light, whereas Mie scattering generally refers to scattering of light by particles greater than **1/10$^{th}$** the wavelength of the light. Being responsive to Rayleigh scattering, the **atmospheric measurement system 10** is therefore responsive to the properties -- e.g. velocity, density and temperature -- of those molecules in the atmosphere giving rise to the associated scattering of the light detected by the **atmospheric measurement system 10.** Accordingly, the **atmospheric measurement system 10** provides for operation in clean air, i.e. in an atmosphere with no more than a negligible amount of aerosols, depending substantially only upon molecular backscatter.

The **light signal 76, 76.2** of the associated **backscatter signal channel 110** received from the **interaction region 30** associated with the **field of view 32** of the **telescope 26** is processed by the **Fabry-Pérot interferometer 66** to generate an associated **circular fringe pattern 94, 94.2** that is then separated by the **digital micromirror device (DMD) 114, 114.2** into **disjoint portions 94', 94"; 94.2', 94.2"** that are then detected by the corresponding associated first **120$^{A'}$, 120.2$^{A'}$ and second 120$^{B'}$, 120.2$^{B'}$ photomultiplier detectors.** The **reference channel 108** is processed by the same **Fabry-Pérot interferometer 66,** either simultaneously or sequentially, to generate an associated **circular fringe pattern 94, 94.1** that is then separated by the **digital micromirror device (DMD) 114, 114.1** into **disjoint portions 94', 94"; 94.1', 94.1"** that are then detected by the corresponding associated **first 120$^{A'}$, 120.2$^{A'}$ and second 120$^{B'}$, 120.2$^{B'}$ photomultiplier detectors.** The resulting **complementary signals 160, 162** associated with the **reference channel 108** are used to provide for calibrating atmospheric measurements associated with the **backscatter signal channel 110.** Accordingly, the **atmospheric measurement system 10** uses the **Fabry-Pérot interferometer 66** to directly detect information from the scattered laser energy, wherein the **reference 108 and backscatter signal 110 channels** are each detected separately, and information from the **reference channel 108** can then be used to calibrate the associated **backscatter signal channel 110.** The detection process is responsive to an incoherent Doppler shift of the laser light backscattered by molecules and aerosols in the **atmosphere 24** responsive to Rayleigh and Mie scattering respectively.

For example, a typical **circular fringe pattern 94** is illustrated in **FIG. 8a** for an associated **light signal 76** that has been source thermally broadened by a medium comprising both aerosols and molecules. The light scattered from the molecules is spread over the shaded regions of the **circular fringe pattern 94** in **FIG. 8a,** and the light scattered from the heavy, slow moving aerosols is contained in the narrow white rings. The associated atmospheric state variables affect the **circular fringe pattern 94** in different ways. Wind induced Doppler shifts change the diameter of the rings, and the constant that determines Doppler shift is dependent upon temperature. Atmospheric (molecular) temperature affects the width of molecular rings. Aerosol density controls the intensity of the narrow white rings and molecular density increases the brightness of the shaded regions in **FIG. 8a.** Accordingly, wind velocity, density, and temperature can be determined directly from the **circular fringe pattern 94.**

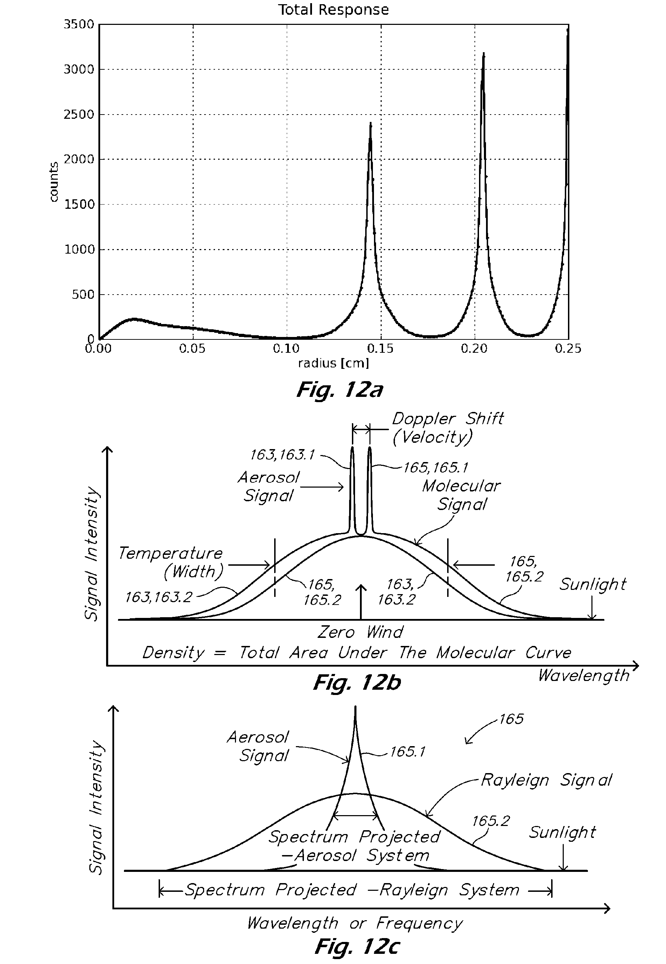

A radial plot of the intensity of the **circular fringe pattern 94** is illustrated in **FIG. 12a.** Referring to **FIG. 12b,** illustrating an expanded view of a radial cross-section of the intensity of a single **circular fringe 96** of the **circular fringe pattern 94,** a **first fringe 163** corresponds to a zero-wind, i.e. zero-velocity condition, and a **second fringe 165** corresponds to a non-zero wind condition, wherein both the **first 163 and second 165 fringes** are illustrated as exhibiting both an **aerosol signal component 163.1, 165.1** and a **molecular signal component 163.2, 165.2** respectively. The **reference channel 108** also provides for a zero wind condition, but does not contain either molecular or background components, and accordingly would exhibit only the **aerosol signal component 163.1** illustrated in **FIG. 12b.**

The spectral shape of the **light signal 76, 76.2** of a **backscatter signal channel 110** processed by the **Fabry-Pérot etalon 78,** for a single associated fringe to be modeled, has a qualitative form illustrated in **FIG. 12c,** wherein the molecular scattered light, i.e. the **molecular component 165.2,** exhibits a broadened spectral shape, while the aerosol scattered light, i.e. the **aerosol component 165.1,** produces a sharp peak which is nearly identical to the shape of the transmitted laser light. Underlying these two components is a background signal from scattered sunlight, which at the scale of **FIG. 12c** forms a relatively flat continuum. By way of comparison, the corresponding spectral shape of the light of the **reference channel 108** processed by the **Fabry-Pérot etalon 78** is substantially the same as that of the **aerosol component 165.1.**

The response of a **Fabry-Pérot interferometer 66** is well documented in the literature, for example, as described by P.B. Hays and R.G. Roble in "A Technique for Recovering Doppler Line Profiles from Fabry-Perot Interferometer Fringes of very Low Intensity", Applied Optics, 10,193-200, 1971.

The ideal intensity distribution of a the fringe pattern for a single wavelength transmitted through a **Fabry-Pérot interferometer 66** by a Lidar system without optical defects is given by

$$H_{ideal}(\varphi) = \frac{T^2}{1 + R^2 - 2R\cos(\varphi)} \tag{1.1}$$

where

$$\varphi = \frac{4\pi\mu d}{\lambda}\left(1 - 2\frac{u}{c}\right)\cos(\theta) \tag{1.2}$$

wherein $T$ is the **transmissivity,** $R$ is the reflectivity, $\mu$ is the refractive index of the **Fabry-Perot etalon 78,** $d$ is the thickness of the **gap 86, 86.1** of the **Fabry-Pérot etalon 78,** $\lambda$ is the wavelength of the source, $\theta$ is the angle of transmission through the **Fabry-Pérot etalon 78,** $c$ is the speed of light, and $u$ is the line-of-sight air velocity. Hence, the Doppler shift is $2u/c$. In the presence of a source distribution including many wavelengths and optical defects it is advantageous to use the Fourier cosine series expansion of the response. The distribution of intensity transmitted per molecular weight (of the scattering species) is given by:

$$H(\phi, m) = \frac{T^2}{1 - R^2}\left(1 + 2\sum_{n=1}^{\infty} R^n \exp(-\frac{n^2}{4}G^2(t))\prod_k D_{n,k}\cos(n\phi)\right) \tag{2.1}$$

where

$$G(t) = \frac{4\pi\mu d}{\lambda c}\sqrt{\frac{2A_0 kt}{m}} \tag{2.2}$$

where $t$ is the **atmospheric temperature,** $k$ is the **Boltzmann constant,** $A_0$ is **Avogadros number,** $m$ is the **molecular mass** of the scattering species, and the convolution effects of the optical defects are represented by associated **defect coefficients $D_{n,k}$.**

If there were no optical defects, then each of the **defect coefficients** $D_{n,k}$ would be identically equal to one. However, in a system with optical defects, these may be accounted for in various ways. For example, in accordance with a first method, the **defect coefficients $D_{n,k}$** are calibrated using a **reference beam 16** that does not interact with the **atmosphere 24.** As long as the **atmospheric measurement system 10** stays calibrated then these **defect coefficients $D_{n,k}$** may be used directly in the inversion of data to recover atmospheric state variables. As another example, in accordance with a second method, a signal from the **reference channel 108** is periodically collected together with one or more associated signals from the corresponding one or more **backscatter signal channels 110,** and the effect of the **defect coefficients** $D_{n,k}$ is computed by de-convolving the ideal signal, $H_{ideal}$, -- for example, $H_{ideal}$, as given by **equation (1.1),** -- from the recovered data using the Fourier transform of the ideal signal, $H_{ideal}$, for example, as given by **equations (11.1), (11.2) and (12)** described hereinbelow. The function $G(t)$ approximates the effect of thermal broadening of a source by a low density gas, which effects are more precisely accounted for by Rayleigh-Brillouin scattering, although that level of detail is not essential to the practice of the **atmospheric measurement system 10.**

For an **atmosphere 24** containing both aerosols and molecules, and for the **atmospheric measurement system 10** adapted to sample the entire **circular fringe pattern 94,** the associated total response is given by:

$$I(\varphi) = A\,H(\varphi, m_A) + M\,H(\varphi, m_M) + \frac{T^2}{1-R^2}\,B \tag{3}$$

where $I$ is the total number of photons reaching the **photodetector 120, A** is the number of photons that have been scattered by aerosols, $M$ is the number of photons that have been scattered by molecules, $B$ is the number of background photons transmitted to the **atmospheric measurement system 10** by the ambient **atmosphere 24,** $m_A$ is the molecular mass of an aerosol particle (for example, a very large number on the order of **1.0e5),** and $m_M$ is the molecular mass of air (about **28.92).** Given this model, the sensitivity of the system to the atmospheric variables $A, M, u, t$ and $B$ is respectively given by respectively taking partial derivatives of **equation (3)** with respect to each respective variable, as follows:

$$\frac{\partial I}{\partial A} = H(\varphi, m_A) \tag{4.1}$$

$$\frac{\partial I}{\partial M} = H(\varphi, m_M) \tag{4.2}$$

$$\frac{\partial I}{\partial u} = \left( A\frac{\partial}{\partial \varphi} H(\varphi, m_A) + M\frac{\partial}{\partial \varphi} H(\varphi, m_M) \right)\frac{\partial \varphi}{\partial u} \tag{4.3}$$

$$\frac{\partial I}{\partial t} \approx M\frac{\partial}{\partial t} H(\varphi, m_M),\ \text{and} \tag{4.4}$$

$$\frac{\partial I}{\partial B} = \frac{T^2}{1-R^2} \tag{4.5}$$

where

$$\frac{\partial \varphi}{\partial u} = -2\frac{4\pi\mu d}{\lambda c}\cos(\theta). \tag{4.6}$$

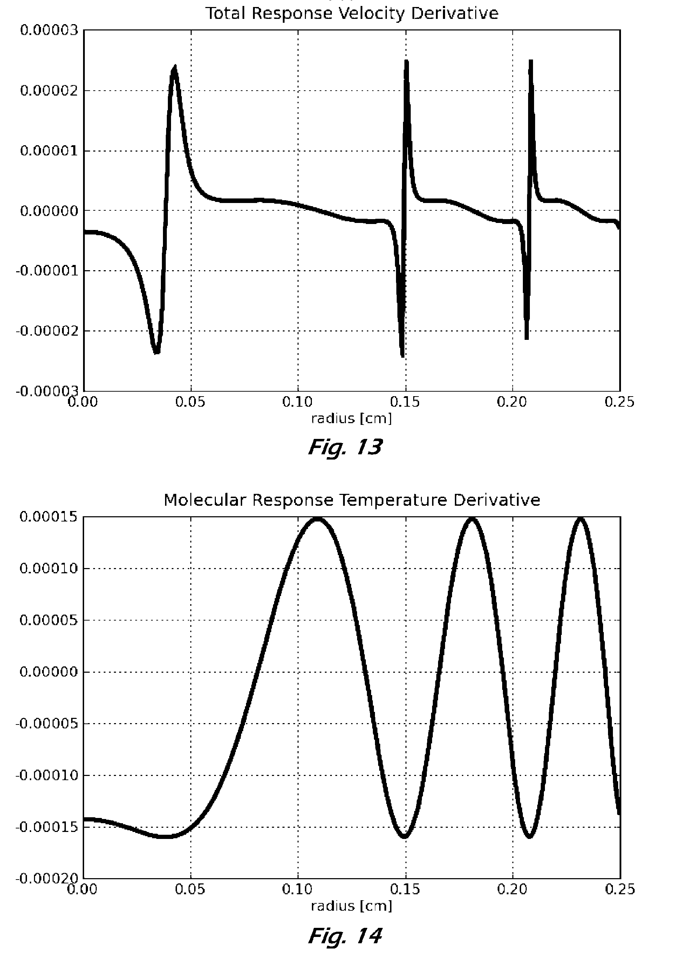

For example, **FIG. 12a** illustrates **total fringe response** $I$ from **equation (3)** as a function of radius through the **circular fringe pattern 94,** and **FIGS. 13 and 14** respective illustrate the corresponding partial derivatives thereof with respect to **velocity $u$** and **temperature** $t$, respectively, as given by **equations (4.3) and (4.4),** respectively.

The separate influence of molecules and aerosols is evident in the partial derivative of the **total fringe response** $I$ with respect to **velocity** $u$ illustrated in **FIG. 13,** wherein the **aerosol contributions 164** are relatively narrow, with relatively sharp dipole-like features in the middle of each associated pattern; and the **molecular contributions 166** are the relatively wide regions outside of the narrow **aerosol contributions 164.** Variations in the **aerosol contributions 164** cause the **centers 168** thereof to expand and contract as the density of aerosols changes, as illustrated in **FIG. 12b.** The temperature derivative illustrated in **FIG. 14** is not affected by aerosol density, but an unknown variation in aerosol content will confuse the determination of temperature. Accordingly, the mutual influences of **temperature** $t$, **velocity** $u$, **aerosol counts** $A$, **molecular counts** $M$, and **background counts** $B$ upon one another can be accounted for by simultaneously or contemporaneously measuring or determining all of the variables that exhibit mutual dependencies upon one another.

Generally, the **atmospheric measurement system 10** provides for sampling, collecting and integrating separate portions, for example, **disjoint portions 94', 94",** of the **circular fringe pattern 94,** and then using the resulting associated signals, for example **complementary signals 160, 162,** for each of a set of different **disjoint portions 94', 94",** to determine the values of the variables or parameters characterizing the associated **circular fringe pattern 94.** The **circular fringe pattern 94** is sampled by the **digital micromirror device (DMD) 114,** with the pixel mirror rotational states of the associated **micromirrors 126** controlled according to a particular **pattern 150,** so that the **micromirrors 126** in the first pixel mirror rotational state provide for reflecting light from a **first portion 94'** of the **circular fringe pattern**

**94** to the **first objective lens 154,** which focuses the light onto the **first photomultiplier detector 120$^{A'}$** that provides for integrating the light from the **first portion 94'** of the **circular fringe pattern 94** so as to generate a **first signal 160;** and so that the **micromirrors 126** in the second pixel mirror rotational state provide for simultaneously reflecting light from a **second portion 94"** of the **circular fringe pattern 94** to the **second objective lens 158,** which focuses the light onto the **second photomultiplier detector 120$^{B'}$** that provides for integrating the light from the **second portion 94"** of the **circular fringe pattern 94** so as to generate a **second signal 162.** Accordingly, for each **pattern 150** of pixel mirror rotational states of the **micromirrors 126,** the resulting **first 94' and second 94" portions** of the **circular fringe pattern 94** sampled thereby are **disjoint portions 94', 94"** and the resulting **first 160 and second 162 signals** are **complementary signals 160, 162** associated with a given **circular fringe pattern 94.** This process is repeated for each different set of *N* different sets of **disjoint portions 94', 94"** so as to provide for generating *N* corresponding sets of **complementary signals 160, 162,** from which up to *N* different variables or parameters can be characterized.

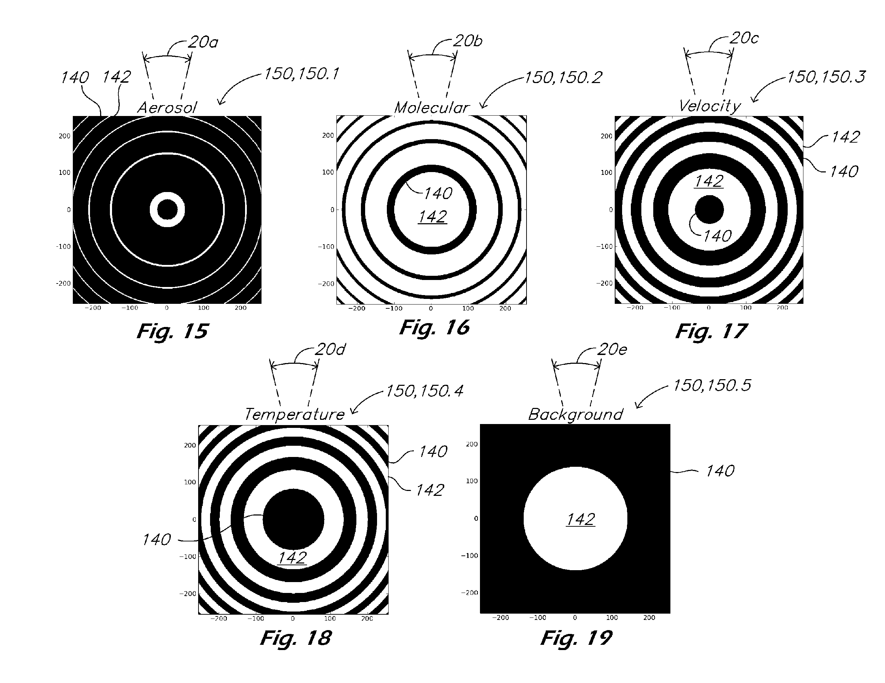

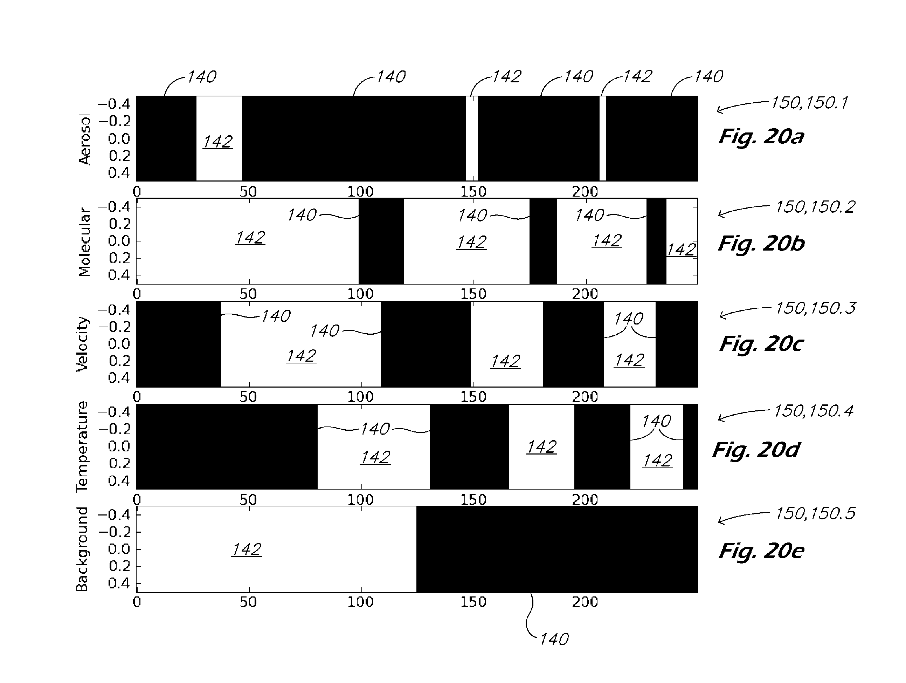

For example, in accordance with a first aspect, the **circular fringe pattern 94** is characterized with respect to the following *N*=5 variables: **aerosol counts *A*, molecular counts *M*, velocity *u*, temperature *t*,** and **background counts *B*** as provided by **equations (2.1), (2.2) and (3)** hereinabove, using a corresponding *N*=5 different **patterns 150** of pixel mirror rotational states of the **micromirrors 126** of the **digital micromirror device (DMD) 114,** wherein each of the associated **patterns 150** is chosen in advance based upon the expected sensitivity of the optical response with respect to each of these variables. For example, in on embodiment, the **pattern 150** of pixel mirror rotational states for each of the *N*=5 variables are chosen responsive to the sign of the partial derivatives of the **total fringe response *I*($\phi$)** with respect to that variable, i.e. responsive to the sign of **equations (4.1)-(4.5),** subject to a fixed offset, respectively. For example, **FIGS. 15-19** are examples of **patterns 150** of pixel mirror rotational states of the **micromirrors 126** of the **digital micromirror device (DMD) 114** for determining measures of **aerosol counts A, molecular counts *M*, velocity *u*, temperature *t*,** and **background counts *B*,** respectively, as given by the sign of **equations (4.1)-(4.5),** respectively, wherein the black regions in **FIGS. 15-19** are where the value of the corresponding **equations (4.1)-(4.5),** plus an offset, are negative, for which the associated **digital micromirror device (DMD) 114** are controlled to a **first pixel mirror rotational state 140;** and the white regions in **FIGS. 15-19** are where the value of the corresponding **equations (4.1)-(4.5),** plus an offset, are positive, for which the associated **digital micromirror device (DMD) 114** are controlled to a **second pixel mirror rotational state 142. FIGS. 20a-e** illustrate radial cross-sections through the corresponding patterns illustrated in **FIGS. 15-19,** respectively, from the center of each **pattern 150** of pixel mirror rotational states, outwards.

More particularly, **FIG. 15** illustrates and example of the **pattern 150, 150.1** of pixel mirror rotational states of the **micromirrors 126** of the **digital micromirror device (DMD) 114,** based upon the sign of the value of **equation (4.1),** used to obtain a corresponding **first set of complementary signals 160.1, 162.1** responsive to a measure of **aerosol counts A,** wherein the a radial cross-section through the **pattern 150, 150.1** of pixel mirror rotational states illustrated in **FIG. 15,** from the center thereof outwards, is illustrated in **FIG. 20a.** Furthermore, **FIG. 16** illustrates and example of the **pattern 150, 150.2** of pixel mirror rotational states of the **micromirrors 126** of the **digital micromirror device (DMD) 114,** based upon the sign of the value of **equation (4.2),** used to obtain a corresponding **second set of complementary signals 160.2, 162.2** responsive to a measure of **molecular counts *M*,** wherein the a radial cross-section through the **pattern 150, 150.2** of pixel mirror rotational states illustrated in **FIG. 16,** from the center thereof outwards, is illustrated in **FIG. 20b.** Yet further, **FIG. 17** illustrates and example of the **pattern 150, 150.3** of pixel mirror rotational states of the **micromirrors 126** of the **digital micromirror device (DMD) 114,** based upon the sign of the value of **equation (4.3),** used to obtain a corresponding **third set of complementary signals 160.3, 162.3** responsive to a measure of **velocity *u*,** wherein the a radial cross-section through the **pattern 150, 150.3** of pixel mirror rotational states illustrated in **FIG. 17,** from the center thereof outwards, is illustrated in **FIG. 20c.** Yet further, **FIG. 18** illustrates and example of the **pattern 150, 150.4** of pixel mirror rotational states of the **micromirrors 126** of the **digital micromirror device (DMD) 114,** based upon the sign of the value of **equation (4.4),** used to obtain a corresponding **fourth set of complementary signals 160.4, 162.4** responsive to a measure of **temperature *t*,** wherein the a radial cross-section through the **pattern 150, 150.4** of pixel mirror rotational states illustrated in **FIG. 18,** from the center thereof outwards, is illustrated in **FIG. 20d.** Yet further, **FIG. 19** illustrates and example of the **pattern 150, 150.5** of pixel mirror rotational states of the **micromirrors 126** of the **digital micromirror device (DMD) 114,** based upon the sign of the value of **equation (4.5),** used to obtain a corresponding **fifth set of complementary signals 160.5, 162.5** responsive to a measure of **temperature *t*,** wherein the a radial cross-section through the **pattern 150, 150.5** of pixel mirror rotational states illustrated in **FIG. 19,** from the center thereof outwards, is illustrated in **FIG. 20e.**

It should be noted that the **pattern 150, 150.1** of pixel mirror rotational states used for the measure of **aerosol counts A** is a subset of the **pattern 150, 150.2** of pixel mirror rotational states used for the measure of **molecular counts *M*,** and that each of the **patterns 150, 150.1-150.5** of pixel mirror rotational states is mathematically independent of the others, so that none of these **patterns 150, 150.1-150.5** may be constructed by superposition of the other **patterns 150, 150.1-150.5** of pixel mirror rotational states. Accordingly, the five sets of **complementary signals 160.1-160.5, 162.1-162.5** from the **first 120.2' and second 120.2" detectors** for the **circular fringe pattern 94.2** from the **backscatter signal channel 110** provides sufficient information as necessary to determine **aerosol counts** *A*, **molecular counts**

*M,* velocity *u,* temperature *t,* and background counts *B* therefrom.

Generally, any collection of patterns 150 of pixel mirror rotational states that are spatially independent will work however, not all patterns 150 of pixel mirror rotational states provide the same expected error. The optimum selection of patterns 150 of pixel mirror rotational states depends on the variables of interest in the remote sensing problem at hand and also on the state of the solution being sought. In accordance with the first aspect, the patterns 150 of pixel mirror rotational states are chosen in view of an associated model of the optical response of the atmospheric measurement system 10, wherein the derivatives of the optical response provide for resulting associated complementary signals 160, 162 that are sensitive to changes in the associated variables of interest. From the partial derivatives of the total fringe response *I* with respect to aerosol counts A, molecular counts *M,* velocity *u,* temperature *t,* and background *counts B* as given by equations (4.1)-(4.5), the associated regions of interest are relatively broad and well defined. For example, referring to FIGS. 13 and 14, there are clear zones where the partial derivative is positive and others that where the partial derivative is negative. These zones explicitly map how the velocity *u* and temperature *t* information, respectively, is contained in the fringe pattern.

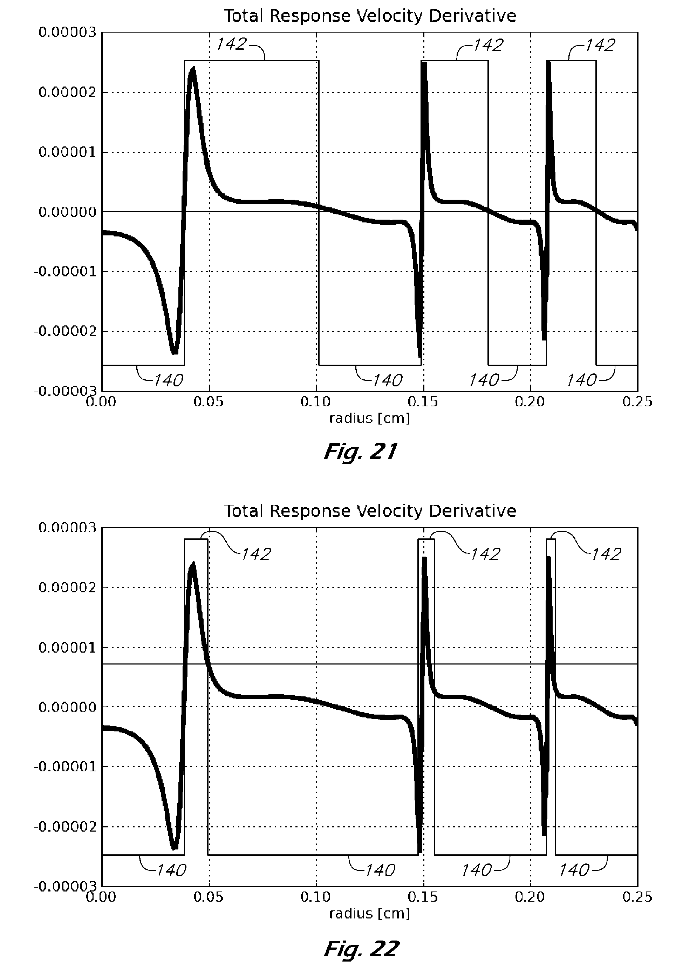

In accordance with a second aspect, the patterns 150 may be adapted as with the first aspect, but with the use of an associated threshold when mapping the results of equations (4.1)-(4.5) to the corresponding patterns 150, wherein the patterns 150 are then given responsive whether or not the value of the associated derivative is either greater or less than a chosen threshold, for example, as shown in FIGS. 21 and 22 for two different threshold values -- zero and +30% of signal amplitude, respectively -- as applied to equation (4.3) for partial derivative with respect to velocity *u.* More particularly, FIG. 21 illustrates a pattern 150.3 of pixel mirror rotational states for determining a measure of velocity *u* superimposed upon the partial derivative of the total fringe response I with respect to velocity *u* as given by equation (4.3), for a circular fringe pattern 94 with three orders on the photodetector, and for a threshold of zero, wherein the corresponding pattern 150.3 of pixel mirror rotational states illustrated in FIGS. 17 and 20c has three positive regions and four negative regions, so that three complete rings of micromirrors 126 would be tilted in a first pixel mirror rotational state 140 towards the first photodetector 120.2$^A$ and four complete rings would be tilted in a second pixel mirror rotational state 142 toward the second photodetector 120.2$^B$. The incomplete rings illustrated in FIG. 17 would not be illuminated by the optical source. A different value for the threshold would cause some of the regions would grow and others to shrink, for example, as shown in FIG. 22 which illustrates the pattern 150.3 of pixel mirror rotational states for a threshold setting of 0.3 times the associated peak amplitude. For the pattern 150.5 of pixel mirror rotational states associated with background counts *B*, the partial derivative is a constant, so the associated pattern 150.5 of pixel mirror rotational states is chosen to be spatially independent of the others. For example, a pattern 150.5 of pixel mirror rotational states associated with the measure of background counts B could simply divide the radial domain in two by a parameterized proportionality threshold such that all radii above the threshold are imaged onto the first photodetector 120.2$^A$ and radii below the threshold onto the second photodetector 120.2$^B$. Patterns 150.1, 150.2 and 150.4, respectively, for aerosol counts A, molecular counts *M,* and temperature *t,* respectively, can be determined in a similar fashion.

The programmability of the digital micromirror device (DMD) 114 allows the regions being selected to be varied dynamically as the measurement conditions vary. For example: in the case of a Lidar, the pattern 150.3 of pixel mirror rotational states for velocity *u* is most sensitive when its divisions coincide with the fringe peaks (which move with velocity dependent Doppler shifts). Accordingly, real time accuracy can be improved if the pattern 150.3 of pixel mirror rotational states for velocity *u* were adapted in real time to account for this shift. This ability to adapt the observations can be beneficial in a highly variable natural environment. Similarly, the temporal duration of exposure for each pattern 150 of pixel mirror rotational states may be adjusted within a sample set, i.e. the duration of measurement may be different for different patterns 150 of pixel mirror rotational states, so as to provide for re-balancing the sensitivity of the atmospheric measurement system 10 to increase accuracy in the state variable or state variables of greatest interest.

The choice of temporal exposure weighting and patterns 150 of pixel mirror rotational states depend on the present environmental state and a ranking of the parameters of interest. One approach for examining potential systems is by a Monte-Carlo simulation. Another is by a non-linear optimization technique such as the Broyden-Fletcher-Goldfarb-Shanno (BFGS) method, a quasi-Newton, variable metric method, for example, as described by J. Nocedal and, S. Wright, Numerical Optimization, Springer-Verlag New York, Inc., 1999, pages 194-201.

In these cases one may design a cost function based on the covariance of the minimum variance unbiased estimate - for example, as described by D. Luenberger in "Optimization by Vector Space Methods", John Wiley & Sons, Inc. (1969) on page 15, using the system dynamics from the model response and expected environmental noise, for example, as given by equation (21) hereinbelow. At which point Monte-Carlo can be employed to understand how the distribution of solutions vary with respect to the system design, or descent-based schemes can by employed to find a best candidate according to ones rankings of state variable accuracy.

Once a scheme for generating patterns 150 of pixel mirror rotational states is established, the associated thresholds and temporal weighting fractions can then be mathematically optimized. The resulting optimal set of parameters will be referred to as a solution to the optimization problem. Given a pattern 150 of pixel mirror rotational states, the system partial derivatives (Jacobean Matrix) and the expected measurement covariance, one can estimate the inversion errors that would occur in using that system. In particular the Jacobean derivative, J , is given

$$J = \left[ \frac{\partial I}{\partial A}, \frac{\partial I}{\partial M}, \frac{\partial I}{\partial u}, \frac{\partial I}{\partial t}, \frac{\partial I}{\partial B} \right] \qquad (5)$$

which allows the intensity at any phase point, $\varphi$, to be approximated as

$$I \approx I_0 + J \left[ \Delta A, \Delta M, \Delta u, \Delta t, B \right]^T \qquad (6)$$

The expected covariance of the noise in intensity is given by Q. In the case of a shot noise limited system this covariance would be a diagonal matrix of the counts collected in each measurement. The matrix of dynamics, W, is formed by integrating the Jacobean over each **pattern 150** of pixel mirror rotational states and applying the corresponding temporal weighting factor. Let $\Omega_A$, $\Omega_M$, $\Omega_u$, $\Omega_t$, $\Omega_B$ represent the **patterns 150** of pixel mirror rotational states that send light to the first photodetector, and $\tilde{\Omega}_A$, $\tilde{\Omega}_M$, $\tilde{\Omega}_u$, $\Omega_t$, $\tilde{\Omega}_B$ be the complements of these **patterns 150** of pixel mirror rotational states which send light to the second photodetector, then one can form a **10x5** matrix where the $k^{th}$ row is given by cycling $\Omega_k$ through the set $\{\Omega_A, \tilde{\Omega}_A, \Omega_M, \Omega_M, \Omega_u, \tilde{\Omega}_u, \Omega_t, \Omega_t, \Omega_B \tilde{\Omega}_B\}$ and similarly for the temporal weighting fractions $p_k$ through $\{p_A, p_A, p_M, p_M, p_u, p_u, p_t, p_t, p_B, p_B\}$

$$W[k,:] = p_k \left[ \iint_{\Omega_k} \frac{\partial I}{\partial A} d\Omega, \iint_{\Omega_k} \frac{\partial I}{\partial M} d\Omega, \iint_{\Omega_k} \frac{\partial I}{\partial u} d\Omega, \iint_{\Omega_k} \frac{\partial I}{\partial t} d\Omega, \iint_{\Omega_k} \frac{\partial I}{\partial B} d\Omega \right] \qquad (7)$$

This **equation (7)** is valid for any set of **patterns 150** of pixel mirror rotational states (such as those shown in **FIGS. 20a-e, 26 or 27**). Similarly, for a shot noise limited system with expected intensity, $I_0$, the covariance is

$$Q[k,:] = p_k \delta_{ik} \iint_{\Omega_k} I_0 \, d\Omega \qquad (8)$$

At this point one may compute the standard deviation of the errors expected in each measured parameter through the minimum variance unbiased estimator as

$$\sigma = \sqrt{diag\left( \left[ W^T Q^{-1} W \right]^{-1} \right)} \qquad (9)$$

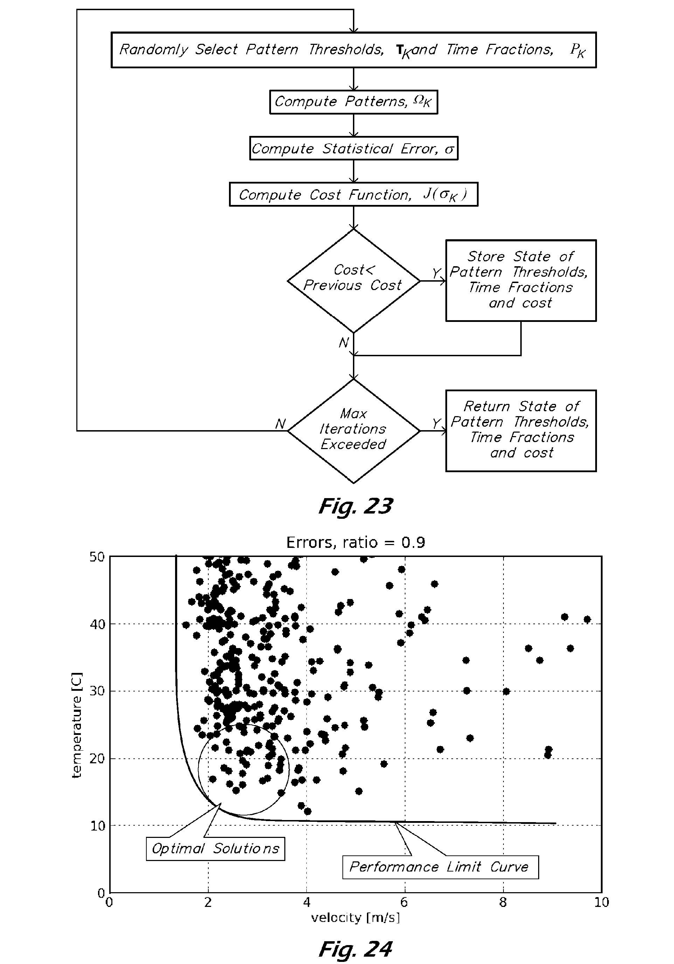

Each element of the $\sigma_{vector}$ represents the expected error in *A, M, u, t, B* respectively. With this ability to estimate the errors in each parameter of the system, one may perform a Monte-Carlo analysis to vary the associated thresholds and temporal weighting factors to see how the parameters affect the accuracy of the system, for example, in accordance with the Monte-Carlo procedure is illustrated in **FIG. 23.**

The distribution of the solution space can be understood by viewing the Monte-Carlo results, for example, such as those shown in **FIG. 24,** where each point (solution) corresponds to a choice of temporal weightings and pattern thresholds. Such results can aid in choosing a cost function for a descent-based optimization. The simplest form of cost function is a dot product of weights with the standard deviations, $J(\sigma) = \langle \omega, \sigma \rangle$, where $\omega_k$ is a vector of length **5** whose entries magnitude reflect the relative importance of each variable that are particular to one's interest. Note that the effects of the selected thresholds and temporal weighting factors are embedded in the calculation of $\sigma$. Other more elaborate cost functions may be constructed as well by using any non-negative functional form (such as a Gaussian or logarithmic) such as:

Example Linear Cost functional

$$J(\sigma) = \langle \omega, \sigma \rangle = \sum_k \omega_k \sigma_k \qquad (10.1)$$

Example Gaussian multivariate functional

$$J(\sigma) = B \exp(-\tfrac{1}{2}\sigma^T A \sigma) \qquad (10.2)$$

Example Logarithmic functional

$$J(\sigma) = \log(\langle \omega, \sigma \rangle^n + \gamma) \qquad (10.3)$$

**FIG. 24** shows that there is a trade-off between accurately measuring velocity or temperature. The horizontal axis shows the expected error in velocity and the vertical axis shows the expected error in temperature. Some solutions work well for velocity determination and others for temperature. Normally, the best solution for velocity is not the best solution for temperature and one must compromise. The curve in **FIG. 24** labeled "Performance Limit Curve" indicates the performance limit achievable by the system. There are many different solutions (weighting schemes and thresholds) in the knee of the curve identified by the circle labeled "Optimal Solutions" which will provide useful answers with expected errors as small as possible. In some cases it may be worthwhile to alternate between several system solutions in order to take turns giving answers that are best for each state of interest.

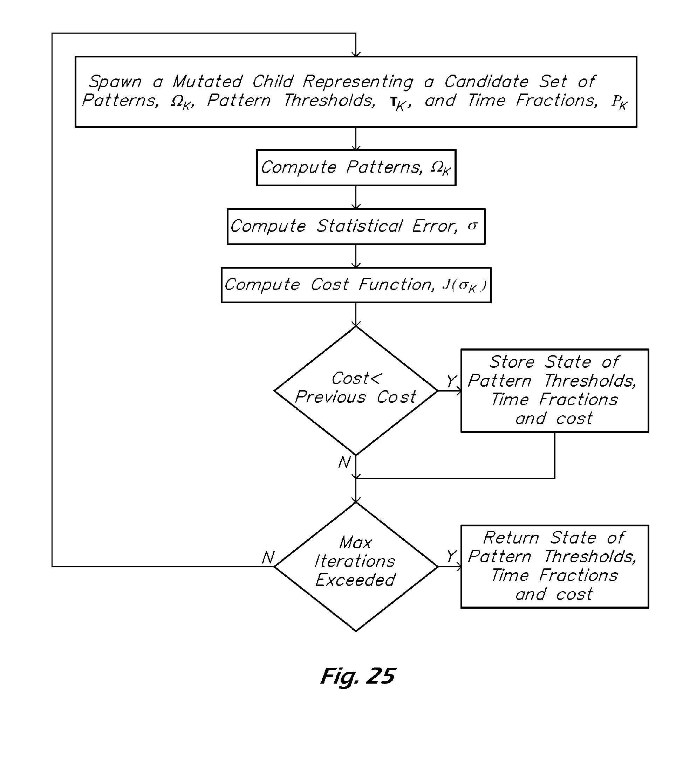

Alternatively, any number of schemes could be used to find **patterns 150** of pixel mirror rotational states which optimize a cost function. For example, in a Genetic algorithm procedure, the first step of **FIG. 23** is changed from "Randomly select pattern thresholds" to "spawn a mutated child representing a candidate set of **patterns 150** of pixel mirror rotational states (or thresholds) and time fractions", as illustrated in **FIG. 25.**

It is an interesting point that the **patterns 150** of pixel mirror rotational states used with the **Fabry-Pérot interferometer 66** are not required to be generated without regard to the expected fringe pattern. In fact, the only requirement is that the **patterns 150** of pixel mirror rotational states are algebraically independent, such that no **pattern 150** of pixel mirror rotational states can be constructed as a linear combination of the other **patterns 150** of pixel mirror rotational states in the set

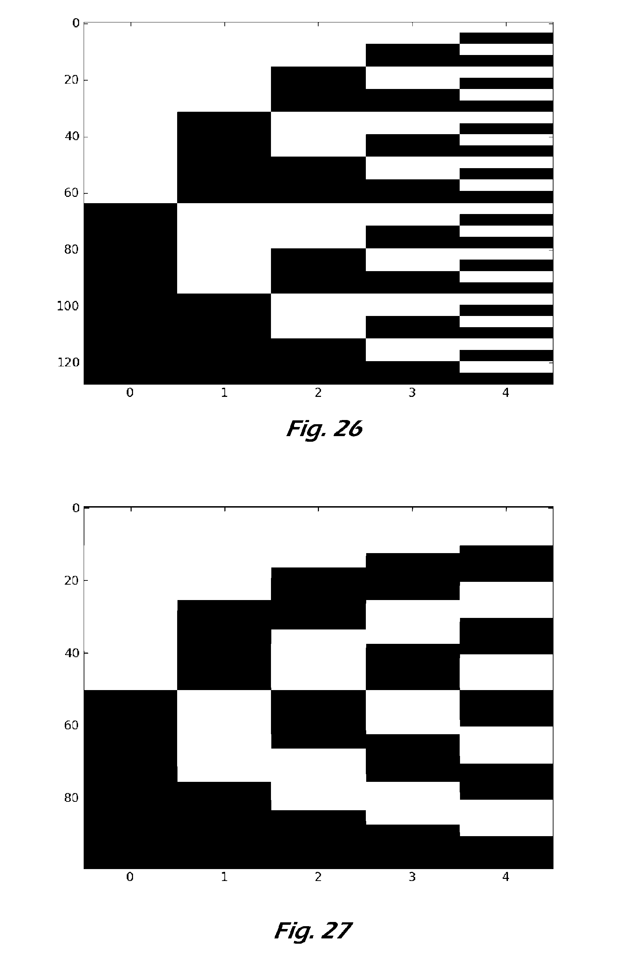

Referring to **FIG. 26,** as one example, an alternative set of **patterns 150** of pixel mirror rotational states can be generated by dyadic divisions in the radii, similar to a wavelet decomposition.

Furthermore, the **patterns 150** of pixel mirror rotational states do not necessarily have to be radially symmetric. Although the information content of a **Fabry-Pérot interferometer 66** is circularly symmetric, if circular symmetry of the selected **patterns 150** of pixel mirror rotational states is broken then one may consider the value of the **pattern 150** of pixel mirror rotational states for that specific radii to be the fraction (or probability) of pixels in either the **first 140 or second 142 pixel mirror rotational states.** Such a **pattern 150** of pixel mirror rotational states is shown in **FIG. 27** where the gray values connote probabilities between **0** and **1.**

The set of measurements of the **complementary signals 160, 162** for the corresponding set of **patterns 150** of pixel mirror rotational states can then be used to estimate the parameters or measurements from the **atmospheric measurement system 10.** All routines must account for the optical defects in the system as in **equations (2.1-2.2).** These defects typically have a convolution type response such as a defocus-blurring or an etalon wedge defect. In a Fabry-Perot imaging system one can usually acquire a reference fringe pattern of the laser before it has interacted with the atmosphere. This response will contain all the information necessary to model the system's optical defects and any changes to the **Fabry-Pérot etalon 78.** For example changes in the temperature of a solid **Fabry-Pérot etalon 78** will change its refractive index thereby changing the systems response to velocity and temperature. This information is readily accessible by comparing the Fourier Transform of the reference to the Fourier transform of the ideal signal. Term by term (i.e. per mode) division reveals the defect coefficients (in a noise free environment), for example, as described by T. L. Killeen and P.B. Hays in "Doppler line profile analysis for a multichannel Fabry-Perot interferometer," Applied Optics 23, 612 (1984).

These can be applied to the forward model of the Fabry-Perot response as discussed earlier. As such, the Fourier expansion of an ideal signal, $H_{ideal} = H_{0(\phi)}$, and the reference signal, $H_{ref(\phi)}$, is

$$H_0(\phi) = \frac{T^2}{1-R^2}\left(1 + 2\sum_{n=1}^{\infty} R^n \cos(n\phi)\right) = \sum_{n=0}^{\infty} \hat{H}_0[n] \times \cos(n\phi) \text{ and} \qquad (11.1)$$

$$H_{ref}(\phi) = \frac{T^2}{1-R^2}\left(1 + 2\sum_{n=1}^{\infty} R^n D_n \cos(n\phi)\right) = \sum_{n=0}^{\infty} \hat{H}_{ref}[n] \times \cos(n\phi), \qquad (11.2)$$

where the $\hat{H}[n]$ terms are the Fourier coefficients of the normalized responses. The orthogonality of the cosine basis implies that the n*th* coefficient of the optical defects can be obtained from

$$D_n = \frac{\hat{H}_{ref}[n]}{\hat{H}_0[n]}. \qquad (12)$$

These are the terms to be computed in the calibration of the instrument. The reference signal is also used to track the intensity of the beam and any phase shifts in response due to drift of the **gap 86, 86.1** of the **Fabry-Pérot etalon 78.** The refractive index of the **Fabry-Pérot etalon 78** may be obtained by independently monitoring the temperature of the **Fabry-Pérot etalon 78.** This tracking is accomplished in an iterative process using measurements akin to **equation (7).** Starting with the matrix of dynamics

$$W_{ref}[k,:] = p_k\left[\iint_{\Omega_k}\frac{\partial I}{\partial A}d\Omega, \iint_{\Omega_k}\frac{\partial I}{\partial u}d\Omega, \iint_{\Omega_k}\frac{\partial I}{\partial B}d\Omega\right] \qquad (13)$$

and the vector of measurements

$$M[k] = p_k\delta_{ik}\iint_{\Omega_k} I_0\, d\Omega \qquad (14)$$

then the change in those measurements is expected to be driven by changes in the state of the system. Hence the measurements at time *j+1* are given by the previous measurements, *j,* and the system dynamics existing at the time of the *jth* measurement:

$$M_{j+1} = M_j + W_j\delta x \qquad (15)$$

where $\delta x = [\delta A,\ \delta u,\ \delta B]^T$. Recall that the phase is given by

$$\varphi = \frac{4\pi\mu d}{\lambda}\left(1 - 2\frac{u}{c}\right)\cos(\theta) \qquad (16)$$

The velocity term should be zero, however changes in **length** d of the **gap 86, 86.1,** will have a similar impact as velocity, namely $\delta d = -2d\delta u/c$. Because the reference signal has not been broadened its response is exactly the same as the backscatter signal from aerosols. As such, the aerosol term will be used to track the change in laser power. **Equation (15)** is then solved for the updates $[\delta A,\ \delta d,\ \delta B]^T$. These updates then define the normalization and phase changes necessary to consider for inversion of the total backscatter signal. The reference state may be computed with each backscattered signal, or as often as necessary to capture the rate at which the optical system changes (for example with temperature). If one can guarantee thermal stability via a temperature controlled **Fabry-Perot etalon 78** and housing then it may only be necessary to evaluate the reference periodically or on system initialization.

A similarly related technique is to divide the Fourier Transform coefficients of the reference fringe from the fringe pattern produced by the backscattered atmospheric response. The remaining response reveals a phase shift (linearly correlated to the velocity via the expected Doppler shift) and broadening function related to the thermal effects. This method is very sensitive to noise in the collected data. More than the five **patterns 150.1-150.5** of pixel mirror rotational states already described would be used in order to recover the defect coefficients. One generally requires at least as many **patterns 150** of pixel mirror rotational states as Fourier coefficients that one needs to faithfully represent the signal. In a rich aerosol environment this could be anywhere from **45** to **100** coefficients thus requiring the same number or more of independent measurements. One simple method gaining these measurements is to create a **pattern 150** of pixel mirror rotational states of rings which sweep outward from the center. These measurements may be made periodically within normal system operation and post-processed later to produce the analytical representation of the reference fringe. Alternatively, a large enough **digital micromirror device (DMD) 114** could simultaneously image the atmospheric response with one set of **patterns 150** of pixel mirror rotational states and a reference fringe pattern with another set of **patterns 150** of pixel mirror rotational states.

One method for estimating the parameters of the atmospheric state from the backscattered signal is the classic Levenberg-Marquardt nonlinear least squares method which provides for varying smoothly between an inverse-Hessian method and a steepest descent method, as described, along with other suitable non-linear methods, by W.H. Press, S.A. Teukolsky, W.T Vetterling, and B.P. Flannery in Numerical Recipes in C, The Art of Scientific Computing, Second Edition, Cambridge University Press, 1992, pp. 656-661 and 681-706. This method works by iteratively minimizing the mean square error of a set of acquired samples against the output of a forward model (such as the model for the Fabry-Perot transmitted fringe pattern). It only requires the system dynamics equation given in **equation (7)** for any given state of the parameters. It operates by performing Quasi-Newton decent type steps toward the parameter state which minimizes the residual (mean square error of the difference between the data and the model). The algorithm works as follows:

Consider the measurements made with each **pattern 150** of pixel mirror rotational states to be the vector:

$$M[k] = p_k \delta_{ik} \iint_{\Omega_k} I_0 \, d\Omega . \qquad (17)$$

Let

$$Y[k] = p_k \delta_{ik} \iint_{\Omega_k} I_{model}(A, M, u, t, B) \, d\Omega \qquad (18)$$

be the estimates of return signal given the model described in **equations (1-3).** As described in **equation (7),** the Jacobean of this model is:

$$W[k,:] = p_k \left[ \iint_{\Omega_k} \frac{\partial I}{\partial A} d\Omega, \iint_{\Omega_k} \frac{\partial I}{\partial M} d\Omega, \iint_{\Omega_k} \frac{\partial I}{\partial u} d\Omega, \iint_{\Omega_k} \frac{\partial I}{\partial t} d\Omega, \iint_{\Omega_k} \frac{\partial I}{\partial B} d\Omega \right] \qquad (19)$$

such that, given a state vector, x = (*A, M, u, t, B*) and another nearby state, ˟0, the measured response is approximately:

$$Y(x) \approx Y(x_0) + W \cdot (x - x_0) . \qquad (20)$$

One can form a cost functional for the mismatch of the model to the data:

$$F(x) = \left\| (Y(x) - M) \right\|_\sigma^2 = \sum_k (Y[k] - M[k])^2 / \sigma_k^2 = (Y - M)^T Q^{-1} (Y - M) \qquad (21)$$

Where $\sigma_k$ is the standard deviation (in counts) of the $k^{th}$ measurement, namely $\sqrt{M[k]}$ and $Q$ is defined in **equation (8).**

One selects a candidate solution for x and then seeks to update it in a fashion that minimizes the cost functional. One method of minimizing this is via steepest descent iteration. A steepest descent step simply updates the guess using some fraction of the gradient, $x_{j+1} = x_j - \Delta t \cdot \nabla F(x_j)$. The gradient of the cost functional given in **equation (19)** is simply

$$\nabla F(x) = W^T Q^{-1}\left(Y(x_0) - M + W \cdot (x - x_0)\right) \qquad (22)$$

The Levenberg-Marquardt algorithm extends this to handle quasi Newton steps by adding a curvature dependent regularization term and iteratively solving:

$$\left(W^T Q^{-1} W + \lambda \cdot diag(W^T Q^{-1} W)\right) \cdot \delta = W^T Q^{-1}\left(M - Y(x_0)\right) \qquad (23)$$

where

$$\delta = (x_{j+1} - x_j), \qquad (24)$$

and the regularization parameter is updated via

$$\lambda = \begin{cases} \lambda / \varepsilon, & \varepsilon > 1 : F \text{ decreasing} \\ \lambda \cdot \varepsilon, & \varepsilon > 1 : F \text{ increasing} \end{cases} \qquad (25)$$

In the case of a velocity only solution, one may correlate the phase shift of the acquired data against the response of the model. A normalized correlation operation will produce a maximum for the correct response when swept through a sequence of parameters. This may be efficiently implemented by Fast Fourier Transforms. Correlation has a long history of utilization in Radar applications. This concept may be extended to solve for temperature and aerosol and molecular density.

One advantage of the **atmospheric measurement system 10** is that the associated ring or pattern parameters can be reconfigured rapidly. The **micromirrors 126** of the **digital micromirror device (DMD) 114** can be reconfigured in about **10** microseconds. This allows the instrument to adapt as the environment changes. One other advantage of this type of system is that there is no read noise from the pixels like there is with an imaging photodetector such as a CCD. The only noise is from the **first 120A' and second 120B' photomultiplier detectors** which when cooled produces very low background signals. Also, the **atmospheric measurement system 10** uses the molecular response as well as the strong aerosol response which has a very high signal to noise ratio and effectively reduces the system error due to noise; the **atmospheric measurement system 10** can account for and exploit the known effects due to thermal broadening; the **atmospheric measurement system 10** can simultaneously measure velocity, temperature, aerosol and molecular components, and the **atmospheric measurement system 10** can adapt to the changing environment in order to always produce measurements based on the highest sensitivity.

However, this is subject to several limitations, the first being the relatively low quantum efficiency of the **first 120A' and second 120B' photomultiplier detectors** and the second being the fact that only two of the **patterns 150** of pixel mirror rotational states or "ring sets" are being monitored at any given time. However, there is need to cycle amongst all of the **patterns 150** of pixel mirror rotational states with equal temporal resolution. The knowledge of aerosol content might only be required infrequently to provide a reasonable measurement of the Ratio parameter. Temperature is not always required and again could be provided only at infrequent intervals. Accordingly, the basic advantage of the edge type of detection can be achieved with the **atmospheric measurement system 10,** and most of the limitations associated with the simple edge detection can be eliminated.

The **atmospheric measurement system 10** can be employed utilized for any optical remote sensing scenario. Every remote sensing problem is solved by fitting a model for the system response to the data observed while accounting for the expected deviations in the data. In a **Fabry-Pérot interferometer 66** system this response is a collection of fringes for which exists a wealth of phenomenological models. The **atmospheric measurement system 10** incorporates a **digital micromirror device (DMD) 114** in cooperation with a **Fabry-Pérot interferometer 66** to segment the optical response between two fast photodetectors. These segmented measurements are made using **patterns 150** of pixel mirror rotational states based on the derivatives of the model with respect to each parameter to be estimated thereby granting the highest sensitivity possible. An optimization with respect to segmentation thresholds and timing exposure resolution is performed to minimize the covariance of the minimum variance unbiased estimator of the system. Cost functions based on this covariance may be formed to allow trade-offs to be computed automatically with nonlinear optimization techniques such as BFGS or the Nelder-Mead Simplex algorithm. The ability to use fast photodetectors allows one to apply the **atmospheric measurement system 10** to problems where one wishes to measure state variable with a fine spatial resolution.

There are future possibilities for improving the **atmospheric measurement system 10** when **digital micromirror devices (DMD) 114** become available having more than two programmable angle states. In this case one could step the **digital micromirror device (DMD) 114** through a range of angles and, by using an array of **photomultiplier detectors 120',** observe many more **patterns 150** of pixel mirror rotational states at one time. The **patterns 150** of pixel mirror rotational states producing these observations could be optimized in much the same way as described here by simply increasing the number of threshold states used for each derivative.

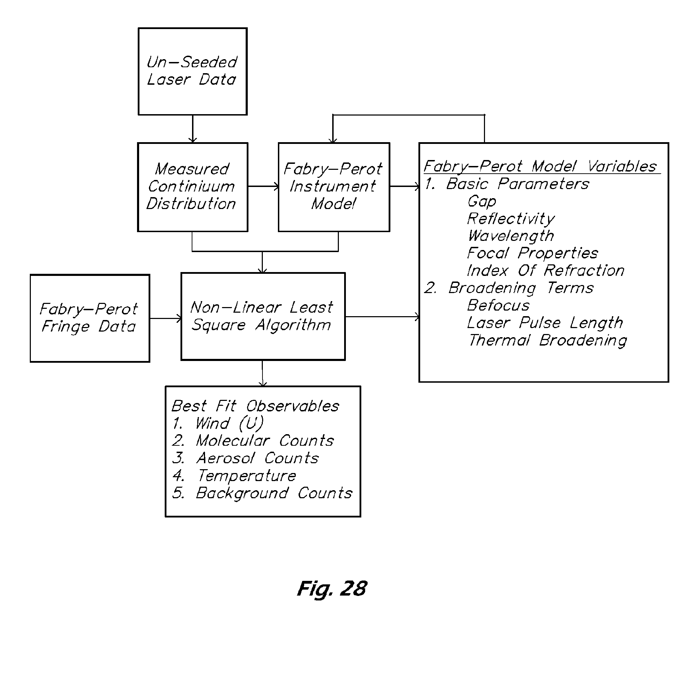

Referring to **FIG. 28,** the **image 200** of the **fringe pattern 80** generated by the **atmospheric measurement system 10** is modeled use non-linear least square techniques. The distribution of the stray light and background radiation is provided by measurements of the **fringe pattern 80** with the **laser seeder 208** turned off so as to enable the **Nd:YAG laser 12.1** to lase over a relatively wider range of wavelengths that provides for simulating background radiation. The **fringe patterns 80** are otherwise measured with the **laser seeder 208** turned on so as to provide for substantially single-frequency operation. The instrument functions and derivatives used in the algorithm are formed from analytic representations of the **Fabry-Pérot interferometer 66** and include the necessary broadening functions to account for defects of the **Fabry-Pérot etalon 78,** e.g. the associated **solid optical element 104,** as well as temperature-dependent line shape broadening from molecular backscatter. Empirical data for the illumination pattern is also used so that the correct light distribution of the fringes is accurately represented in the models. As used herein, the term relative wind is intended to refer to the relative motion between the atmosphere -- included molecules and aerosols -- and the **atmospheric measurement system 10.** In addition to frequency -- which, responsive to associated Doppler shift, provides for measuring associated velocity -- the algorithm determines the contribution to the fringe pattern from molecular and aerosol backscatter, the background radiation, and the temperature of the **atmosphere 24** for each particular associated line of sight along a direction of the corresponding associated **field of view 32** of the associated **telescope 26.** The molecular signal yields a measure of air density that can be related to pressure. The aerosol to total scattering ratio is also directly derived from the results.

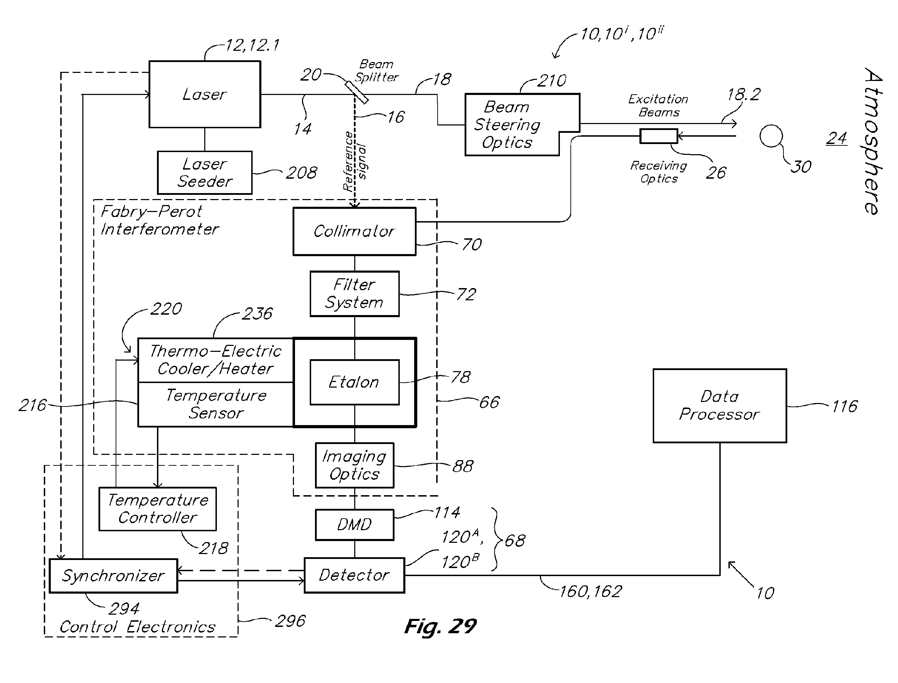

Referring to **FIG. 29,** in accordance with other embodiments, the **atmospheric measurement system 10** comprises a **laser 12** that generates a **first laser beam 14** which is divided into a **reference beam 16** and a **second laser beam 18** by a **beam splitter optic 20.** For example, in one embodiment, the **laser 12** comprises a **Nd:YAG laser 12.1,** which operates in a pulsed mode, and which is operatively associated with a **laser seeder 208,** for example, a laser diode that provides for seeding the cavity of the pulsed **Nd:YAG laser 12.1** with photons via an associated light coupling system, wherein the photons are injected from the **laser seeder 208** into the cavity of the **Nd:YAG laser 12.1** prior to the build-up of the laser pulse associated of the **first laser beam 14,** causing the frequency thereof to substantially match that of the **laser seeder 208,** so as to provide for substantially single-frequency operation. For example, in one embodiment, the **laser seeder 208** is adapted in cooperation with the **Nd:YAG laser 12.1** so that the bandwidth of the **first laser beam 14** is as narrow or narrower than the bandwidth of the associated **Fabry-Pérot interferometer 66.** The bandwidth of the **Fabry-Pérot interferometer 66** is related to the finesse thereof. **Beam steering optics 210,** for example, incorporating beam splitting mirrors, prisms, a combination thereof, or some other type of beam splitter, divide the **second laser beam 18** into a plurality of **second laser beams 18.1, 18.2 and 18.3,** each directed in a different direction into the **atmosphere 24.** One or more corresponding associated respective **telescopes 26** each aimed so as to define an associated respective one or more associated **interaction regions 30** of the respective one or more **second laser beams 18** projected into the **atmosphere 24,** collect the associated backscattered **light signals 35** from each of the respective one or more **interaction regions 30.** The **light signals 35** collected from each of the one or more **telescopes 26,** and the **reference beam 16** each illuminate, and are simultaneously processed by, a separate portion of a **Fabry-Pérot interferometer 66,** wherein the **light signals 35** and **reference beam 16** passing through the **Fabry-Pérot interferometer 66** are arranged with respect to one another in "cloverleaf' pattern. The **light signals 35** and **reference beam 16** are each first collimated by a **collimator 212,** e.g. a **collimating lens 70,** then filtered by a **filter system 72** as described hereinabove, and then processed by an associated **Fabry-Pérot etalon 78,** the output of which is imaged by associated **imaging optics 88** as associated **circular fringe patterns 94.1, 94.2** onto the associated **digital micromirror device (DMD) 114.** The associated optical components are adapted for the frequency and power levels of operation. For example, for an **atmospheric measurement system 10** incorporating a **Nd:YAG laser 12.1** operating at **355** nanometers, the optical elements would incorporate UV-grade fused silica substrates and standard anti-reflection coatings tuned for **355** nanometers.

The geometry of the **circular fringe patterns 94.1, 94.2** from the **Fabry-Pérot etalon 78** is responsive to the operative **gap 86, 86.1** thereof, which would vary with temperature if the associated material or materials controlling the length of the **gap 86, 86.1** were to exhibit a non-zero coefficient of thermal expansion. Although the **reference beam 16** simultaneously processed by the **Fabry-Pérot etalon 78** provides for compensating for thermal drift affecting all portions of the **Fabry-Pérot etalon 78** equally, it is beneficial if the temperature of the **Fabry-Pérot etalon 78** can be controlled or maintained at a constant level so as to prevent a thermal expansion or contraction thereof during the operation thereof. Accordingly, in accordance with one aspect of the **atmospheric measurement system 10,** the **Fabry**-**Pérot etalon 78** is thermally stabilized by enclosure in a **thermally-controlled enclosure 214** so as to prevent thermally-induced drift of the **circular fringe pattern 94.**

In accordance with one aspect, the **thermally-controlled enclosure 214** is passive, for example, with the **Fabry**-**Pérot etalon 78** enclosed, i.e. thermally insulated or isolated, using a material or materials with a very low thermal conductance to increase the thermal time constant and to prevent any substantial thermal shock from reaching the **Fabry-Pérot etalon 78.** In accordance with another embodiment, or in combination therewith, the **thermally-controlled enclosure 214** is constructed from a combination of materials adapted so that there is negligible net coefficient of thermal expansion in the portions of the structure surrounding the **Fabry**-**Pérot etalon 78** that affect the length of the **gap 86, 86.1.**

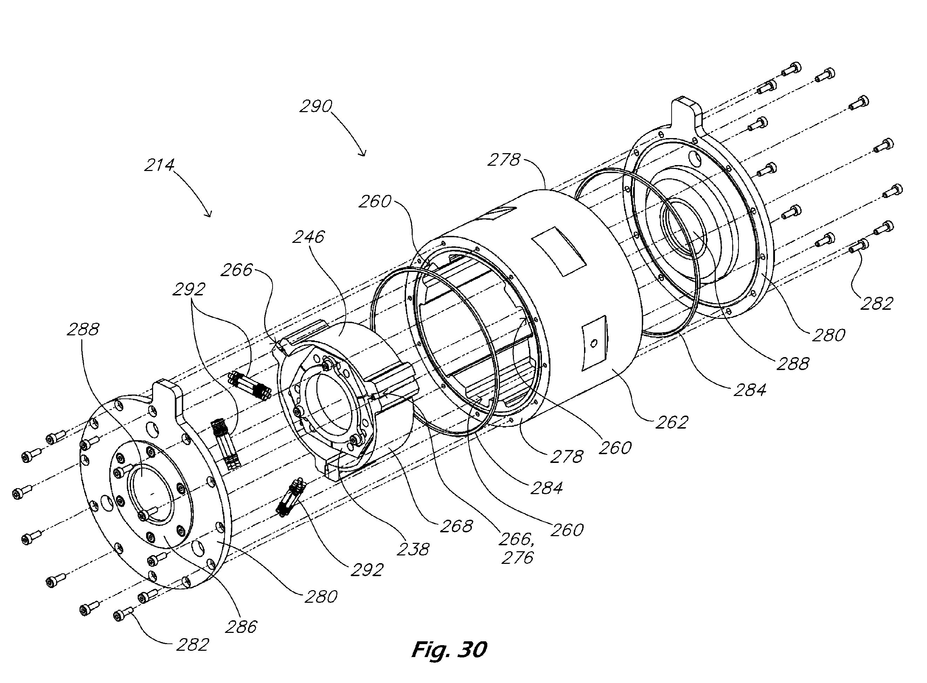

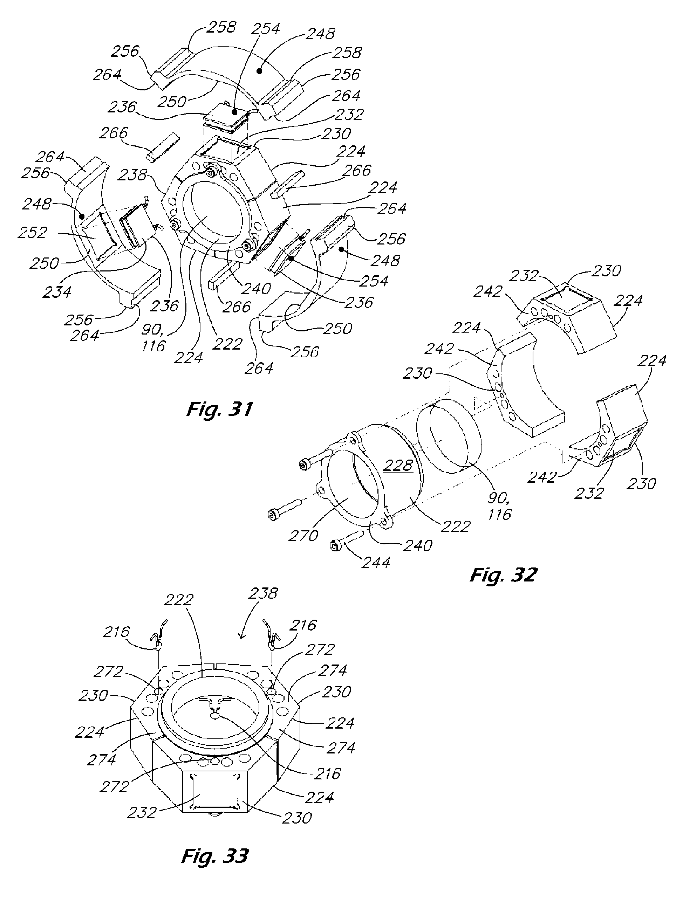

Referring to **FIGS. 30-33,** in accordance with another aspect, a temperature of the **thermally controlled enclosure 214** is actively controlled responsive to at least one associated **temperature sensor 216** using a **temperature controller 218** incorporating a **feedback control system 220** to control a heater, chiller or a combination heater and chiller- depending upon the temperature of the **thermally controlled enclosure 214** in relation to that of its environment. For example, referring to **FIGS. 31 and 32,** the **Fabry-Pérot etalon 90** comprises a **solid optical element 116** -- for example, constructed from high purity UV grade fused silica -- enclosed within a **etalon mount 222** comprising a cylindrical sleeve constructed from a material with a coefficient of thermal expansion that closely matches that of the **solid optical element 116** so as to provide for preventing or substantially eliminating unwanted thermally induced radial stress in the **solid optical element 116.** The **etalon mount 222** in turn is surrounded by a plurality, e.g. three, **heat sink segments 224,** each having a relatively high thermal conductance-- for example, constructed of copper -- each comprising an **inner cylindrical face 226** that abuts an **outside surface 228** of the **etalon mount 222,** and an **outer face 230** incorporating a recess **232** adapted to receive and abut a **first surface 234** of a **thermo-electric heat pump 236,** for example, what is known as a thermoelectric cooler (TEC). Upon assembly, the **heat sink segments 224** collectively constitute an **inner enclosure 238** that extends around and surrounds the **etalon mount 222,** the latter of which incorporates a **flange 240** that abuts a set of **first faces 242** on one side of the **heat sink segments 224,** and is fastened thereto with a plurality of **fasteners 244,** e.g. cap screws. The **inner enclosure 238** is surrounded by an **outer enclosure 246** comprising a plurality, e.g. three, heat conducting **outer ring segments 248,** e.g. constructed on aluminum, each of which incorporates an **inside face 250** with an associated **recess 252** that is adapted to receive and abut a **second surface 254** of the **thermo-electric heat pump 236.** Each of the **outer ring segments 248** incorporate associated **flanges 256** at both ends, one **side 258** of which are adapted to cooperate with **internal grooves 260** in an **outer shell 262** of the **thermally controlled enclosure 214,** the other **side 264** of which are adapted to cooperate with an **outer ring retainer wedge 266** that operates between corresponding **sides 264** of adjacent **flanges 256** of adjacent **outer ring segments 248** when the **outer ring segments 248** are assembled to form the **outer enclosure 246** surrounding the **inner enclosure 238.**

The **inner 238 and outer 246 enclosures** are assembled together to form a **core assembly 268,** as follows. The **solid optical element 116 Fabry-Pérot etalon 90** is bonded inside a **bore 270** of the **etalon mount 222** with a thermal epoxy which provides for thermal conduction therebetween, wherein the inside diameter of the **bore 270** is adapted so as to provide for a non-interfering fit with the **solid optical element 116.** The **flange 240** of the **etalon mount 222** is attached with **fasteners 244** to the **first faces 242** of the three **heat sink segments 224** assembled around the **outside surface 228** of the **etalon mount 222.** Three **thermo-electric heat pumps 236** are sandwiched between respective **recesses 232, 252** in a corresponding **outer face 230** of each **heat sink segment 224** and a corresponding **inside face 250** of each **outer ring segment 248,** so that the **first 234 and second 254 surfaces** of the **thermo-electric heat pumps 236** abut and are in thermal communication with the corresponding associated **heat sink segment 224** and **outer ring segment 248** respectively. The **core assembly 268** further comprises a plurality, e.g. three, **temperature sensors 216,** e.g. thermistors, resistive temperature devices, or thermocouples -- each of which is inserted in a corresponding **hole 272** in a **second face 274** of each **heat sink segment 224,** so as to provide for monitoring the temperature thereof, and so as to provide in cooperation with the associated **temperature controller 218** and the associated **thermo-electric heat pump 236,** for controlling the temperature thereof.

The **core assembly 268** is inserted in the **outer shell 262** so that the **flanges 240** of the **outer ring segments 248** mate with the corresponding **internal grooves 260** of the **outer shell 262,** and the **outer ring retainer wedges 266** are inserted in the gaps **276** between the facing **sides 264** of the **flanges 240** so as to wedge the opposing sides **258** of the **flanges 240** against associated **internal grooves 260** of the **outer shell 262,** thereby providing for retaining the **core assembly 268** within the **outer shell 262,** and providing for thermal communication therebetween. The **ends 278** of the **outer shell 262** are closed with associated **end cap assemblies 280** secured thereto with associated **fasteners 282** and sealed therewith with associated **seals 284,** e.g. gaskets or o-rings. The **end cap assemblies 280** incorporate associated **window assemblies 286** fastened thereto and incorporating **optical windows 288,** e.g. constructed from UV grade fused silica substrates with standard anti-reflection coatings, which provide for transmission of the associated **light signals 76.** The resulting assembly constitutes a **thermally stabilized etalon assembly 290** incorporating a **thermally controlled enclosure 214.** The **thermally stabilized etalon assembly 290** further comprises a plurality of **electrical connectors 292** therein which provide for connecting the **thermo-electric heat pumps 236** and the **temperature sensors 216** with the associated **temperature controller 218**. The **temperature controller 218** uses the **temperature sensors 216** to monitor the temperature of the **core assembly 268,** and controls the heating or cooling thereof relative to the environment using the associated **thermo-electric heat pumps 236** so as to maintain the temperature of the **core assembly 268** at a specified set-point. The **outer enclosure 246** in thermal communication with the **outer shell 262** provides for either supplying heat to or rejecting heat from the **inner enclosure 238** responsive to the thermal effort of the **thermo-electric heat pumps 236** as needed to maintain a particular set-point temperature. For example, in one embodiment, the set-point temperature is adapted so as to minimize the energy needed to maintain that temperature, while also maintaining a sufficient offset so as to operate the **thermo-electric heat pumps 236** most efficiently. For example, for a **thermo-electric heat pump 236** that operates most efficiently when heating, the set-point temperature might be **5** to **10** degrees Celsius above the nominal environmental temperature, e.g. **5** to **10** degrees Celsius above room temperature.

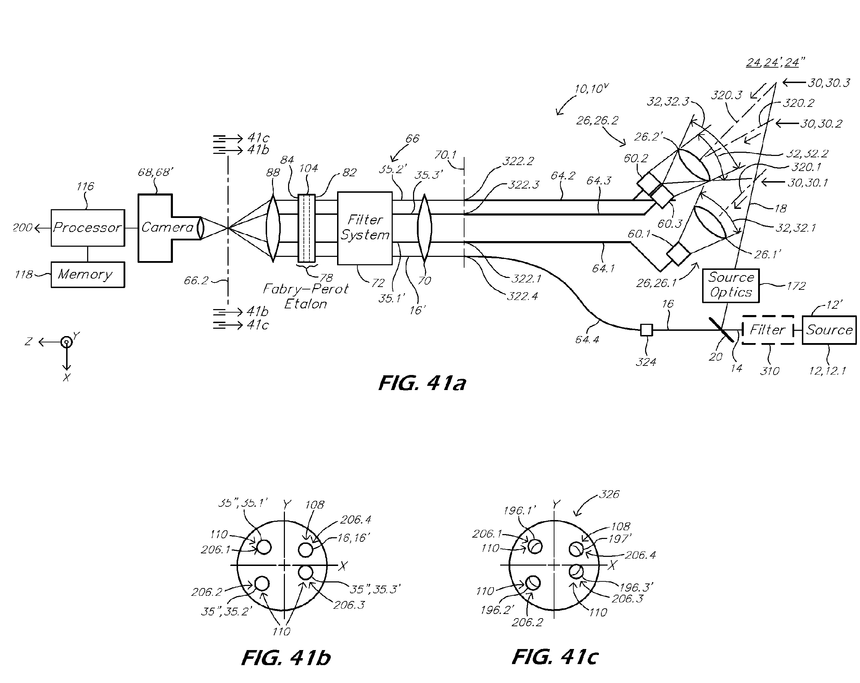

Referring to **FIG. 29,** in one embodiment, the firing of the **Nd:YAG laser 12.1** is, for example, controlled with an associated Q-switch in cooperation with a **synchronizer 294,** so as to provide for synchronization with the acquisition of associated images by the **detection system 68,** thereby precluding the need for an electronic shutter that would otherwise provide for gating **light signals 76** to the detector, although, alternatively, an electronic shutter could also be used or could be used without a **synchronizer 294,** for example, so as to preclude subsequent imaging during the process of reading image data if using a **CCD detection system 68',** for example, in the embodiment illustrated in **FIG. 41a** described hereinbelow. The **synchronizer 294,** if used, could be incorporated in a **control electronics assembly 296,** e.g. which could also incorporate the associated **temperature controller 218** and/or the associated **data processor 116.** The **synchronizer 294** could be adapted to either generate a master timing signal for controlling both the **laser 12** and the **detection system 68, 68',** or could be adapted to relay a timing pulse generated by either one of the **laser 12** and **detection system 68, 68'** to the other of the **detection system 68, 68'** and **laser 12.**

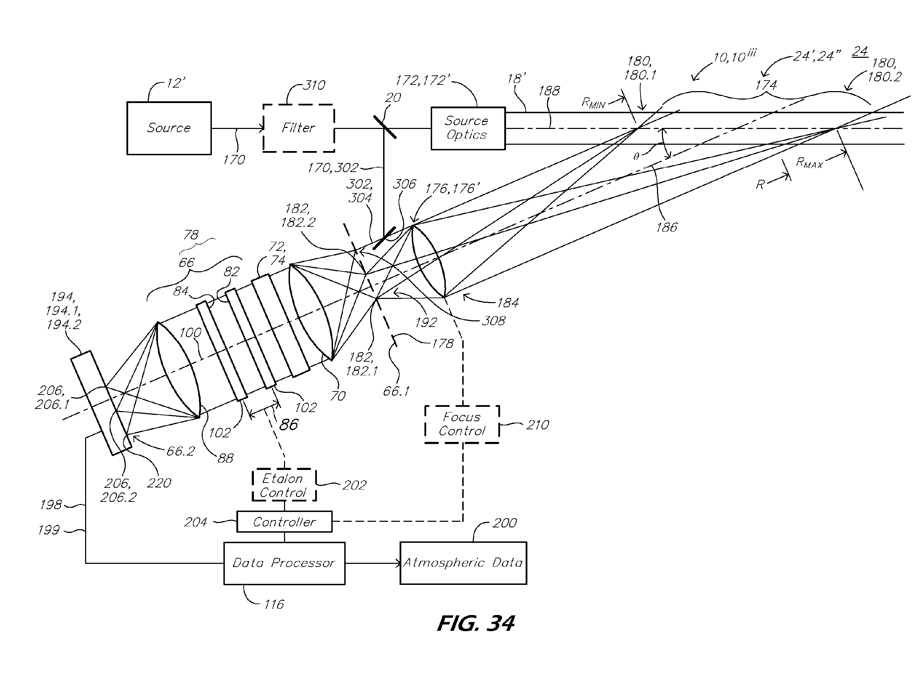

Referring to **FIG. 34,** in accordance with a third aspect, an **atmospheric measurement system 10, 10$^{iii}$,** also known as a **range imaging LIDAR system** 10$^{iii}$ incorporates a **light source 12'** that provides for generating at least substantially **monochromatic light 170,** which is projected into the **atmosphere 24** as a **beam of light 18'** through and by associated **source optics 172.** For example, the **source optics 172** may comprise a **lens assembly 172'** that provides for the width and divergence of the **beam of light 18',** and a suitable location of the associated beam waist thereof, so as to illuminate a **region of interest 174** within the **atmosphere 24** that is detectable by the **range imaging LIDAR system 10, 10$^{iii}$,** wherein the beam width within the **region of interest 174** establishes the associated transverse spatial resolution limit of the **range imaging LIDAR system 10,10$^{iii}$**.

A set of **receiver optics 176,** for example, a **telescope 176',** laterally offset from the **beam of light 18',** provides for imaging a portion of the **beam of light 18'** onto an **intermediate image plane 178,** so as to provide for a one-to-one mapping of **volumetric elements 180** within the **beam of light 18'** and corresponding associated **regions or points 182** in the **intermediate image plane 178.** More particularly, the **beam of light 18'** illuminates **molecules 24'** or **aerosols 24"** of the **atmosphere 24,** or a combination thereof, within the **region of interest 174,** which in turn backscatter the **monochromatic light 170** of the **beam of light 18'.** The resulting **backscattered light 28'** within the **field of view 184** of the **receiver optics 176** is collected thereby and imaged onto the **intermediate image plane 178.** The **receiver optics 176** is laterally offset from and points towards the **beam of light 18',** so that the **optic axis 186** of the **receiver optics 176** is inclined relative to the **optic axis 188** of the **beam of light 18'** at an associated **parallax angle** θ. Accordingly, each **volumetric element 180** of the **beam of light 18'** imaged onto a corresponding **region or point 182** on the **intermediate image plane 178** corresponds to a different **nominal range R** from the **intermediate image plane 178** to a **point 190** on the **optic axis 188** of the **beam of light 18'** associated with the corresponding **volumetric element 180.** Accordingly, different **regions or points 182** on the **intermediate image plane 178** correspond to different **nominal ranges R** to the **beam of light 18',** and therefore correspond to different **nominal ranges R** to the associated **volumetric elements 180** thereof within the **region of interest 174.** For example, as illustrated in **FIG. 34,** a **closest volumetric element 180.1** of the **beam of light 18'** within the **field of view 184** of the **receiver optics 176** located at a **closest nominal range R$_{MIN}$** from the **intermediate image plane 178** is imaged as a corresponding **first region or point 182.1** on the **intermediate image plane 178,** and a **farthest volumetric element 180.2** of the **beam of light 18'** within the **field of view 184** of the **receiver optics 176** located at a **farthest nominal range R$_{MAX}$** from the **intermediate image plane 178** is imaged as a corresponding **second region or point 182.2** on the **intermediate image plane 178.** Furthermore, **backscattered light 28'** from different **volumetric elements 180** is imaged onto the **intermediate image plane 178** at corresponding different angles of incidence relative thereto. The **receiver optics 176** can be in focus for one of a plurality of different ranges to the **beam of light 18',** so that for **volumetric elements 180** of the **beam of light 18'** not in focus, the corresponding images thereof in the **intermediate image plane 178,** i.e. the corresponding **regions or points 182** thereon, will be unfocused and therefore blurred.

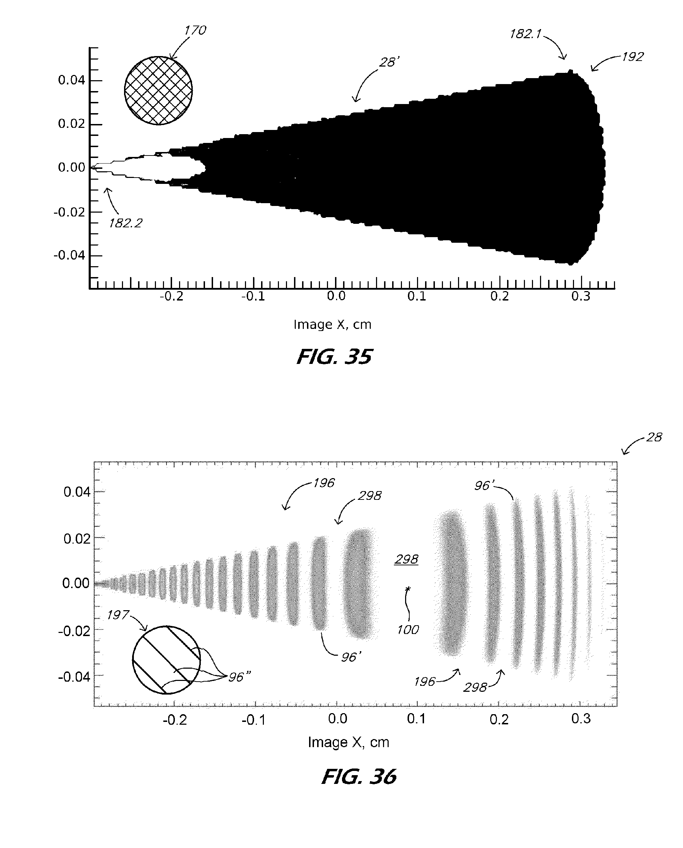

For example, referring to **FIG. 35,** a simulated image in the **intermediate image plane 178** is illustrated for a **beam of light 18'** having a beam radius of *0.1* centimeters (cm) and a half-angle of divergence of *0.05* milliradians, and for **receiver optics 176** having an aperture radius of *2.5* centimeter and a focal length of *15* cm, separated from the

beam of light 18' by *35* cm, for which the **range R** to **beam of light 18'** within the **field of view 184** of the **receiver optics 176** ranged from $R_{MIN}$= *8* meters to the **closest volumetric element 180.1** to $R_{MAX}$ = *500* meters to the **farthest volumetric element 180.2,** respectively, with the **receiver optics 176** focused at the **farthest volumetric element 180.2.** Accordingly, as illustrated in **FIG. 35,** the **second region or point 182.2** in the **intermediate image plane 178** corresponding to the **farthest volumetric element 180.2** is most sharply focused, and the **first region or point 182.1** in the **intermediate image plane 178** corresponding to the **closest volumetric element 180.1** is the most blurred, with the amount of blurring and therefore the associated size of **regions or points 182** in the **intermediate image plane 178** therebetween increasing with decreasing corresponding associated **nominal range R** from the **second region or point 182.2** to the **first region or point 182.1,** thereby giving the **intermediate image 192** of the **region of interest 174** of the **beam of light 18'** a wedge-shaped profile.

The **range imaging LIDAR system 10, 10[iii]** further comprises a **Fabry-Pérot interferometer 66** having an **input focal plane 66.1** and an **output focal plane 66.2.** The **input focal plane 66.1** is collocated with the **intermediate image plane 178** so as to receive **backscattered light 28'** therefrom, which is then processed by the **Fabry-Pérot interferometer 66** and imaged onto a **detection system 194** located at the **output focal plane 66.2.** Between the **input 66.1 and output 66.2 focal planes,** the **Fabry-Pérot interferometer 66** comprises a **collimating lens 70,** a **Fabry-Pérot etalon 78,** and **imaging optics 88** spaced along an associated common **optic axis 100,** wherein the **input focal plane 66.1** is a focal plane of the **collimating lens 70,** the **output focal plane 66.2** is a focal plane of the **imaging optics 88,** and **backscattered light 28'** at the **input focal plane 66.1** entering the **collimating lens 70** is substantially collimated thereby, then processed by the **Fabry-Pérot etalon 78,** and finally imaged onto the **detection system 194** by the **imaging optics 88.** The **Fabry-Pérot etalon 78** of the **Fabry-Pérot interferometer 66** comprises **first 82 and second 84 partially-reflective surfaces** that are parallel to one another and separated by a fixed **gap 86.** The angles at which the **backscattered light 28'** is passed through the **Fabry-Pérot etalon 78** is dependent upon the optical frequency of the **backscattered light 28'** and the length of the **gap 86,** resulting in an associated **backscatter fringe pattern 196** comprising a plurality of concentric **arcuate fringes 96'** also known as *Haidinger fringes* -- in the **output focal plane 66.2** of the **Fabry-Pérot interferometer 66.** The **backscatter fringe pattern 196** is imaged onto the **detection system 194** that generates a **plurality of backscatter electronic image signals 198** responsive thereto which is then processed as described hereinbelow by an associated **data processor 116** so as to generate a corresponding set of **atmospheric data 200** from information in the **backscatter fringe pattern 196.**

For example, in one embodiment, the **Fabry-Pérot etalon 78** comprises a pair of **planar optical windows 102** -- for example, constructed of either optical glass or fused quartz -- aligned parallel to and facing one another, and spaced apart from one another by the **gap 86,** wherein, for example, the **first 82 and second 84 partially-reflective surfaces** -- e.g. partially-silvered surfaces or other partially-reflective surfaces -- are on separate facing surfaces of the **planar optical windows 102.** Alternatively, the **first 82 and second 84 partially-reflective surfaces** could be on the outside opposing faces of the **planar optical windows 102,** or one of the **first 82 and second 84 partially-reflective surfaces** could be on a inner facing surface of one of the **planar optical windows 102,** and the other of the **first 82 and second 84 partially-reflective surfaces** could be on a outer facing surface of the other of the **planar optical windows 102.** In one embodiment, the **gap 86** is substantially fixed, whereas in other embodiments, the **gap 86** is moveable, e.g. adjustable, for example, using an **etalon control actuator 202** responsive to a **controller 204** operatively associated with or a part of the **data processor 116,** so as to provide for a tunable **Fabry-Pérot etalon 78.** Alternatively, the **Fabry-Pérot etalon 78** could be constructed from a **solid optical element 104** as described hereinabove.

Absent the **Fabry-Pérot etalon 78,** the associated **collimating lens 70** and **imaging optics 88** provide for imaging the **intermediate image plane 178** onto the **output focal plane 66.2** that is detected by the **detection system 194.** Accordingly, the **first 182.1 and second 182.2 regions or points** on the **intermediate image plane 178** -- corresponding to the **closest 180.1 and farthest 180.2 volumetric elements** of the **beam of light 18'** within the **field of view 184** of the **receiver optics 176** -- are imaged as corresponding **first 206.1 and second 206.2 regions or points** on the **output focal plane 66.2.** More generally, there is a one-to-one correspondence between **regions or points 206** on the **output focal plane 66.2** and corresponding **volumetric elements 180** of the **beam of light 18',** and therefore, there is a one-to-one correspondence between **regions or points 206** on the **output focal plane 66.2** and the corresponding **nominal range R** thereto, given the **parallax angle** θ between the **optic axes 186, 188** of the **receiver optics 176** and the **beam of light 18',** respectively, so that the **nominal range R** associated with any **region or point 206** on the **output focal plane 66.2** -- or in the associated corresponding **plurality of backscatter electronic image signals 198** detected by the **detection system 194** - can be inferred from the location of that **region or point 206** on the **output focal plane 66.2.** With the **Fabry-Perot etalon 78** present, the **arcuate fringes 96'** of the **backscatter fringe pattern 196** are present for those **regions or points 206** for which the associated frequency or wavelength of the associated **backscattered light 28'** in cooperation with the **gap 86** of the **Fabry-Perot etalon 78** provide for constructive interference, whereas **nulls 298** in the **backscatter fringe pattern 196** are present for those **regions or points 206** for which the associated frequency or wavelength of the associated **backscattered light 28'** in cooperation with the **gap 86** of the **Fabry-Perot etalon 78** provide for destructive interference. Locations of the **arcuate fringes 96'** are determined by the frequency or wavelength of the associated **backscattered light 28'**, the **gap 86** of the **Fabry**-**Pérot etalon 78** and the angle of incidence in the **Fabry**-**Pérot etalon 78.**

For example, for the conditions described hereinabove for **FIG. 35, FIG. 36** illustrates a simulation of a resulting **backscatter fringe pattern 196** for a solid **Fabry-Perot etalon 78** having a thickness, or **gap 86.1,** of *0.7* cm and an associated reflectivity of *0.85.* As with the associated **intermediate image 192,** with the **receiver optics 176** in focus at the *farthest* nominal range $R_{MAX}$, the **arcuate fringes 96'** associated with relatively closer **volumetric elements 180** of the **beam of light 18'** are transversely broadened relative to those associated with relatively farther **volumetric elements 180,** so that the **backscatter fringe pattern 196** exhibits a wedge-shaped profile similar to that of the **intermediate image 192,** wherein the radial size of the associated **nulls 298** decreases with increasing fringe order relative to the **optic axis 100** of the **Fabry**-**Pérot interferometer 66.** The **nominal range R** for which the **intermediate image 192** and the associated **backscatter fringe pattern 196** are in focus can be set to improve the sharpness of the associated range resolution at any particular **nominal range R,** for example, either using an associated fixed focal setting, or using a **focus control actuator 300** responsive to a signal from the **controller 204.**

The locations of the **arcuate fringes 96'** and associated **nulls 298** can be changed by either changing the **gap 86** of the **Fabry**-**Pérot etalon 78,** for example, by the **etalon control actuator 202** responsive to a signal from the **controller 204,** or by tilting the **Fabry**-**Pérot etalon 78.** For example, the **gap 86** of the **Fabry**-**Pérot etalon 78** could be repeatedly scanned by the **etalon control actuator 202** responsive to a signal from the **controller 204** so as to repeatedly generate associated sets of **backscatter fringe patterns 196** collectively having **arcuate fringes 96'** associated with all **nominal ranges R** to the **beam of light 18'** within the **field of view 184** of the **receiver optics 176,** so as to directly provide for associated **atmospheric data 200** at any particular **nominal range R** within the range of associated **nominal ranges R** from $R_{MIN}$ to $R_{MAX}$.

The **range imaging LIDAR system 10, 10[iii]** provides for directly detecting light scattered off of either **molecules 24'** of the atmosphere, **aerosols 24"** in the atmosphere, or a combination of the two, and provides for directly measuring the density and temperature of the **atmosphere 24,** and the velocity thereof in the direction of the **optic axis 186** of the **receiver optics 176,** over a range of **ranges R.** If scattered from a moving **molecule 24'** or **aerosol 24",** the frequency **backscattered light 28'** is Doppler shifted, which for a given **gap 86** in the associated **Fabry**-**Pérot etalon 78** thereby causes the associated **arcuate fringes 96'** of the **backscatter fringe pattern 196** from the **Fabry**-**Pérot interferometer 66** to be shifted to a location for which an associated constructive interference condition is satisfied for the corresponding rays of **backscattered light 28'** entering the **Fabry**-**Pérot interferometer 66** at a given angle from a corresponding given **nominal range R.** Accordingly, the Doppler shift in the frequency of the **backscattered light 28'** will depend upon the local velocity of the **atmosphere 24** within the **region of interest 174** interacting with the **beam of light 18',** and for different amounts of Doppler shift, **arcuate fringes 96'** associated with corresponding different **nominal ranges R** will be generated by the **Fabry-Perot interferometer 66,** thereby causing the **arcuate fringes 96'** to shift within the **backscatter fringe pattern 196** -- possibly relative to one another depending upon the distribution of velocity of the **atmosphere 24** within the **region of interest 174.**

The **range imaging LIDAR system 10, 10[iii]** further incorporates a **filter system 72,** for example, comprising a plurality of **bandpass filter mirrors 74** as described hereinabove, to filter the **backscattered light 28'** received by the **receiver optics 176** so as to prevent background light from being detected by the **detection system 194.** For example, in one set of embodiments, the **filter system 72** is located within the **Fabry**-**Pérot interferometer 66** between the **collimating lens 70** and the **Fabry**-**Pérot etalon 78.**

The **Fabry**-**Pérot interferometer 66** is subject to mechanical defects and thermally induced drift that can be compensated through calibration using a **portion 302** of the substantially **monochromatic light 170** extracted from the **light source 12'** with a **beam splitter optic 20** and then input to the **Fabry**-**Pérot interferometer 66** at the **intermediate image plane 178** as a **reference source 304.** For example, referring to **FIG. 34,** in accordance with a first embodiment, the **reference source 304** from the **beam splitter optic 20** is directed into the **Fabry**-**Pérot interferometer 66** with a **mirror 306.** Alternatively, the **portion 302** of the **monochromatic light 170** extracted from the **light source 12'** with a **beam splitter optic 20** as the **reference source 304** may be input to a fiber optic, for example, using a graded index (GRIN) lens, the output of which is located at the **intermediate image plane 178** so as to illuminate the **collimating lens 70** of the **Fabry**-**Pérot interferometer 66** therefrom. Accordingly, for either embodiment, the **reference source 304** is input to the **Fabry**-**Pérot interferometer 66** from a **location 308** on the **intermediate image plane 178** / **input focal plane 66.1** that is distinct from the **intermediate image 192** of the **backscattered light 28',** and is processed by the **Fabry-Perot interferometer 66** so as to generate a corresponding **reference fringe pattern 197** comprising one or more associated **arcuate fringes 96"** at a corresponding location on the **output focal plane 66.2,** which is then detected by the **detection system 194** so as to generate a corresponding **plurality of reference electronic image signals 199** responsive thereto, which is then processed as described hereinbelow by the associated **data processor 116** together with the **plurality of backscatter electronic image signals 198** associated with the **backscatter fringe pattern 196** from the **backscattered light 28'.**

The **light source 12'** provides for generating a sufficient amount of sufficiently narrow-band **monochromatic**

light 170 so as to provide for a sufficient amount of **backscattered light 28'** so that the resulting **backscatter fringe pattern 196** is detectable by the **detection system 194** with a sufficient signal-to-noise ratio (SNR) so that the resulting **atmospheric data 200** determined therefrom is accurate within a given accuracy threshold and provides for an information temporal bandwidth that is within a given temporal bandwidth threshold. For example, the **light source 12'** could comprise one or more lasers, light emitting diodes (LEDs), flash lamps, for example, xenon flash lamps, sodium lamps or mercury lamps. The **light source 12'** may be either continuous or pulsed, and need not necessarily be coherent. If the spectral bandwidth of the **light source 12'** is not inherently substantially less than the expected minimum Doppler shifts to be measured, then the output of the **light source 12'** may be filtered with a **filter 310** so as to provide for generating sufficiently **monochromatic light 170** so as to enable Doppler shifts in the **backscattered light 28'** to be measured sufficiently accurately so as to provide for resolving velocity sufficiently accurately, i.e. less than a given threshold. The particular operating wavelength of the **range imaging LIDAR system 10, 10$^{iii}$** is not limiting. For example, any optical wavelength that interacts with that which is being sensed in the associated **region of interest 174** may be used.

Alternatively, the **range imaging LIDAR system 10, 10$^{iii}$** may be built without the **collimating lens 70** and input **telescope 26**. The objective lens of the **receiver optics 176** may be used for the input **telescope 176'** as illustrated in **FIG. 34.** There is a constraint in that the detector of the **detection system 68,** i.e. either the **digital micromirror device (DMD) 114** or camera / CCD, must be located in the **output focal plane 66.2** of the **imaging optics 88** which is where the **circular fringes 96** produced by the **Fabry-Pérot etalon 78** are sharpest. For those cases where the backscatter is relatively close to the sensor, the backscatter image will be out of focus, but the pertinent information is still present in the image. The geometry between the source **beam of light 18'** and the **field of view 32** of the **receiver optics 176** is essentially the same as the system with the input **telescope 26** and **collimating lens 70**.

For insertion of the **reference source 304,** one method is to use a beam splitter that reflects a small **portion 302** of the **reference beam 16** into the optical path while reflecting only a small portion of the backscattered **light signal 35.** A **reference source 304** is obtained by taking a portion of the **first laser beam 14** and coupling that signal into an **optical fiber 64** that routes the signal to where it is needed. The output from the **optical fiber 64** is divergent and is subsequently collimated by the lens in the reference path. The position of the **optical fiber 64** in the reference lens image plane determines where the reference image will appear on the **detection system 68.** The **reference source 304** would be positioned so that its illumination does not overlap with the backscattered **light signal 35.**

The associated optics can be designed so that the reference illumination pattern will be sufficient to determine the center of the interference pattern produced by the **Fabry-Pérot etalon 78** as well as the location of the fringes. This information is subsequently used to extract the **atmospheric data 200** from the image at the ranges corresponding to the intersection of the backscattered **light signal 35** and the **arcuate fringes 96'** of the **Fabry-Perot interferometer 66.**

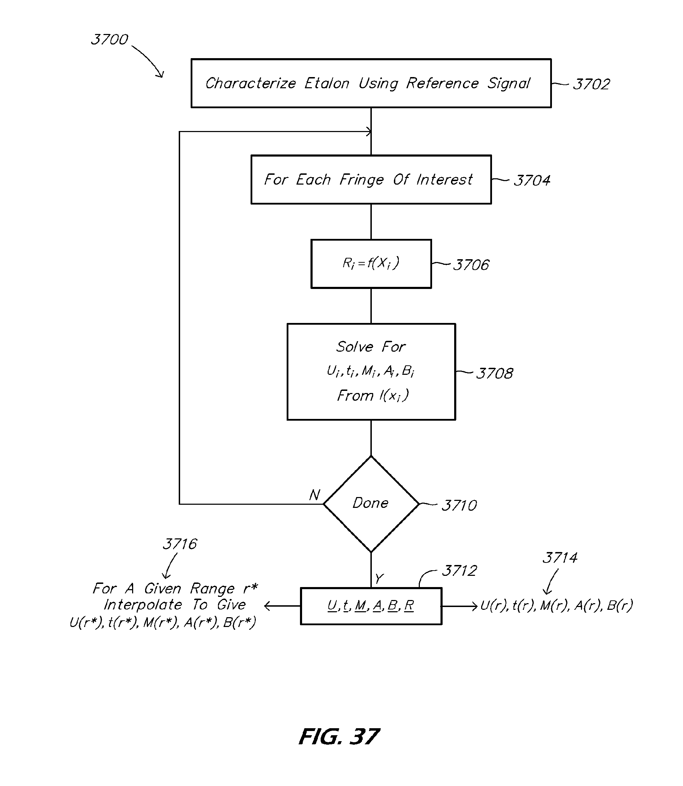

Referring to **FIG. 37,** in accordance with a **process 3700** for determining measures of atmosphere from the **plurality of backscatter electronic image signals 198,** in **step (3702),** the **Fabry-Pérot etalon 78** is characterized using the **plurality of reference electronic image signals 199,** wherein the **velocity u, molecular counts M** and **background counts B** are all assumed to be zero, as are the partial derivatives with respect to **molecular counts M, background counts B** and **temperature t.** Then, beginning with **step (3704),** for each **arcuate fringe 96'** of interest, in **step (3706),** the associated **nominal range R$_i$** is given from a pre-determined function or table given the location in the **output focal plane 66.2** of the **arcuate fringes 96'** being analyzed. Then, in **step (3708),** given the associated measurement vector **I(X$_i$)** of the **arcuate fringe 96',** i.e. the intensity as a function of the radial distance along the **arcuate fringe 96',** one or more of the atmospheric measures: **aerosol counts A, molecular counts M, velocity u, temperature t,** and **background counts B** is solved in accordance with the teachings heareinabove, as will be described more fully hereinbelow. Then, in **step (3710),** if all of the **arcuate fringes 96',** **I(X$_i$)** of interest have not been analyzed, then the above process repeats with **step (3704).** Otherwise, in **step (3712),** vectors **$\underline{U}$, $\underline{t}$, $\underline{M}$, $\underline{A}$, and/or $\underline{B}$** of the one or more measures for each of the **arcuate fringes 96',** **I(X$_i$)** analyzed in **step (3708)** are returned, together with a nominal range vector **$\underline{R}$** of associated **nominal ranges R,** wherein the nominal ranges **R$_i$** of the nominal range vector will depend upon the associated velocities **U$_i$** (responsive to Doppler shift), and the **gap 86** of the **Fabry-Pérot etalon 78.** These vectors can then be used to either determine functions of one or more measures **U(r), t(r), M(r), A(r\*)** or **B(r)** as a function of **nominal range R,** as indicated by **step (3714),** or to interpolate values one or more measures **U(r\*), t(r\*), M(r\*), A(r\*)** or **B(r\*)** at a particular **nominal range R\*,** as indicated by **step (3716).** Alternatively, the nominal range vector **$\underline{R}$** may be fixed, i.e. associated with a set of predetermined **nominal ranges R,** by adjusting the **gap 86** of the **Fabry-Pérot etalon 78** responsive to Doppler shift, for example, with the **etalon control actuator 202,** so that the associated **arcuate fringes 96'** being analyzed remain at substantially fixed locations regardless of the conditions of the **atmosphere 24.**

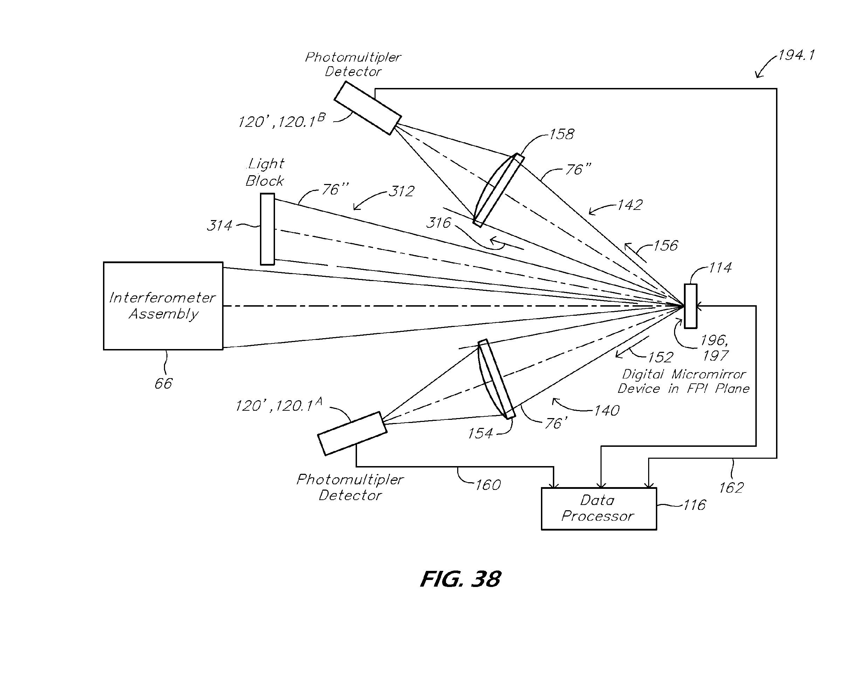

Referring to **FIG. 38,** in accordance with a first aspect, the **detection system 194.1** comprises a **digital micromirror device (DMD) 114** comprising an array -- for example, a Cartesian array of **N** rows and **M** columns-- of associated **micromirrors 126,** each of which constitutes a controllable **pixel 148** that is individually addressable and controllable to one of at least three possible associated **pixel mirror rotational states 140, 142, 312.** The **digital micromirror device (DMD) 114** is located in the **output focal plane 66.2** of the **imaging optics 88** of the **Fabry-Pérot interferometer 66** so as to receive the **backscatter 196 and reference 197 fringe patterns** processed by the **Fabry-**

**Pérot interferometer 66,** portions of which, when processed, are selectively reflected onto a pair of **photodetectors 120.1$^A$, 120.2$^B$,** for example, **photomultiplier detectors 120.1$^{A'}$, 120.2$^{B'}$,** from which **complementary signals 160, 162** detected thereby are processed by the **data processor 116** so as to provide for determining the associated measures of the **atmosphere 24** therefrom as a function of **nominal range R,** wherein the **complementary signals 160, 162** are processed in accordance with the methodology described hereinabove and illustrated in **FIGS. 13-28** in conjunction the features described hereinbelow associated with range-dependent signal processing, wherein portions of the **backscatter 196 and reference 197 fringe patterns** not associated with the particular range being processed are masked by setting the **micromirrors 126** associated therewith to a **third pixel mirror rotational state 312** so as to block those portions from detection by the **photodetectors 120.1$^A$, 120.2$^B$** with an associated **light block 314** and the entire **backscatter fringe pattern 196** is similarly masked when processing the **reference fringe pattern 197.**

The **micromirrors 126** of the associated array of **micromirrors 126** of the **digital micromirror device (DMD) 114** in the **first pixel mirror rotational state 140** cause **first portions 76'** of either the **backscatter fringe pattern 196** or the **reference fringe pattern 197** from the **Fabry-Pérot interferometer 66** impinging thereupon to be reflected in a **first direction 152** to an associated **first objective lens 154,** and to be directed thereby to the a **first photomultiplier detector 120$^{A'}$.** Similarly, **micromirrors 126** of the associated array of **micromirrors 126** of the **digital micromirror device (DMD) 114** in the **second pixel mirror rotational state 142** cause **second portions 76"** of either the **backscatter fringe pattern 196** or the **reference fringe pattern 197** from the **Fabry-Pérot interferometer 66** impinging thereupon to be reflected in a **second direction 156** to an associated **second objective lens 158,** and to be directed thereby to the a **second photomultiplier detector 120$^{B'}$.** Finally, **micromirrors 126** of the associated array of **micromirrors 126** of the **digital micromirror device (DMD) 114** in the **third pixel mirror rotational state 312** cause **third portions 76'''** of either the **backscatter fringe pattern 196** or the **reference fringe pattern 197** from the **Fabry-Pérot interferometer 66** impinging thereupon to be reflected in a **third direction 316** to the **light block 314** that provides for absorbing light impinging thereupon. For example, in one embodiment, the **third pixel mirror rotational state 312** corresponds to a state of substantially no rotation of the associated **micromirrors 126,** which may be achieved, for example, by applying a common voltage to the associated **micromirror 126** and it associated mirror address electrodes and yoke address electrodes, so as to create an equal state of electrostatic repulsion between all associated pairs of electrodes associated with the **micromirror 126,** thereby maintaining the **micromirror 126** in a substantially unrotated condition.

The **micromirrors 126** of the **digital micromirror device (DMD) 114** are relatively efficient, with overall efficiency approaching *90%* in one set of embodiments. Accordingly, the **digital micromirror device (DMD) 114** provides for digitally isolating light impinging thereupon into two disjoint sets for the portion of the light being analyzed, and for masking a remaining portion of the light. More particularly, the **digital micromirror device (DMD) 114** is used to interrogate portions the **backscatter 196 and reference 197 fringe patterns** from the **Fabry-Pérot interferometer 66,** and in cooperation with the associated **first 120$^{A'}$ and second 120$^{B'}$ photomultiplier detectors,** to provide for generating associated one or more pairs of associated **complementary signals 160, 162,** each responsive to the number of photons in the associated two disjoint sets of light reflected by the **digital micromirror device (DMD) 114** resulting from a particular pattern of pixel mirror rotational states to which the associated array of **micromirrors 126** of the **digital micromirror device (DMD) 114** are set for a particular set of measurements, wherein the associated **first 120$^{A'}$ and second 120$^{B'}$ photomultiplier detectors** provide for counting the corresponding number of photons associated with each of the disjoint sets of light reflected by the **digital micromirror device (DMD)** 114.

In operation, the third aspect of the **atmospheric measurement system 10,10$^{iii}$** first calibrates the **Fabry-Pérot etalon 78** by analyzing the **reference fringe pattern 197,** and then generates measures of *aerosol counts A, molecular counts M, velocity u, temperature* t, and *background* counts B from the **backscatter 196 and reference 197 fringe patterns** at one or more particular **nominal ranges R,** or as a function of **nominal range R,** by parsing the **backscatter fringe pattern 196** in accordance with the process illustrated in **FIG. 37** and described hereinabove, so as to separately analyze each **arcuate fringe 96'** of interest, but using the hereinabove methodology analyze the selected portions of the **backscatter 196 and reference 197 fringe patterns** by successively setting the associated **patterns 150, 150.1, 150.2, 150.3, 150.4, 150.5** of **pixel mirror rotationsl states 140, 142** for the subset of **micromirrors 126** illuminated by the selected portions of the **backscatter 196 and reference 197 fringe patterns** being analyzed at any given time, and setting the remaining **micromirrors 126** to the **third pixel mirror rotational state 312** so as to preclude that portion of the **backscatter 196 and reference 197 fringe patterns** from being detected, so as to determine the measures of *aerosol counts A, molecular counts M, velocity u*, *temperature t,* and *background counts B* responsive thereto, wherein the final results are processed in accordance with **steps (3712)-(3716)** of **FIG. 37** as described hereinabove. Accordingly, when analyzing the **reference fringe pattern 197,** the **micromirrors 126** not illuminated thereby are set to the **third pixel mirror rotational state 312** so that only light from the **reference fringe pattern 197** is then processed *in accordance with the methodology described hereinabove and illatstrated in FIGS. 13-28.* Furthermore, when analyzing the **backscatter fringe pattern 196,** the **micromirrors 126** not illuminated by the particular **arcuate fringe 96'** being analyzed at a particular time are set to the **third pixel mirror rotational state 312** so that only light from that particular **arcuate fringe 96'** is then processed in accordance with the methodology described hereinabove and illustrated in **FIGS. 13-28.**

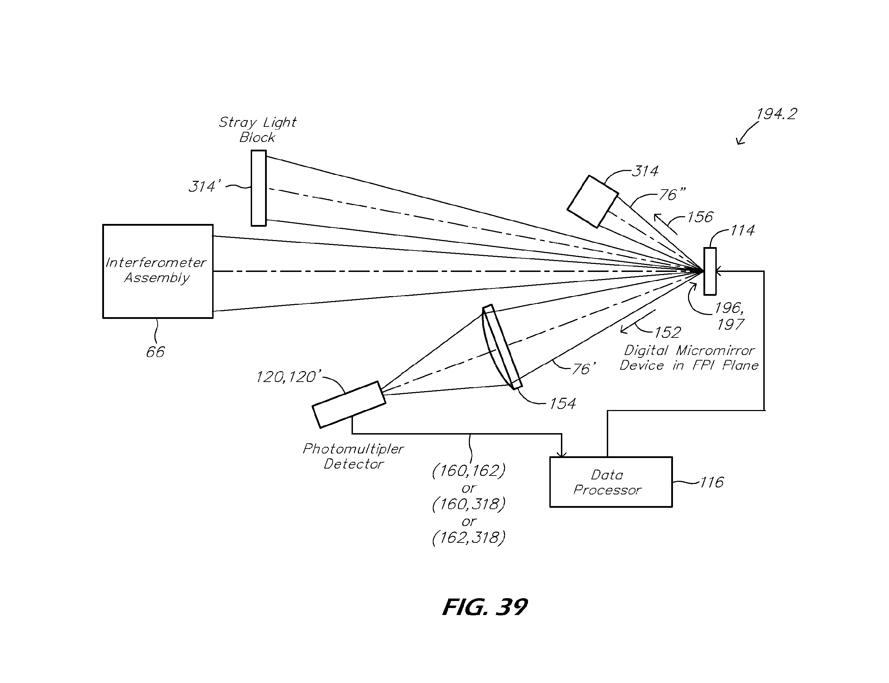

Referring to **FIG. 39,** in accordance with a second aspect, the detection system **194.2** is the same as for the first aspect of the **detection system 194.1,** except that the associated **digital micromirror device (DMD) 114** is adapted so that the associated **micromirrors 126** thereof are individually addressable and controllable to one of at least two possible associated **pixel mirror rotational states 140, 142.** The **micromirrors 126** of the associated array of **micromirrors 126** of the **digital micromirror device (DMD) 114** in the **first pixel mirror rotational state 140** cause the **first 76' and second 76" portions** of either the **backscatter fringe pattern 196** or the **reference fringe pattern 197** from the **Fabry-Pérot interferometer 66** impinging thereupon to be reflected in the **first direction 152** to the associated **first objective lens 154,** and to be directed thereby to the a **photodetector 120,** for example, a **photomultiplier detector 120'.**

In accordance with a first aspect of signal processing associated with the second aspect of the **detection system 194.2,** the **first 76'** and **second 76" portions** are sequentially reflected using different associated disjoint pixel mirror rotational states of the associated array of **micromirrors 126** of the **digital micromirror device (DMD) 114** at different times. Accordingly, the associated **complementary signals 160, 162** are sampled sequentially, rather than simultaneously - in contradistinction to the first aspect of the **detection system 194.2** for which the **complementary signals 160, 162** are sampled simultaneously. Accordingly, for each and every parameter, the **micromirrors 126** of the **digital micromirror device (DMD) 114** associated with the **first disjoint portion 94'** within the region being processed are set to the **first pixel mirror rotational state 140** at a first point in time to measure the **first complementary signal 160,** and the **micromirrors 126** of the **digital micromirror device (DMD) 114** associated with the **second disjoint portion 94"** within the region being processed are set to the **first pixel mirror rotational state 140** at a second point in time to measure the **second complementary signal 162.** During both the first and second points in time, the **micromirrors 126** of the associated array of **micromirrors 126** of the **digital micromirror device (DMD) 114** outside of the region being processed are set to the **second pixel mirror rotational state 142** so as to cause the remaining portion of either the **backscatter fringe pattern 196** or the **reference fringe pattern 197** from the **Fabry-Pérot interferometer 66** impinging thereupon to be reflected in the **second direction 156** to a **stray light block 314'** that provides for absorbing light impinging thereupon. An additional **stray light block 314'** is provided to receive stray light reflected from the **digital micromirror device (DMD) 114.** This process is repeated for each of the parameters being detected. Accordingly, a total of **2N** measurements are needed in order to identify **N** parameters using the first aspect of signal processing associated with the second aspect of the **detection system 194.2.**

In accordance with a second aspect of signal processing associated with the second aspect of the **detection system 194.2,** only **N+1** measurements are needed within each region of the **backscatter 196 and reference 197 fringe patterns** to identify N parameters associated with that region, wherein one of the measurements is of the light from the entire region, and the remaining **N** measurements are for one of the **disjoint portions 94' or 94"** associated with each of the parameters. The signals associated with the remaining **disjoint portions 94" or 94'** are then found for each parameter by subtracting the corresponding measurement for the one of the **disjoint portions 94' or 94"** from the corresponding measurement for the entire region.

Accordingly, the measurement of the entire region is made by setting the associated **micromirrors 126** of the **digital micromirror device (DMD) 114** to the **first pixel mirror rotational state 140** at a first point to make a measurement of the **total signal 318** from the light of that entire region. Then, for each parameter, as corresponding distinct points in time, the the **micromirrors 126** of the **digital micromirror device (DMD) 114** associated with either the **first 94' or second 94" disjoint portion** within the region being processed is set to the **first pixel mirror rotational state 140** at that point in time to measure the corresponding **first 160 or second 162 complementary signal.** While these measurements are being made, the **micromirrors 126** of the associated array of **micromirrors 126** of the **digital micromirror device (DMD) 114** outside of the region being processed are set to the **second pixel mirror rotational state 142** so as to cause the remaining portion of either the **backscatter fringe pattern 196** or the **reference fringe pattern 197** from the **Fabry-Perot interferometer 66** impinging thereupon to be reflected in the **second direction 156** to a **light block 314** that provides for absorbing light impinging thereupon. The remaining **second 162 or first 160 complementary signal** is then found by subtracting the measured **first 160 or second 162 complementary signal** from the **total signal 318,** for each of the **N** different parameters.

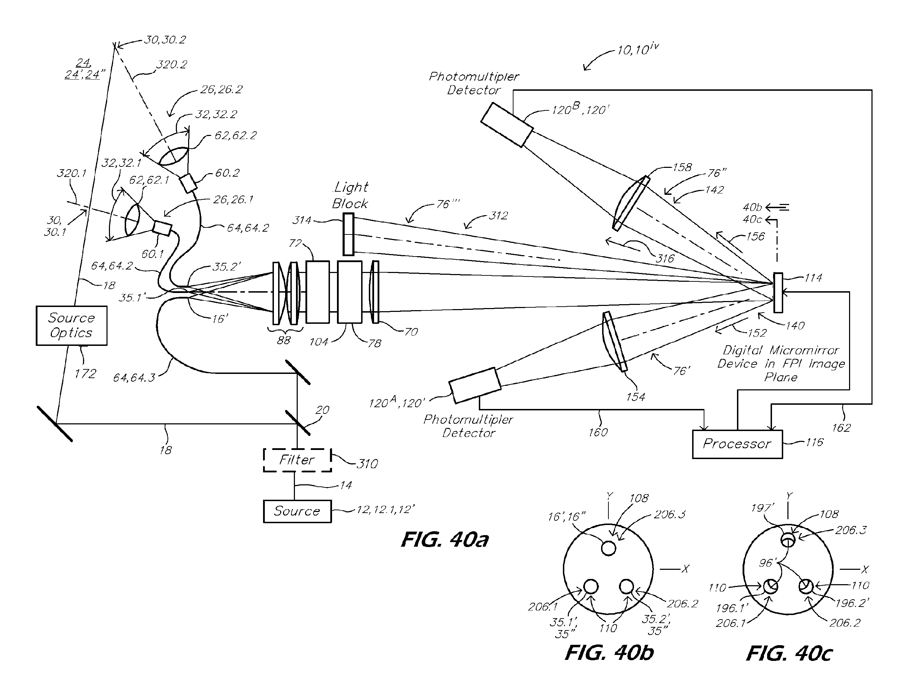

Referring to **FIGS. 40a-40c,** there is illustrated an fourth aspect of an **atmospheric measurement system 10, 10<sup>iv</sup>** that is substantially the same as the first aspect of the **atmospheric measurement system 10, 10<sup>i</sup>** illustrated in **FIGS. 1 and 9a-b,** as described hereinabove, except that the fourth aspect of an **atmospheric measurement system 10, 10<sup>iv</sup>** incorporates a plurality of **backscattered light signals 35'** from a plurality of associated **final light collecting elements 60.** In the embodiment illustrated in **FIGS. 40a-40c,** two **backscattered light signals 35', 35.1', 35.2'** from corresponding separate **final light collecting elements 60, 60.1, 60.2** associated with two separate **telescopes 26, 26.1, 26.2** along corresponding associated **lines of sight 320.1, 320.2** are directed to the **Fabry-Perot interferometer 66** by corresponding **fiber optics 64, 64.1, 64.2** as associated **backscatter signal channels 110** that are imaged in two corresponding **regions 206.1, 206.2** at the **output focal plane 66.2** of the **Fabry-Pérot interferometer 66** corresponding to the associated **images 35"** of the associated **backscattered light signals 35', 35.1', 35.2'.** The **Fabry-**

**Pérot interferometer 66** generates a **first backscatter fringe patterns 196.1'** at the **output focal plane 66.2** of the of the **Fabry-Pérot interferometer 66** from the **first backscattered light signal 35.1',** and generates a **second backscatter fringe pattern 196.2'** at the **output focal plane 66.2** of the of the **Fabry-Pérot interferometer 66** from the **second backscattered light signal 35.2'.** Similarly, the **reference beam 16** is also directed to the **Fabry-Pérot interferometer 66** as a **reference light signal 16'** by corresponding **fiber optic 64, 64.3** as an associated **reference channel 108** that is imaged in a corresponding **region 206.3** at the **output focal plane 66.2** of the **Fabry-Pérot interferometer 66** corresponding to an associated **image 16"** of the associated **reference light signal 16',** wherein the **Fabry-Pérot interferometer 66** generates a **reference fringe pattern 197'** at the **output focal plane 66.2** of the of the **Fabry-Pérot interferometer 66** from the **reference light signal 16'.**

For example, **FIG. 40b** illustrates the images of the **backscattered light signals 35', 35.1', 35.2'** and the **reference light signal 16'** at the **imaging plane 66.2** of the of the **Fabry-Pérot interferometer 66** absent the **Fabry-Pérot interferometer 66,** and **FIG. 40c** illustrates the resulting associated **first 196.1' and second 196.2' backscatter fringe patterns** and the **reference fringe pattern 197'** with the **Fabry-Pérot interferometer 66** in place.

In accordance with the fourth aspect of an **atmospheric measurement system 10, 10$^{iv}$** first calibrates the **Fabry-Pérot etalon 78** by analyzing the **reference fringe pattern 197',** and then generates measures of **line-of-sight relative wind velocity U, static temperature Temp, molecular counts MolCounts, aerosol counts AeroCounts,** and **background counts BackCounts** from the **backscatter 196.1', 196.2' and reference 197' fringe patterns,** as described hereinabove for the first aspect of an **atmospheric measurement system 10** to determine the measures of **line-of-sight relative wind velocity U, static temperature Temp, molecular counts MolCounts, aerosol counts AeroCounts,** and **background counts BackCounts** responsive thereto for each separate **backscatter fringe pattern 196.1', 196.2',** in accordance with either the first or second aspects of the associated **detections system 194.1, 194.2.**

More particularly, when analyzing the **reference fringe pattern 197',** the **micromirrors 126** not illuminated thereby are set to the **third pixel mirror rotational state 312** so that only light from the **reference fringe pattern 197'** is then processed according to the methodology described and illustrated hereinabove, either in accordance with either the first or second aspects of the associated **detections system 194.1, 194.2.** Furthermore, when analyzing the **first backscatter fringe pattern 196.1',** the **micromirrors 126** not illuminated thereby are set to the **third pixel mirror rotational state 312** so that only light from that particular **first backscatter fringe pattern 196.1'** is then processed according to the methodology described and illustrated hereinabove, either in accordance with either the first or second aspects of the associated **detections system 194.1, 194.2.** Finally, when analyzing the **second backscatter fringe pattern 196.2',** the **micromirrors 126** not illuminated thereby are set to the **third pixel mirror rotational state 312** so that only light from that particular **second backscatter fringe pattern 196.2'** is then processed according to the methodology described and illustrated hereinabove, either in accordance with either the first or second aspects of the associated detections **system 194.1, 194.2.**

The method of processing the **disjoint portions 94', 94"; 94.2', 94.2"** of the associated **circular fringe pattern 94** for associated **reference 108 and signal 110 channels** can also be applied in cooperation with other systems that provide for generating the associated **disjoint portions 94', 94"; 94.2', 94.2"** similar to that provided for by one or more **digital micromirror devices (DMD) 114** as described hereinabove, but without requiring a **digital micromirror device (DMD) 114.**

For example, in one embodiment, a Liquid Crystal Device (LCD), could be used to generate the associated **disjoint portions 94', 94"; 94.2', 94.2"** that are extracted from the associated underlying **circular fringe pattern 94** by controlling the pattern of transmission of associated pixels of the LCD provide for transmitting corresponding selected **disjoint portions 94', 94"; 94.2', 94.2"** at any given time. For example, this can be accomplished by replace one of the polarizers normally used in the LCD with a polarization selective beam splitter, wherein the beam splitter provides for a transmission of one polarization while reflecting the other polarization. The output of the LCD would then consist of the selected disjoint pattern and its compliment, one transmitted and the other reflected.

As another example, a Holographic Optical Element (HOE), could be fabricated that would direct the light from disjoint regions onto individual areas. A Holographic Optical Element (HOE) could be constructed that would focus the light from a ring for example onto a single small area where a detector could be located. Separate disjoint areas would direct the light to different detectors which would then be used to detect the light in each disjoint pattern.

As yet another example, micro-machined mirrors could be fabricated to focus the light in a selected pattern onto a particular region. Detectors located at those regions would then convert the light to an electrical signal that would be measured and processed.

As yet another example, individual masks could be moved into position to generate the disjoint patterns. These masks could be configured around the edge of a disk and the individual masks rotated into position or the masks could be arranged in a linear or two dimensional array, and either a linear or a pair of linear actuators could be used to move the selected masks into position.

Alternatively, the **disjoint portions 94', 94"; 94.2', 94.2"** can be extracted from an electronically captured image of the circular fringe pattern 94 electronic or software integration of the associated **disjoint portions 94', 94";**

**94.2', 94.2"** of the corresponding regions of the circular fringe pattern 94 to be processed corresponding to the associated **reference 108 and backscatter signal 110 channels.**

For example, referring to **FIGS. 41a-41e,** a fifth aspect of an **atmospheric measurement system 10, 10$^v$** is the substantially the same as the fourth aspect of the **atmospheric measurement system 10, 10$^{iv}$** illustrated in **FIG. 40a,** except for the incorporation of an additional of **backscatter signal channel 110** so as to provide for processing an additional **backscattered light signals 35', 35.3'** from an additional **interaction region 30, 30.3** within the **atmosphere 24,** for example, with all the a single common **second beam of light 18** projected into the **atmosphere 24.** More particularly, a **first interaction region 30.1** is defined by the intersection of the **second beam of light 18** with a **first field of view 32.1 of** an associated **first telescope 26.1** having a **first lens system 26.1'** in cooperation with a **first final light collecting element 60.1** that provides for looking along a **first line of sight 320.1** at the **second beam of light 18**; a **second interaction region 30.2** is defined by the intersection of the **second beam of light 18** with a **second field of view 32.2** of an associated **second telescope 26.2** having a **second lens system 26.2'** in cooperation with a **second final light collecting element 60.2** that provides for looking along a **second line of sight 320.2** at the **second beam of light 18;** and a **third interaction region 30.3** is defined by the intersection of the **second beam of light 18** with a **third field of view 32.3** of the **second telescope 26.2** and **second lens system 26.2'** in cooperation with a **third final light collecting element 60.3** that provides for looking along a **third line of sight 320.3** at the **second beam of light 18,** wherein the **third final light collecting element 60.3** is displaced from the associated **second final light collecting element 60.2** within the focal plane of the **second telescope 26.2.**

A **first fiber optic 64.1** directs the returned photons from the **first final light collecting element 60.1** as a **first backscattered light signal 35.1'** to a **first location 322.1** in a **first front focal plane 70.1** of the **collimating lens 70**; a **second fiber optic 64.2** directs the returned photons from the **second final light collecting element 60.2** as a **second backscattered light signal 35.2'** to a **second location 322.2** in the **first front focal plane 70.1** of the **collimating lens 70;** a **third fiber optic 64.3** directs the returned photons from the **third final light collecting element 60.2** as a **third backscattered light signal 35.3'** to a **third location 322.3** in the **first front focal plane 70.1** of the **collimating lens 70,** and a **fourth fiber optic 64.4** directs the returned photons from the **reference beam 16,** for example, as input thereto from an associated **graded index (GRIN) lens 324,** as a corresponding **reference light signal 16'** to a **fourth location 322.4** in the **first front focal plane 70.1** of the **collimating lens 70,** wherein the **first 322.1, second 322.2, third 322.3 and fourth 322.4 locations locations** are at different arbitrary radial and aziumthal locations relative to the optic axis of the **imaging optics 66** of the **Fabry-Pérot interferometer 66.** The **Fabry-Pérot interferometer 66** generates a **first backscatter fringe patterns 196.1'** at the **output focal plane 66.2** of the of the **Fabry-Pérot interferometer 66** from the **first backscattered light signal 35.1',** generates a **second backscatter fringe pattern 196.2'** at the **output focal plane 66.2** of the of the **Fabry-Perot interferometer 66** from the **second backscattered light signal 35.2',** and generates a **third backscatter fringe pattern 196.3'** at the **output focal plane 66.2** of the of the **Fabry-Pérot interferometer 66** from the **third backscattered light signal 35.3'** Similarly, the **Fabry-Pérot interferometer 66** generates a **reference fringe pattern 197'** at the **output focal plane 66.2** of the of the **Fabry-Pérot interferometer 66** from the **reference light signal 16'.**

For example, **FIG. 41b** illustrates the images of the **backscattered light signals 35', 35.1', 35.2', 35.3'** and the **reference light signal 16'** at the **imaging plane 66.2** of the of the **Fabry-Pérot interferometer 66** absent the **Fabry-Pérot interferometer 66,** and **FIG. 41c** illustrates the resulting associated **first 196.1', second 196.2' and third 196.3' backscatter fringe patterns** and the **reference fringe pattern 197'** with the **Fabry-Pérot interferometer 66** in place, at corresponding respective **regions 206.1, 206.2, 206.3 and 206.4** in the at the **output focal plane 66.2** of the **Fabry-Pérot interferometer 66** corresponding to the associated **images 35"** of the associated **backscattered light signals 35', 35.1', 35.2', 35.3'** and an associated **image 16"** of the associated **reference light signal 16',** respectively.

The **detection system 68** of the fifth aspect of an **atmospheric measurement system 10, 10$^v$** comprises a **CCD detection system 68' -** generally an electronic image capture device -- that provides for capturing an **image 326** of the **first 196.1', second 196.2' and third 196.3' backscatter fringe patterns** and the **reference fringe pattern 197'** from the **imaging plane 66.2** of the **Fabry-Pérot interferometer 66.**

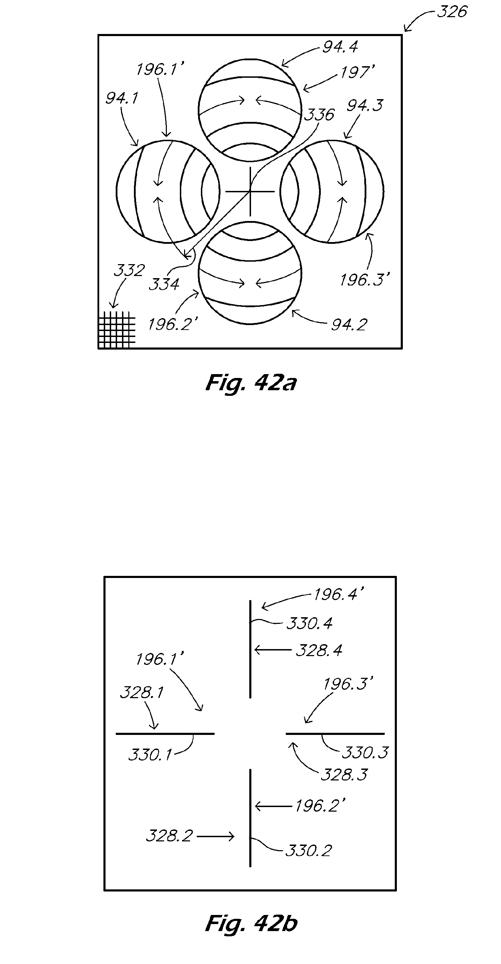

Referring to **FIGS. 42a and 42b,** this **image 326** is then processed to azimuthally compress each of the **first 196.1', second 196.2' and third 196.3' backscatter fringe patterns** and the **reference fringe pattern 197'** from a **circular fringe pattern 94** to a corresponding set of **linear fringe patterns 328.1, 328.2, 328.3 and 328.4** comprising corresponding **lines of binned pixels 330.1, 330.2, 330.3 and 330.4** that are then each separately further processed to determine the corresponding associated **disjoint portions 94', 94"** in accordance with the methodology described hereinabove and illustrated in **FIGS. 13-28,** for example, so as to provide for determining the corresponding **atmospheric data 200** for each of the associated **backscatter signal channels 110.** For example, as illustrated in **FIGS. 42a and 42b,** in one embodiment, this is accomplished with a circular binning algorithm implemented in software on the associated **data processor 116** operatively coupled to the associated **CCD detection system 68'** that provides for summing all **pixels 332** at a particular **radius 334** from the common **center 336** of the associated **circular fringe patterns 94.1, 94.2, 94.3 and 94.4** respectively corresponding to the **first 196.1', second 196.2' and third 196.3' backscatter fringe**

**patterns** and the **reference fringe pattern 197'.**

Each **pixel 332** is read from the **CCD detection system 68'** and converted by an A/D conversion process. The ratio of signal to read noise can be enhanced by increasing the exposure time of the **CCD detection system 68'** between read cycles, although at the cost of reduced dynamic frequency response of the associated resulting air data products. After identifying the **center 336** of the **circular fringe patterns 94.1, 94.2, 94.3 and 94.4,** the circular binning algorithm sums up the CCD charges (i.e. pixel values) for each **pixel 332** at a particular radius from the **center 336,** for a particular **circular fringe pattern 94.1, 94.2, 94.3, 94.4,** for each of the **circular fringe patterns 94.1, 94.2, 94.3 and 94.4,** so as to provide a respective associated **line of binned pixels 330.1, 330.2, 330.3, 330.4** for each of the respective **circular fringe patterns 94.1, 94.2, 94.3 and 94.4.**

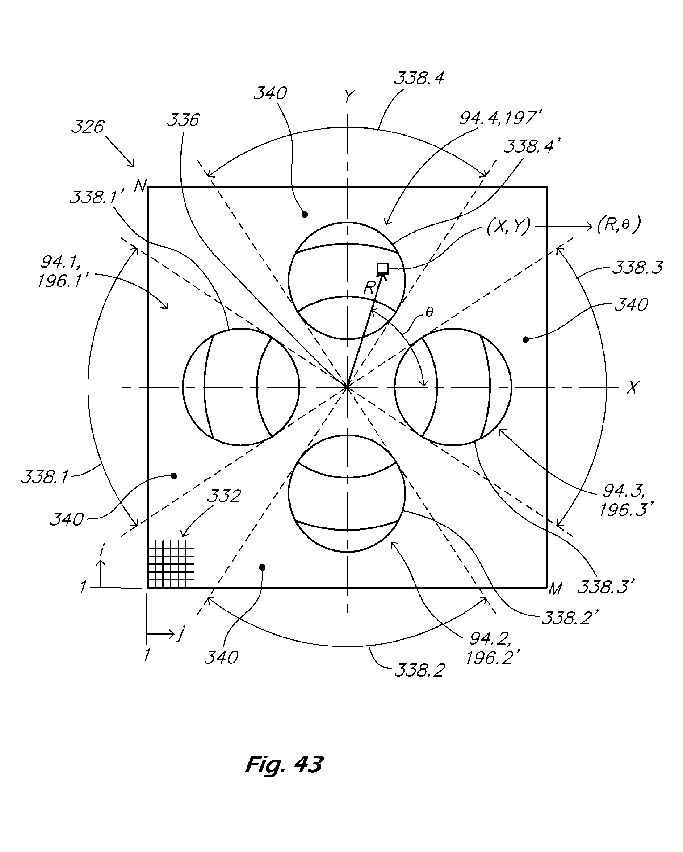

Referring to **FIG. 43,** an **image 326** of a set of **circular fringe patterns 94.1, 94.2, 94.3 and 94.4** comprises an array of N **rows** by **M columns** of **pixels 332,** each of which is captured by the **CCD detection system 68'** and stored in a **memory 118** of the associated **data processor 116** of the **atmospheric measurement system 10.** The **image 326** comprises four **regions of interest (ROI) 338.1, 338.2, 338.3 and 338.4,** each comprising a **segment 340** containing an associated **circular fringe pattern 94.1, 94.2, 94.3 and 94.4,** and centered about the common **center 336** of the **circular fringe patterns 94.1, 94.2, 94.3 and 94.4,** wherein the **center 336** of the **circular fringe patterns 94.1, 94.2, 94.3 and 94.4** is determined upon initial calibration or subsequent recalibration of the associated **atmospheric measurement system 10,** and is assumed to be stationary during the operation thereof. For example, the **center 336** may be determined by recording a substantial number, e.g. thousands, of **circular fringe patterns 94.1, 94.2, 94.3 and 94.4** and determining the location of the **center 336** -- by either iteration starting with an initial guess, or least squares or correlation with the coordinates of the **center 336** as unknowns to be determined -- that provides for a best fit of the recorded **circular fringe patterns 94.1, 94.2, 94.3 and 94.4** with a corresponding circular model thereof centered at the **center 336** of the **circular fringe patterns 94.1, 94.2, 94.3 and 94.4.**

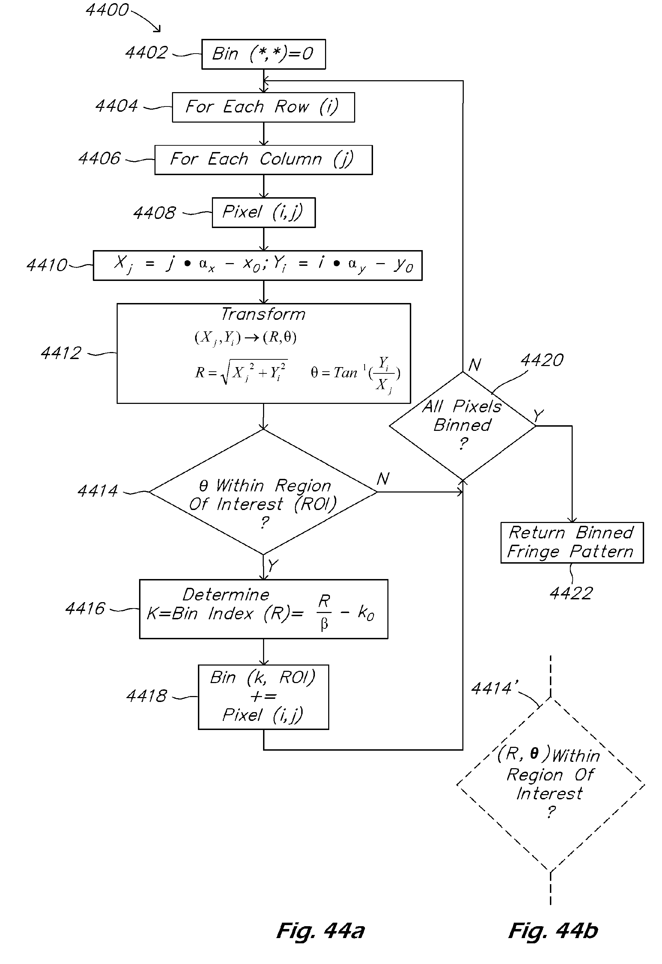

Referring to **FIG. 44a,** in accordance with a first embodiment of a **circular binning process 4400,** in step **(4402)** a **K x NROI bin array BIN(\*,\*) is** defined with storage for **NROI vectors** of **K elements** each to hold the circumferentially-binned values for each of the **NROI=4 circular fringe patterns 94.1, 94.2, 94.3 and 94.4,** and each value thereof is initialized to zero. Then, in steps **(4404)** and **(4406),** for each **row i** of the **N rows,** and for each **column j** of the **M columns,** of the **pixels 332** in the **image 326,** the value **Pixel(i,j)** of the **pixel 180** is read from the **image 200** in step **(4408),** and in step **(4410),** the corresponding **X and Y locations** thereof are calculated respectively as follows:

$$x_j = j \cdot \alpha_X - x_0$$
$$y_i = i \cdot \alpha_y - y_0 \tag{26}$$

wherein $\alpha_X$ and $\alpha_Y$ are the distances per pixel in the **X and Y directions,** respectively, and $x_0$ and $y_0$ are the coordinates of the **center 336** relative to **Pixel(1,1)** at the lower left corner of the **image 200.** Then, in step **(4412),** the **Cartesian coordinates ($x_j$, $y_i$)** from step **(4410)** are transformed to **cylindrical coordinates (R, $\theta$),** as follows:

$$R = \sqrt{x_j^2 + y_i^2}$$
$$\theta = Tan^{-1}\left(\frac{y_i}{x_j}\right) \tag{27}$$

Then, in step **(4414),** if the **angle** $\theta$ is within a *region of interest (ROI) 204.1, 204.2, 204.3 and 204.4,* the associated *region of interest ROI* is identified, and in step **(4416),** the **radial bin index k** is given by:

$$k = \frac{R}{\beta} - k_0 \tag{28}$$

where $\beta$ is the distance per pixel in the radial direction, and $k_0$ is the number of **pixels 332** between the **center 336** and the closest portion of the **circular fringe pattern 94.1, 94.2, 94.3 and 94.4** closest thereto. Then, in step **(4418),** the associated value **Pixel(i,j)** of the associated **pixel 180** is added to the **bin element BIN(k,ROI)** of the **bin array BIN(,)** as follows:

$$BIN(k, ROI) = BIN(k, ROI) + Pixel(i, j) \qquad (29)$$

Then, or otherwise from step **(4414),** in step **(4420),** if all of the **pixels 332** have been circumferentially binned, then, in step **(4422),** the circumferentially-binned values for each of the **circular fringe patterns 94.1, 94.2, 94.3 and 94.4** are returned in the associated **bin array BIN(*,NROI).** Otherwise, the process repeats with steps **(4404)** and **(4406)** for each of the rows and columns of **pixels 332** until all of the **circular fringe patterns 94.1, 94.2, 94.3 and 94.4** are binned.

Referring to **FIGS. 43 and 44b,** alternatively, **regions of interest (ROI) 338.1', 338.2', 338.3' and 338.4'** may be defined by the corresponding respective circular boundaries of the respective **circular fringe patterns 94.1, 94.2, 94.3 and 94.4,** in which case, step **(4414)** of the **circular binning process 4400** would be replaced by step **(4414'),** whereby the test as to whether a particular **pixel 332** was in a particular **regions of interest (ROI) 338.1', 338.2', 338.3' and 338.4'** would depend upon both **cylindrical coordinates (R, θ)** of the particular **pixel 332.**

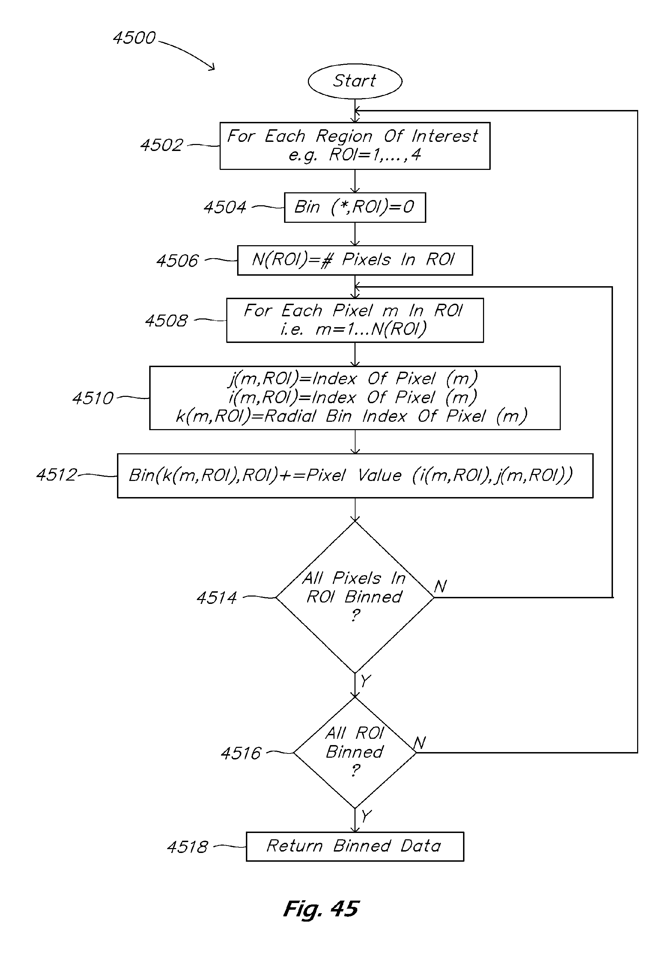

Referring to **FIG. 45,** in accordance with a second embodiment of a **circular binning process 4500,** rather than processing every **pixel 180** of the **image 200,** only those **pixels 180 in** predefined **regions of interest (ROI) 338.1', 338.2', 338.3' and 338.4'** are processed, wherein, for example, the **regions of interest (ROI) 338.1', 338.2', 338.3' and 338.4'** are defined by the corresponding respective circular boundaries of the respective **circular fringe patterns 94.1, 94.2, 94.3 and 94.4.** Beginning with step **(4502),** for each **regions of interest (ROI) 338.1', 338.2', 338.3', 338.4',** in step **(4504)** the associated **bin elements BIN(*,ROI)** are initialized to zero. Then, in step **(4506),** the number of **pixels 180** in the particular **region of interest (ROI) 338.1', 338.2', 338.3', 338.4'** is given by the predetermined value of **N(ROI).** Then in step **(4508),** for **pixel m** of the **N(ROI) pixels 180** in the particular **region of interest (ROI) 338.1', 338.2', 338.3', 338.4',** the corresponding **column j** and **row i** indexes for the particular **pixel 180,** corresponding to the associated **X and Y locations** thereof, are given in step **(4510)** by predetermined values from predetermined **index arrays j(m,ROI) and i(m,ROI)** respectively, and the corresponding **element k** of the associated **bin array BIN(*,ROI)** into which the particular **pixel 180 is** to be binned is given by the predetermined **index array k(m,ROI).** Accordingly, in step **(4512),** the **m$^{th}$ pixel 180** is binned into the **k$^{th}$ element** of the **bin array BIN(*,ROI)** as follows:

$$BIN(k(m, ROI), ROI) = BIN(k(m, ROI), ROI) + Pixel(i(m, ROI), j(m, ROI)) \qquad (30)$$

Then, in step **(4514),** if all of the **pixels m** in the particular **region of interest ROI** have not been binned, then the process continues with step **(4508).** Otherwise, in step **(4516),** if all of the **regions of interest (ROI) 338.1', 338.2', 338.3' and 338.4'** have not been binned, then the process continues with step **(4502).** Otherwise, in step **(4518),** the circumferentially-binned values for each of the **circular fringe patterns 94.1, 94.2, 94.3 and 94.4** are returned in the associated **bin array BIN(*,NROI).**

Alternatively, the **first 196.1', second 196.2' and third 196.3' backscatter fringe patterns** and the **reference fringe pattern 197'** from a **circular fringe pattern 94 may** be physically azimuthally compressed into the corresponding **linear fringe patterns 328.1, 328.2, 328.3 and 328.4** prior to image capture by the associated detection system 68 by using a circle-to-line Interferometer optic (CLIO) for each of the **first 196.1', second 196.2' and third 196.3' backscatter fringe patterns** and **reference fringe pattern 197'** to be compressed. For example, each **circle-to-line Interferometer optic (CLIO** may be constructed and operated in accordance with the teachings of U.S. Patent No. 4,893,003, and in accordance with the teachings of U.S. Patent No. 7,495,774, from line 22 at column 8 through line 50 at column 10 with reference to **FIGS. 8** through **15b** inclusive therein, and line 54 at column 29 through line 41 at column 30 with reference to **FIGS. 35** through **39** inclusive therein.

Further alternatively, a holographic optical element may be adapted to transform the **arcuate fringes 96'** into corresponding linear distributions of light, for example, in accordance with the teachings of U.S. Patent No. 6,613,908.

Each **telescope 26** comprises a **lens system 62,** and the **light signal 35** collected thereby is collected by the **final light-collecting element 60** thereof into a corresponding **fiber optic 64.2, 64.3, 64.4** that directs the returned photons to associated portions of a **Fabry-Pérot interferometer 66** and an associated **detection system 68 for** processing thereby. The **reference beam 16** from the **laser 12** and **beam splitter optic 20** is separately collected by a separate **final light-collecting element 60** into a **fiber optic 64.1** directed to a separate portion of the **Fabry-Pérot interferometer 66** and an associated **detection system 68 for** simultaneous processing thereby. For example, the **final light-collecting elements 60** of the **telescopes 26.1, 26.2 and 26.3,** and the **light-collecting element 302** for collecting the **reference beam 16,** may comprise either a GRIN lens or an aspheric lens. In one embodiment, the associated fibers of the four **fiber optics 64.1, 64.2, 64.3 and 64.4** are bundled together in a **fiber-optic bundle 64'** which operatively couples the **laser 12** and **optical head 22** to the **Fabry-Pérot interferometer 66.** The use of **fiber optics 64.1, 64.2, 64.3 and 64.4** and/or a **fiber-optic bundle 64'** provides for simplifying the alignment of the **Fabry-Pérot interferometer 66** with the **telescopes 26.1, 26.2 and 26.3** and with the **reference beam 16** from the **laser 12.** Furthermore a separate **fiber optic**

**64** may be used to operatively couple the **laser 12 to the optical head 22,** either directly from the output of the **laser 12** to the **optical head 22** -- the latter of which could be adapted in an alternative embodiment of an **optical head 22'** to incorporate the **first beam splitter optic 20.1,** -- or from the **first beam splitter optic 20.1** to the **optical head 22,** or both, so as to provide for flexibility in packaging the **optical head 22** in relation to the **laser 12,** which can be particularly beneficial for aircraft installations for which the **optical head 22** is installed proximate to the surface of the aircraft, so as to provide for mounting the **laser 12** in a more benign and stable environment within the aircraft. A **fiber optic 64** interconnecting the **laser 12** with the **optical head 22 also** provides for precise alignment of the associated **first laser beam 14** with the **optical head 22,** and simplifies associated installation and maintenance of the associated components thereof.

The associated **fiber optics 64, 64.1, 64.2, 64.3, 64.4** can be adapted as necessary to incorporate non-solarizing fibers so as to mitigate against degradation from relatively high-energy UV laser light which might otherwise solarize the associated fibers and thereby degrade associated fiber-optic transmission. Furthermore, the **fiber optic 64** from the **laser 12** to the **optical head 22** may comprise a bundle of associated fibers, each adapted to transmit a portion of the total light to be transmitted to the **optical head 22,** so as to reduce the energy density within each fiber of the bundle and thereby mitigate against the degradation thereof. For example, a beam expander may be used to enlarge the **first laser beam 14** so as to distribute the associated energy thereof amongst the plurality of associated fibers.

The **atmospheric measurement system 10** may be adapted with a plurality of different linearly independent **lines of sight 320** so as to provide obtaining associated vector air data products. For example, with three linearly independent **lines of sight 320, 320.1, 320.2 or 320.3,** for example, using three distinct associated **second laser beams 18, 18.1, 18.2, 18.3** or associated **beams of light 18', 18.1', 18.2', 18.3',** and three corresponding associated **telescopes 26, 26.1, 26.2 and 26.3** that collectively define associated **interaction regions 30** along each **second laser beam 18** or associated **beam of light 18',** the resulting **atmospheric data 200** from each **interaction region** 30 along each associated **line of sight 320** can be used in combination to determine a corresponding measurement of **relative wind velocity V** along any direction or a corresponding vector measurement of **relative wind velocity V**.

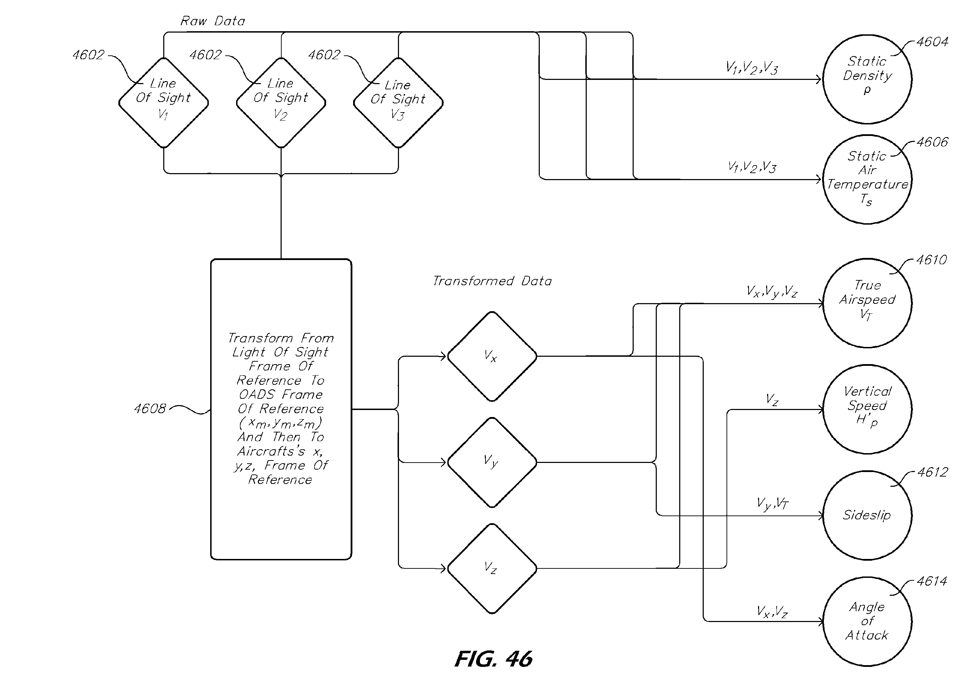

For example, referring to **FIGS. 12b and 46,** in accordance with a **first measurement process 4602,** the **relative wind velocity $V_1$, $V_2$ or $V_3$** is determined along a corresponding line-of-sight direction of the corresponding associated **field of view 32 of** the associated **telescope 26.1, 26.2 and 26.3** for each **line of sight 320.1, 320.2 or 320.3** from a difference between the centroids of the associated **circular fringe pattern 94.1, 94.2 or 94.3** associated with a corresponding **signal channel 110.1, 110.2 or 110.3 in** comparison with that of the **circular fringe pattern 94.4** associated with the **reference channel 108**. The fringe position relative to the **optic axis 100** is directly related to wavelength. Accordingly, a difference in wavelength between the **circular fringe patterns 94.1, 94.2 or 94.3** associated with a **signal channel 110.1, 110.2 or 110.3** and **circular fringe pattern 94.4** associated with the **reference channel 108 is** a direct measure of the molecular/aerosol Doppler shift in the **light 28** that is backscattered from the **atmosphere 24** responsive to either molecular or aerosol scattering. The **relative wind velocity $V_1$, $V_2$ or $V_3$** for each associated **signal channel 110.1, 110.2 or 110.3** is calculated by subtracting the associated **line-of-sight velocity** U observable from the corresponding **"line-of-sight velocity U"** observable of the **reference channel 108,** similarly so solved, so as to provide an associated calibrated **relative wind velocity $V_1$, $V_2$ or $V_3$**.

Referring to **FIGS. 12b and 46,** in accordance with a **second measurement process 4604,** the air density, i.e. **static density** ρ, is determined from an integral of the **molecular signal component 163.2, 165.2 of the **circular fringes 96** of the associated **circular fringe pattern 94.1, 94.2 or 94.3** associated with a **signal channel 110.1, 110.2 or 110.3.** The density of the **atmosphere 24** is related to molecular density, not aerosol density. Accordingly, the Rayleigh backscatter is separated from the Mie backscatter by spectrally resolving the backscattered light and de-convolving the spectrum into associated molecular and aerosol contributions, which provides for determining the density of the **atmosphere 24** from the associated molecular component responsive to the total number of photons therein, i.e. responsive to an integral of the molecular signal component in accordance with Rayleigh scattering theory. The denser the air is, the more molecules are present to scatter **light 28** back to the **telescope 26** for detection by the associated **detection system 68.** The **observables MolCounts** and **AeroCounts** inherently provides for a deconvolution of the spectrum into the associated molecular and aerosol contributions, i.e. **MolCounts** is responsive to the integral of the molecular contribution, and **AeroCounts** is responsive to the integral of the aerosol contribution. Accordingly, static density is given by ρ = **C·MolCounts,** wherein *C* is an empirically determined constant that depends upon the parameters that define the **atmospheric measurement system 10,** i.e. the laser power, interaction region, the transmission of the system, the gain of the detectors, the size of the telescope, and the coefficient of backscatter from the atmospheric molecules.

Referring to **FIGS. 12b and 46,** in accordance with a **third measurement process 4606,** the absolute temperature, i.e. **static temperature $T_S$,** of the **atmosphere 24** is determined from a width of the **molecular signal component 163.2, 165.2** of the **circular fringes 96** of the associated **circular fringe pattern 94.1, 94.2 or 94.3** associated with a **signal channel 110.1, 110.2 or 110.3.** The temperature of the **atmosphere 24** affects the random thermal motions of the constituent molecules, which causes an associated thermal broadening -- referred to as "Doppler broadening" in the field of spectroscopy because of the random velocities in all directions of an ensemble of molecules -- of the spectrum of the associated scattered radiation, thereby increasing the associated signal bandwidth which produces correspondingly wider fringes in the associated **circular fringe pattern 94.1, 94.2 or 94.3** from the **Fabry-Pérot interferometer 66.** The absolute temperature of the **atmosphere 24** is directly related to this signal bandwidth, and is directly determined as the **observable temperature *t*.**

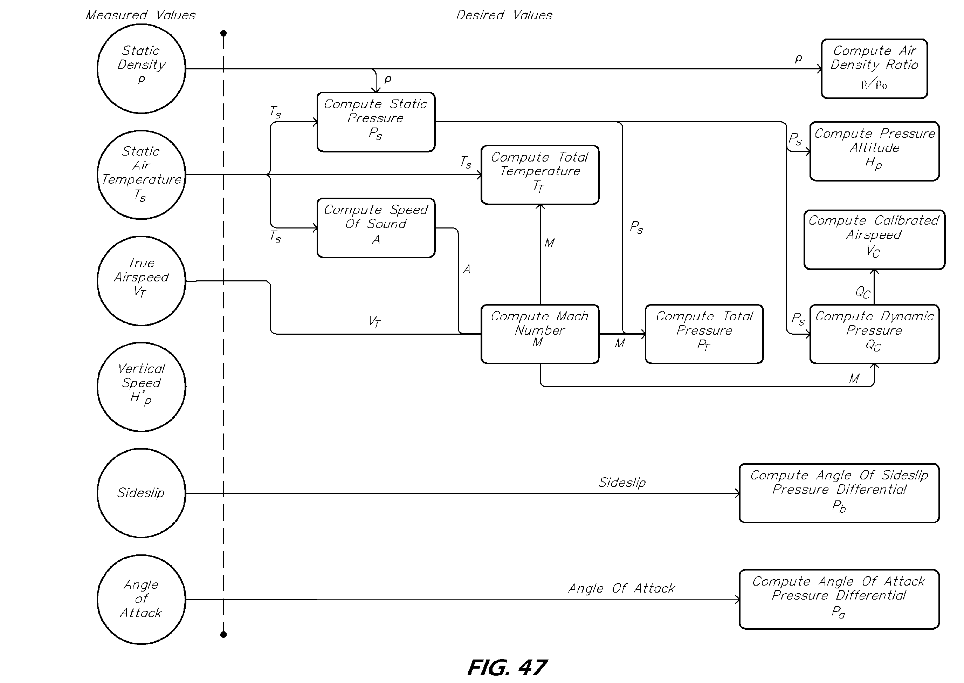

Referring to **FIG. 46,** for the example of an air data system in an **aircraft 400,** various other measured air data products may be calculated as follows: In accordance a **fourth measurement process 4608,** the **relative wind velocities $V_1$, $V_2$ and $V_3$** determined by the **first measurement process 4602** along corresponding line-of-sight directions of the corresponding associated **field of view 32** of the associated **telescope 26.1, 26.2 and 26.3** for each **lines of sight 320.1, 320.2 or 320.3** are first transformed from a line-of-sight frame of reference to a **frame of reference ($x_m$, $y_m$ and $z_m$)** of the **atmospheric measurement system 10,** and then to a **frame of reference (x, y, z)** of the **aircraft 400** using known transformations, so as to provide the **relative wind velocities $V_X$, $V_Y$ and $V_Z$** in the **frame of reference (x, y, z)** of the **aircraft 400,** from which the **true airspeed $V_T$** may be calculated from the **relative wind velocities $V_X$, $V_Y$ and $V_Z$** in accordance with a **fifth measurement process 4610.** The **vertical speed $H'_P$** is given by the **Z-component of relative wind velocity $V_Z$.** The **sideslip** may be calculated from the **Y-component of relative wind velocity $V_Y$** and the **true airspeed $V_T$** in accordance with a **sixth measurement process 4612.** The **angle of attack** may be calculated from the **X and Z-components of relative wind velocity $V_X$ and $V_Z$** in accordance with a **seventh measurement process 4614.** The **Aerosol-to-Total Scattering Ratio (ASR)** may also be calculated as the ratio of the **observable AeroCounts** to the sum of the **observables MolCounts, AeroCounts** and **BackCounts.** Referring to **FIG. 47,** the measured values of **static density** $\rho$, **static temperature $T_S$, true airspeed $V_T$, sideslip** and **angle of attack** may then be used to compute the following derived values using associated known relations and processes: air density ratio, static pressure, total pressure, pressure altitude, total temperature, speed of sound, Mach number, dynamic pressure, calibrated airspeed, angle of sideslip pressure differential, and angle of attack pressure differential.

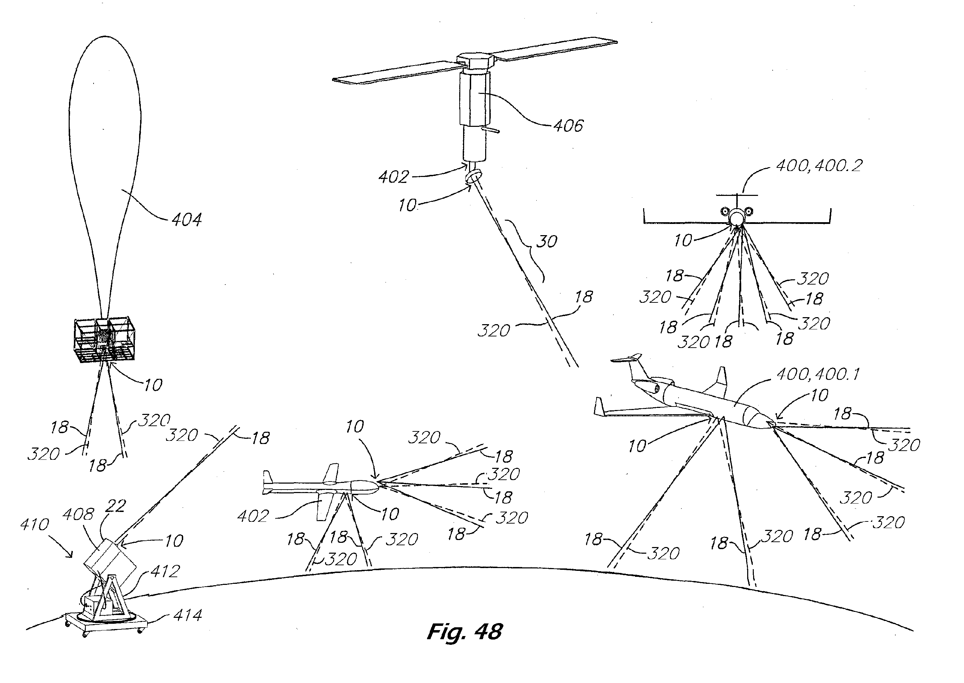

Referring to **FIG. 48,** various **atmospheric measurement systems 10, $10^i$, 10", $10^{iii}$, $10^{iv}$, $10^v$** can be used in a variety of applications, including flight control or flight data monitoring, for example, for an **aircraft 400** or **UAV 402;** or monitoring atmospheric or weather conditions from an **aircraft 400.1, 400.2, UAV 402, balloon 404, satellite 406,** or **ground-based LIDAR system 408.**

For example, the **aircraft 400, 400.1** and **UAV 402** illustrated in **FIG. 48** each incorporate a*n atmospheric measurement system 10* that incorporates three **lines of sight 320** so as to provide for measuring an associated relative wind vector in addition to other air data products. Generally the **atmospheric measurement system 10** can be adapted for airframe applications which, for example, might otherwise incorporate a pitot-static tube for measuring air speed. In addition to air speed, the **atmospheric measurement system 10** provides for optically measuring, or calculating from optical measurements, a substantial quantity of air data products, and can be adapted to detect wind shear, wake vortices, clear air turbulence, and engine stall (unstart) conditions. Common air data products include, but are not limited to, Mach number, true airspeed, calibrated airspeed, vertical speed, static density, static air temperature, sideslip, angle of attack, pressure altitude, and dynamic pressure. The air data products can be used directly by an aircraft flight computer for flight control purposes. The **atmospheric measurement system 10** provides for an airframe-independent design that can be flush-mounted to the skin of the airframe, e.g. without protrusions that otherwise might increase the airframe's radar cross section and drag, so as to provide for relatively low observability and drag. The **atmospheric measurement system 10** can operate at substantial angles of attack. For example, a properly-configured **atmospheric measurement system 10** can operate at a *90* degree angle of attack. The **atmospheric measurement system 10** can be adapted to a variety of airframes, for example, including highly maneuverable aircraft and hoverable aircraft. The **atmospheric measurement system 10** provides for an airframe-independent design that can be relatively inexpensive to calibrate, recalibrate or service.

As another example, the **aircraft 400, 400.1, 400.2, UAV 402,** and **balloon 404** illustrated in **FIG. 48** each incorporate an **atmospheric measurement system 10** adapted with a plurality of **lines of sight 320,** so as to provide for substantially simultaneously measuring air data products from one or more *interaction regions 30* along each of the associated **lines of sight 320.** For example, the **first aircraft 400.1** incorporates two **lines of sight 320** distributed transversely with respect to the associated direction of travel thereof, and the **second aircraft 400.2** incorporates five **lines of sight 320** distributed transversely with respect to the associated direction of travel thereof, so as to provide for automatically acquiring a substantial amount of atmospheric data (e.g. density, temperature and wind velocity) that can be used for either monitoring or predicting weather, or for monitoring particular emissions into the atmosphere. In accordance with another embodiment, the **UAV 402** is illustrated with **lines of sight 320** substantially along the direction of travel thereof, which can provide for automatically acquiring a substantial amount of atmospheric data (e.g. density, temperature and wind velocity) that, for example, can be used for either monitoring or predicting weather dynamics, or for monitoring the dynamics of particulate emissions into the atmosphere. Generally, the orientation of the plurality of **lines of sight 320** relative to the associated vehicle or the associated direction of travel thereof is not limiting, i.e. either other orientations or a combination of orientations may be used.

As yet another example, the **satellite 406** and the **ground-based LIDAR system 408** illustrated in **FIG. 48** each incorporate an **atmospheric measurement system 10** adapted with a **line of sight 320** that is directed respectively downwards or upwards into the atmosphere so as to provide for measuring air data products from one or more **interaction regions 30** along each of the associated one or more **lines of sight 320**, for example, so as to provide for automatically acquiring a substantial amount of atmospheric data (e.g. density, temperature and wind velocity) that can be used for either monitoring or predicting weather, or for monitoring particular emissions into the atmosphere.

As yet another example, the **ground-based LIDAR system 408** and associated **atmospheric measurement system 10** may be operatively associated with a **gimbal mechanism 410** comprising an **azimuthally-rotatable platform 412** which is adapted to pivotally support an associated **optical head 22** so as to provide for an elevational rotation thereof relative a **base 414** to which the **azimuthally-rotatable platform 412** is operatively associated. Accordingly, the **azimuthally-rotatable platform 412** is adapted to rotate relative to the **base 414,** for example, responsive to an associated motor drive system, so as to define an associated azimuth angle of the **optical head 22,** and the **optical head 22** is adapted to rotate relative to the **azimuthally-rotatable platform 412,** for example, responsive to an associated motor drive system, so as to define an associated elevation angle of the **optical head 22**.

The **atmospheric measurement system 10** could be applied to the detection of Clear Air Turbulence, Optical Air Data systems, Atmospheric Aerosol Characterization, Smog detection and Chemical/Biological Agent detection. An air data system that employs the **atmospheric measurement system 10** could be used for Field Artillery Fire Direction Control, Small Arms Wind correction, Airport Turbulence Monitoring and Ship Navigation velocity/weather monitoring. This system would be very useful in predicting winds for any sporting events in which micro-scale airflow plays a significant role such as golf, football, baseball, etc. This system would also be useful for Wind Farm Site Assessment, Wind Farm Monitoring, and Wind Turbine control.

For example, in application to artillery, the **atmospheric measurement system 10** can be mounted on a vehicle or carried by an operator to a location from which artillery is to be fired. The **atmospheric measurement system 10** would then measure atmospheric parameters such as wind speed, wind direction, temperature, density, and pressure in the atmospheric volume through which the projectile will be fired. These are the standard inputs to contemporary fire direction control systems in use by the military, for example, as described in FM 6-40/MCWP 3-16.4 Tactics, Techniques, and Procedures for FIELD ARTILLERY MANUAL CANNON GUNNERY (Field Manual).

By accounting for these atmospheric parameters along the projectile's flight path, the circular error probable (CEP) can be reduced and accuracy improved.

As another example, in application to sailing ships, the **atmospheric measurement system 10** can be used to provide measures of wind speed, wind direction, temperature, density, pressure, or the associated wind field around the ship, for ships that obtain their propulsion from the wind. For example, racing yachts such as used in the America's Cup, can benefit from knowing the winds near their ship as well as the winds near their competition. This information can be used to provide for trimming sails, deploying wings or aerodynamic propulsion devices, or planning trajectories so as to take maximum advantage of the current wind conditions. Recreational users can similarly use information about the winds blowing in the region near their craft.

As yet another example, in application to sporting events, the **atmospheric measurement system 10** can provide information about the local winds so as to enable participants to adapt accordingly. For example, a golf player can compensate for or take advantage of local winds, given information about how the wind is blowing over the entire flight path of the ball, or if a wind gust was approaching or would soon dissipate, so as to enable the golfer to either adjust their shot according, or to wait for better conditions. Even if the wind information is not available to the individual players, it would be of benefit to broadcasters in showing the viewing audience a graphic of the winds, a trajectory of the ball, and how the winds affected a particular shot. The **atmospheric measurement system 10** can also be of benefit in other sporting venues, such as baseball or football, for example, so as to enable broadcasters to illustrate how a baseball might have been held up by the winds in the stadium, or to show how winds had impacted a pass, punt or field goal in football, to as to enhance the viewing experience for fans. Given information about the winds in the stadium, players could adjust their actions accordingly, for example, when hitting a fly ball or kicking a field goal.

As yet another example, in application to the control of wind-induced building sway, the **atmospheric measurement system 10** can provide advance information about the wind field of a building so as to provide for wind-responsive or wind-anticipative control of tall buildings that are otherwise subject to sway in strong winds. Most modern tall buildings incorporate some form of damping to control how much the building sways in strong winds. The **atmospheric measurement system 10** can provide a predictive component (feed forward) to the associated control loops, so as to provide for improving the performance of these damping systems.

As yet another example, in application to road safety, the **atmospheric measurement system 10** can be used to monitor the wind fields that affect bridges, so as either to provide for an active control of the bridge structure responsive thereto, or to provide for controlling or limiting traffic over the bridge. Similarly, the **atmospheric measurement system 10** can be used to monitor wind conditions along roads in zones where high winds regularly pose a danger to travelers, and provide a real-time alert to motorists who are about to enter these zones. The **atmospheric measurement system 10** can be used to detect the presence of fog in fog-prone road zones, and to alert motorists of the presence of fog in advance of entering these zones.

As yet another example, in application to the control and/or dispersal of air pollution, the **atmospheric measurement system 10** can be used in a portable wind measuring system so as to enable responsible parties to more accurately predict where airborne pollution is headed as well as assisting in the assessment how much the pollution is being dispersed or diluted. Local wind mapping along with temperature and pressure measurements would provide input to models for prediction of the Nominal Hazard Zone even when there are no visible aerosols to define the plume.

As yet another example, the **atmospheric measurement system 10** can be used in a wind tunnel to provide for range resolved airflow measurements within the wind tunnel that can provide density and temperature as well as velocity of the air flow within the wind tunnel at a point, along a line, or within a volume of the wind tunnel, without perturbing the associated flow field, wherein the wind tunnel is used to measure how airflow interacts with the objects being tested therein.

As yet another example, the **atmospheric measurement system 10** can be used at an airport to enhance airport safety, for example, by providing for detecting clear air turbulence resulting from large aircraft taking off or landing, and to also provide measures of air temperature and density that can affect the lift, and hence performance, of aircraft operating at that airport.

As yet another example, the **atmospheric measurement system 10** can be used to enhance aircraft safety, for example, by providing for mapping the winds in the vicinity of an aircraft and thus providing the pilot with information that is difficult at best to obtain with other means. For example, in a roto-craft, the **atmospheric measurement system 10** can provide wind information outside of the rotor down wash so as to aid the pilot in maintaining hover in gusty wind conditions. In a conventional fixed-wing aircraft, the **atmospheric measurement system 10** can provide a measure of cross winds during landing or takeoff, and can be used to detect clear air turbulence during flight. In a sail-plane aircraft, the **atmospheric measurement system 10** can provide a measure of the wind field within which the aircraft is operating, and can provide assistance in locating updrafts in order to stay aloft. The **atmospheric measurement system 10** provides for measuring wind speed, air temperature and air density, which, for example, for purposes of landing, might not be otherwise be available at some airfields.

As yet another example, a **atmospheric measurement system 10** can be used support airdrops, for example, by either monitoring the wind field below from the aircraft making the drop so as to determine when to drop the payload, or by monitoring the wind field aloft with a **atmospheric measurement system 10** mounted on the payload so as to provide for adjusting the associated parachute during descent so as to provide for controlling the resulting drop location so that the payload is deposited closer to the desired drop zone than might otherwise be possible. Alternatively, the wind field could be monitored from above by an associated aircraft, and the resulting measurements could then be communicated to the payload to provide for controlling one or more associated parachutes or drag chutes accordingly so as to control the resulting drop location.

As yet another example, a **atmospheric measurement system 10** can be used to characterize the atmosphere. A **atmospheric measurement system 10** can be used to provide range resolved measures of velocity, temperature, and density of the *atmosphere 16* that can be used by meteorologists and/or by atmospheric scientists, for example, so as to provide for predicting or analyzing the weather.

As yet another example, a **atmospheric measurement system 10** can be used on ocean platforms, for example, oil drilling and production platforms, so as to provide range resolved measures of wind speed and direction, for example, to provide for landing helicopters, to control the location of the platform on the ocean, or to provide a warning for general platform operations in advance of the occurrence of high winds or wind gusts.

Although the **atmospheric measurement systems 10, 10^i, 10^ii, 10^iii, 10^iv, 10^v** described herein have each incorporated a **Fabry-Pérot interferometer 66,** it should be understood that any type of interferometers could instead also be used, for example, including but not limited to either a Michelson interferometer and associated variations thereof, a Twyman-Green interferometer or a Fizeau interferometer.

While specific embodiments have been described in detail in the foregoing detailed description and illustrated in the accompanying drawings, those with ordinary skill in the art will appreciate that various modifications and alternatives to those details could be developed in light of the overall teachings of the disclosure. It should be understood, that any reference herein to the term "or" is intended to mean an "inclusive or" or what is also known as a "logical OR", wherein the expression "A or B" is true if either A or B is true, or if both A and B are true. Furthermore, it should also be understood that unless indicated otherwise or unless physically impossible, that the above-described embodiments and aspects can be used in combination with one another and are not mutually exclusive. Accordingly, the particular arrangements disclosed are meant to be illustrative only and not limiting as to the scope of the invention, which is to be given the full breadth of the appended claims, and any and all equivalents thereof.

**Claims**

1. A method of processing a fringe pattern from a Fabry-Perot interferometer (66) , comprising: generating at least one portion of a circular fringe pattern with a Fabry-Perot interferometer responsive to at least one light signal incident thereupon, wherein said at least one portion of said circular fringe pattern is formed of light from said at least one light signal;
said method chararacterised by further comprising:

imaging said at least one portion of said circular fringe pattern from said Fabry- Perot interferometer onto a digital micromirror device (114), wherein said digital micromirror device (114) comprises a plurality of micromirrors (126) arranged in an array, wherein each micromirror of said plurality of micromirrors constitutes a pixel that can be rotationally positioned to a plurality ; of different pixel-mirror rotational states, and each pixel-mirror rotational state of said plurality of different pixel- mirror rotational states corresponds to a particular associated rotational position of said micromirror;
processing said at least one portion of said circular fringe pattern, comprising: i. setting said pixel-mirror rotational state of each of said plurality of micromirrors of said array so as to form at least one pattern of associated pixel-mirror rotational states at a corresponding at least one point in time, wherein each said at least one pattern of associated pixel-mirror rotational states comprises a plurality of subsets of said plurality of micromirrors, wherein for each subset of said plurality of subsets, each said micromirror of said subset is set to a common said pixel-mirror rotational state, and said micromirrors of different said subsets are set to different said pixel-mirror rotational states; ii. for each said subset of said plurality of micromirrors, reflecting from said plurality of micromirrors of said subset of said plurality of micromirrors a corresponding portion of said light of said at least one portion of said circular fringe pattern, wherein different corresponding portions of said light corresponding to different said subsets of said plurality of micromirrors are reflected in different directions in accordance with said pixel-mirror rotational state associated with said subset of said plurality of micromirrors; iii. for each of a plurality of said subsets of said plurality of micromirrors, detecting said corresponding portion of said light reflected from each said subset of said plurality of micromirrors at said at least one point in time, wherein the operation of detecting said corresponding portion of said light comprises either a) separately detecting different said corresponding portions of said light for a common said pattern of associated pixel-mirror rotational states, wherein said different said corresponding portions of said light are relatively disjoint with respect to one another and collectively constitute a set of disjoint portions of said light, and the operation of separately detecting said different said corresponding portions of said light provides for generating a corresponding set of complementary detected signals; OR b) sequentially detecting different said corresponding portions of said light for different said patterns of associated pixel-mirror rotational states at different points in time, wherein said different said corresponding portions of said light are relatively disjoint with respect to one another and collectively constitute a set of disjoint portions of said light, and the operation of detecting different said corresponding portions of said light provides for generating a corresponding set of complementary detected signals; iv. processing said corresponding set of complementary detected signals so as to provide for characterizing said at least one light signal incident upon said Fabry-Perot interferometer.

2. A method of processing a fringe pattern from a Fabry-Perot interferometer as recited in claim 1, wherein the operations of setting said pixel-mirror rotational states, reflecting from said plurality of micromirrors and detecting said corresponding portion of said light for each of said subset of said plurality of subsets of said plurality of micromirrors are repeated for a plurality of sets of said disjoint portions of said light so as to generate a corresponding plurality of sets of said complementary detected signals, wherein said plurality of sets of said disjoint portions of said light are algebraically spatially independent with respect to one another; and the operation of processing said corresponding set of complementary detected signals is performed for said corresponding plurality of sets of said complementary detected signals so as to provide for characterizing said at least one light signal incident upon said Fabry-Perot interferometer.

3. A method of processing a fringe pattern from a Fabry-Perot interferometer as recited in claim 1, wherein said at least one light signal comprises a plurality of light signals that are incident upon different portions of a Fabry-Perot etalon of said Fabry-Perot interferometer, the operation of generating said at least one portion of said circular fringe pattern comprises generating a plurality of different portions of said circular fringe pattern, wherein each different portion of said plurality of different portions of said circular fringe pattern is generated for a corresponding different said light signal of said plurality of light signals, and the operation of processing said at least one portion of said circular fringe pattern is performed separately for different said different portions of said circular fringe pattern.

4. A method of processing a fringe pattern from a Fabry-Perot interferometer as recited in claim 1, wherein for each said set of disjoint portions of said light, said at least one pattern of associated pixel-mirror rotational states comprises a corresponding single pattern of associated pixel-mirror rotational states corresponding to said set of disjoint portions of said light, wherein said corresponding single pattern of associated pixel- mirror rotational states comprises:

a. a first subset of said plurality of micromirrors in a first pixel-mirror rotational state, wherein said first subset of said plurality of micromirrors provides for reflecting a first portion of said light in a first direction; and

b. a second subset of said plurality of micromirrors in a second pixel-mirror rotational state, wherein said second subset of said plurality of micromirrors provides for reflecting a second portion of said light in a second direction different from said first direction; and

the operation of separately detecting said different said corresponding portions of said light comprises separately detecting said first and second portions of said light.

5. A method of processing a fringe pattern from a Fabry-Perot interferometer as recited in claim 1, wherein the operation of sequentially detecting different said corresponding portions of said light for different said patterns of associated pixel-mirror rotational states at said different points in time comprises:

a. setting said pixel-mirror rotational state of each of said plurality of micromirrors of said array so as to form a first said pattern of associated pixel-mirror rotational states at a corresponding first point in time, wherein said first said pattern of associated pixel-mirror rotational states comprises a first subset of said plurality of micromirrors, wherein each said micromirror of said first subset of said plurality of micromirrors is set to a common first pixel-mirror rotational state;

b. reflecting from said plurality of micromirrors of said first subset a corresponding first portion of said light of a first portion of said circular fringe pattern in a first direction in accordance with said common first pixel-mirror rotational state associated with said first subset of said plurality of micromirrors;

c. detecting said corresponding first portion of said light reflected from said first subset of said plurality of micromirrors with said plurality of micromirrors of said array set in accordance with said first said pattern of associated pixel-mirror rotational states so as to generate a corresponding first detected signal of said corresponding set of complementary detected signals;

d. setting said pixel-mirror rotational state of each of said plurality of micromirrors of said array so as to form a second said pattern of associated pixel-mirror rotational states at a corresponding second point in time, wherein said second said pattern of associated pixel-mirror rotational states comprises a second subset of said plurality of micromirrors, wherein each said micromirror of said second subset of said plurality of micromirrors is set to said common first pixel-mirror rotational state;

e. reflecting from said plurality of micromirrors of said second subset a corresponding second portion of said light of said first portion of said circular fringe pattern in said first direction in accordance with said common first pixel-mirror rotational state associated with said second subset of said plurality of micromirrors; and

f. detecting said corresponding second portion of said light reflected from said second subset of said plurality of micromirrors with said plurality of micromirrors of said array set in accordance with said second said pattern of associated pixel-mirror rotational states so as to generate a corresponding second detected signal of said corresponding set of complementary detected signals, wherein said corresponding first and second portions of said light collectively constitute said set of disjoint portions of said light.

6. A method of processing a fringe pattern from a Fabry-Perot interferometer as recited in claim 1, wherein said at least one light signal comprises either a reference light signal or at least one backscatter light signal, or both, associated with an atmospheric measurement system, wherein said reference light signal is derived from a light source, and said at least one backscatter light signal is received from light of said light source that had been projected into an atmosphere and backscattered therefrom.

7. A method of processing a fringe pattern from a Fabry-Perot interferometer as recited in claim 1, wherein said set of said disjoint portions of said light constitutes first and second portions of a corresponding light signal of said at least one light signal reflected from respective first and second subsets of said plurality of micromirrors in accordance with an effective pattern of said plurality of micromirrors of said digital micromirror device (DMD), said effective pattern is responsive to at least one function related to an optical response underlying said at least one portion of said circular fringe pattern, and said at least one function is responsive to at least one parameter.

8. A method of processing a fringe pattern from a Fabry-Perot interferometer as recited in claim 1, wherein said set of said disjoint portions of said light constitutes first and second portions of a corresponding light signal of said at least one light signal reflected from respective first and second subsets of said plurality of micromirrors in accordance with an effective pattern of said plurality of micromirrors of said digital micromirror device (DMD), and said effective pattern is defined responsive to a method comprising:

    a. defining a first function providing a model of an optical response underlying said at least one portion of said circular fringe pattern, wherein said first function incorporates at least one parameter that provide for characterizing said at least one light signal;

    b. defining a second function responsive to a partial derivative of said first function with respect to one said at least one parameter, wherein said first and second functions are each dependent upon a variable associated with a radial dimension of said at least one portion of said circular fringe pattern relative to said digital micromirror device (DMD); and

    c. defining said effective pattern by associating said first subset of said plurality of micromirrors with a first set of locations on said digital micromirror device (DMD) for which said second function exceeds a first threshold value, and associating said second subset of said plurality of micromirrors with a second set of locations on said digital micromirror device (DMD) for which said second function is less than a second threshold value;

    d. wherein the operation of processing said corresponding set of complementary detected signals provides for determining a value of said at least one parameter responsive to said corresponding set of complementary detected signals.

9. A method of processing a fringe pattern from a Fabry-Perot interferometer as recited in claim 1, wherein said set of said disjoint portions of said light constitutes first and second portions of a corresponding light signal of said at least one light signal reflected from respective first and second subsets of said plurality of micromirrors in accordance with an effective pattern of said plurality of micromirrors of said digital micromirror device (DMD), and said effective pattern is defined by associating said first subset of said plurality of micromirrors with a first plurality of locations on said digital micromirror device (DMD) for which a radius relative to a center of said circular fringe pattern exceeds a first threshold value, and associating said second subset of said plurality of micromirrors with a second plurality of locations on said digital micromirror device (DMD) for which said radius is less than a second threshold value, wherein said first and second threshold values are either equal to, or different from one another.

10. A method of processing a fringe pattern from a Fabry-Perot interferometer as recited in claim 1, wherein said set of said disjoint portions of said light is generated from a corresponding said pattern of associated pixel-mirror rotational states that is responsive to a probability distribution for which a fraction of associated said micromirrors in one of two said pixel-mirror rotational states at a location in proximity to a given radius relative to a center of said circular fringe pattern is dependent upon said probability distribution.

11. A system for processing at least one light signal, comprising:

    a Fabry-Perot interferometer (66) comprising :

        a Fabry-Perot etalon (78); and

        an imaging lens (88), wherein said Fabry-Perot interferometer is arranged so that the at least one light signal is projected through at least a portion of said Fabry-Perot etalon, and then onto and through said imaging lens;

        said system **characterised by** further comprising:

        at least one digital micromirror device ( 114 ), wherein each said at least one digital micromirror device ( 114 ) comprises a plurality of micromirrors (126) arranged in an array, each micromirror of said plurality of micromirrors comprises an associated reflective surface, each said micromirror and said associated reflective surface of said plurality of micromirrors is rotationally positionable to any of a plurality of rotational states responsive to a micromirror control signal, and each rotational state of said plurality of rotational states corresponds to a different rotational position of said micromirror and said associated reflective surface; when in a non-rotated state, said plurality of micromirrors are arranged along and substantially coincident with a reference surface, and said digital micromirror device ( 114 ) is located relative to said Fabry-Perot interferometer (66) so that said reference surface is nominally aligned with a focal surface of said imaging lens upon which the at least one light signal is imaged by said imaging lens as at least a first portion of a corresponding circular fringe pattern;

        at least one detector (68) positioned so as to be able to receive light of the at least one light signal reflected by said plurality of micromirrors of said digital micromirror device when said plurality of micromirrors are positioned in one of said plurality of rotational states;
a data processor (116), wherein said data processor provides for generating said micromirror control signal for each of said plurality of micromirrors,
and said micromirror control signal provides for controlling a first subset of said plurality of micromirrors to a first said rotational state, and said micromirror control signal provides for controlling a second subset of said plurality of micromirrors to a second said rotational state, wherein said first subset of said plurality of micromirrors is different from said second subset of said plurality of micromirrors, and either

       i. said at least one detector comprises first and second detectors and said first and second subsets of said plurality of micromirrors provide for simultaneously reflecting first and second disjoint portions of at least a second portion of said first portion of said corresponding circular fringe pattern to corresponding said first and second detectors, respectively, OR
       ii. said first subset of said plurality of micromirrors in a first said rotational state provide for reflecting a first disjoint portion of at least a second portion of said first portion of said corresponding circular fringe pattern to said at least one detector at a first point in time, and said second subset of said plurality of micromirrors in said first said rotational state provide for reflecting a second disjoint portion of said at least said second portion of said first portion of said corresponding circular fringe pattern to said at least one detector at a second point in time, wherein said first and second disjoint portions are relatively disjoint with respect to one another.

**12.** A system for processing at least one light signal as recited in claim 11, further comprising:

    a. a light source that provides for generating a first beam of light;
    b. at least one beam splitter that provides for splitting said first beam of light into a reference beam of light and at least one second beam of light, wherein said at least one beam splitter alone or in combination with at least one beam forming optic provide for projecting said at least one second beam of light into an atmosphere;
    c. at least one receive optic that provides for generating at least one corresponding backscattered light signal from light of said at least one second beam of light backscattered from at least one interaction region in said atmosphere, wherein said at least one interaction region is defined by an intersection of said at least one second beam of light with at least one field of view of a corresponding said at least one receive optic, wherein the at least one light signal comprises at least one of a reference light signal from said reference beam of light and said at least one corresponding backscattered light signal.

**13.** A system for processing at least one light signal as recited in claim 11, further comprising a temperature sensor in thermal communication with said Fabry-Perot etalon and operatively coupled to said data processor, wherein said temperature sensor provides for transmitting a temperature signal to said data processor and said temperature signal provides a measure of temperature of said Fabry-Perot etalon.

**14.** A system for processing at least one light signal as recited in claim 11, further comprising a temperature control system in thermal communication with said Fabry- Perot etalon wherein said temperature control system provides for maintaining a temperature of said Fabry-Perot etalon.

**15.** A system for processing at least one light signal as recited in claim 11, wherein said data processor provides for generating at least one measure representative of the at least one light signal responsive to a plurality of signals from said at least one detector, wherein said plurality of signals are generated by said at least one detector responsive to at least one detection of said first and second disjoint portions of said at least said second portion of said first portion of said corresponding circular fringe pattern.

**Patentansprüche**

**1.** Verfahren zum Bearbeiten eines Interferenzmusters von einem Fabry-Perot Interferometer (66) umfassend:

    Erzeugen von wenigstens einem Teil eines kreisförmigen Interferenzmusters mit einem Fabry-Perot Interferometer, der auf wenigstens ein Lichtsignal anspricht, welches darauf einfällt,
    wobei der wenigstens eine Teil des kreisförmigen Interferenzmusters aus Licht von dem wenigstens einen Lichtsignal gebildet ist;

Abbilden des wenigstens einen Teils des kreisförmigen Interferenzmusters von dem Fabry-Perot Interferometer auf eine digitale Mikrospiegeleinrichtung (114), wobei die digitale Mikrospiegeleinrichtung (114) eine Vielzahl von Mikrospiegeln (126) in einem Feld umfasst,

wobei jeder Mikrospiegel der Vielzahl der Mikrospiegel ein Pixel darstellt, welcher in eine Vielzahl von unterschiedlichen Pixel-Spiegel-Rotationszuständen gedreht werden kann, und

wobei jeder Pixel-Spiegel-Drehzustand der Vielzahl der unterschiedlichen Pixel-Spiegel-Drehzustände einer speziell zugeordneten Drehposition des Mikrospiegels entspricht:

wobei das Verfahren **dadurch gekennzeichnet ist, dass** es weiterhin umfasst:

Bearbeiten des wenigstens einen Teils des kreisförmigen Interferenzmusters umfassend:

i. Einstellen des Pixel-Spiegel-Drehzustandes von jedem der Vielzahl der Mikrospiegel des Feldes derart, dass wenigstens ein Muster von zugeordneten Pixel-Spiegel-Drehzuständen an einem wenigstens einen Zeitpunkt, wobei jedes der wenigstens einen Muster der zugeordneten Pixel-Spiegel-Drehzustände eine Vielzahl von Untergruppen der Vielzahl der Mikrospiegel umfasst, wobei jeder Mikrospiegel der Untergruppe auf einen gemeinsamen Pixel-Spiegel-Drehzustand eingestellt ist, und wobei die Mikrospiegel von unterschiedlichen Untergruppen auf unterschiedliche der Pixel-Spiegel-Drehzustände eingestellt sind;

ii. für jede der Untergruppen der Vielzahl von Mikrospiegeln, Reflektieren von der Vielzahl der Mikrospiegel der Untergruppe der Vielzahl der Mikrospiegel einen entsprechenden Teil des Lichts des wenigstens einen Teils des kreisförmigen Interferenzmusters, wobei unterschiedliche, entsprechende Teile des Lichts, die unterschiedlichen von den Untergruppen der Vielzahl der Mikrospiegel entsprechen, in unterschiedliche Richtungen entsprechend dem Pixel-Spiegel-Drehzustand reflektiert werden, der Untergruppe der Vielzahl der Mikrospiegel zugeordnet ist;

iii. für jede der Vielzahl der Untergruppen der Vielzahl der Mikrospiegel Detektieren des entsprechenden Teils des Lichts, das von jeder der Untergruppen der Vielzahl der Mikrospiegel an dem wenigstens einen Zeitpunkt reflektiert wird, wobei der Vorgang der Detektion des entsprechenden Teils des Lichts umfasst entweder

a) separates Detektieren von unterschiedlichen der entsprechenden Teile des Lichts für ein gemeinsames der Muster der zugeordneten Pixel-Spiegel-Drehzustände, wobei die unterschiedlichen der entsprechenden Teile des Lichts in Bezug aufeinander relativ disjunkt sind und gemeinsam einen Satz von disjunkten Teilen des Lichts darstellen, und wobei der Vorgang der separaten Detektion der unterschiedlichen von den entsprechenden Teilen des Lichts dazu dient, um einen entsprechenden Satz von komplementären Detektionssignalen zu erzeugen; oder

b) sequenzielles Detektieren von unterschiedlichen von den entsprechenden Teilen des Lichts für unterschiedliche von den Mustern der zugeordneten Pixel-Spiegel-Drehzuständen an unterschiedlichen Zeitpunkten, wobei die unterschiedlichen von den entsprechenden Teilen des Lichts relativ disjunkt im Bezug aufeinander sind und gemeinsam einen Satz von disjunkten Teilen des Lichts darstellen, und wobei der Vorgang des Detektierens von unterschiedlichen von den entsprechenden Teilen des Lichts dazu dient, einen entsprechenden Satz von komplementär detektierten Signalen zu erzeugen;

iv. Verarbeiten des entsprechenden Satzes der komplementär detektierten Signale, um eine Charakterisierung von dem wenigsten einem Lichtsignal, das auf den Fabry-Perot Interferometer einfällt, zu liefern.

2. Verfahren zum Verarbeiten eines Interferenzmusters eines Fabry-Perot Interferometers nach Anspruch 1, worin der Vorgang der Einstellung der Pixel-Spiegel-Drehzustände, des Reflektierens von der Vielzahl der Mikrospiegel und des Detektierens des entsprechenden Teils des Lichts für jede Untergruppe der Vielzahl der Untergruppen der Vielzahl der Mikrospiegel für eine Vielzahl von den Gruppen der disjunkten Teile des Lichts wiederholt werden, um eine entsprechende Vielzahl von Sätzen der komplementär detektierten Signale zu erzeugen, wobei die Vielzahl der Sätze der disjunkten Teile des Lichts algebraisch räumlich unabhängig in Bezug aufeinander sind, und wobei der Vorgang der Verarbeitung des entsprechenden Satzes der komplementär detektierten Signale für die entsprechende Vielzahl der Sätze der komplementär detektierten Signale durchgeführt wird, um eine Charakterisierung des wenigstens einen Lichtsignals, welches auf den Fabry-Perot Interferometer einfällt, zu liefern.

3. Verfahren zum Verarbeiten eines Interferenzmusters von einem Fabry-Perot Interferometer nach Anspruch 1, worin das wenigstens eine Lichtsignal eine Vielzahl von Lichtsignalen umfasst, die auf unterschiedliche Teile eines Fabry-Perot-Etalons des Fabry-Perot Interferometers einfallen, wobei der Vorgang des Erzeugens des wenigstens einen Teils des kreisförmigen Interferenzmusters das Erzeugen einer Vielzahl von unterschiedlichen Teilen des kreisförmigen Interferenzmusters umfasst, wobei jeder unterschiedliche Teil der Vielzahl der unterschiedlichen Teile des kreisförmigen Interferenzmusters für ein entsprechendes, unterschiedliches Lichtsignal der Vielzahl der Lichtsignale erzeugt wird, und wobei der Vorgang der Verarbeitung des wenigstens einen Teils des kreisförmigen Interferenzmusters separat für unterschiedliche von den unterschiedlichen Teilen des kreisförmigen Interferenzmusters durchgeführt wird.

4. Verfahren zur Verarbeitung eines Interferenzmusters von einem Fabry-Perot Interferometer nach Anspruch 1, worin für jeden Satz der disjunkten Teile des Lichts das wenigstens eine Muster der zugeordneten Pixel-Spiegel-Drehzustände ein entsprechendes einzelnes Muster der zugeordneten Pixel-Spiegel-Drehzustände umfasst entsprechend dem Satz der disjunkten Teile des Lichts, wobei das entsprechende einzelne Muster der zugeordneten Pixel-Spiegel-Drehzustände umfasst;

a. eine erste Untergruppe der Vielzahl der Mikrospiegel in einem ersten Pixel-Spiegel-Drehzustand, wobei die erste Gruppe der Vielzahl der Mikrospiegel das Reflektieren von einem ersten Teil des Lichts in eine erste Richtung liefert;
b. eine zweite Untergruppe der Vielzahl der Mikrospiegel in einem zweiten Pixel-Spiegel-Drehzustand, wobei die zweite Untergruppe der Vielzahl der Mikrospiegel das Reflektieren eines zweiten Teils des Lichts in eine zweite Richtung unterschiedlich von der ersten Richtung liefert; und
im Vorgang des separaten Detektierens der unterschiedlichen von den entsprechenden Teilen des Lichts das separate Detektieren des ersten und des zweiten Teils des Lichts umfasst.

5. Verfahren zum Verarbeiten eines Interferenzmusters von einem Fabry-Perot Interferometer nach Anspruch 1, worin der Vorgang des sequenziellen Detektierens von unterschiedlichen der entsprechenden Teile des Lichts für unterschiedliche Muster der zugeordneten Pixel-Spiegel-Drehzustände an unterschiedlichen Zeitpunkten umfasst:

a. Einstellen des Pixel-Spiegel-Drehzustandes von jedem der Vielzahl der Mikrospiegel des Feldes, um ein erstes Muster der zugeordneten Pixel-Spiegel-Drehzustände an einem ersten Zeitpunkt zu bilden, wobei das erste Muster der zugeordneten Pixel-Spiegel-Drehzustände eine erste Untergruppe der Vielzahl der Mikrospiegel umfasst, worin jeder Mikrospiegel der ersten Untergruppe der Vielzahl der Mikrospiegel auf einen gemeinsamen, ersten Pixel-Spiegel-Drehzustand eingestellt ist,
b. Reflektieren von der Vielzahl der Mikrospiegel der ersten Untergruppe einen entsprechenden ersten Teil des Lichts von einem ersten Teil des kreisförmigen Interferenzmusters in eine erste Richtung entsprechend im gemeinsamen, ersten Pixel-Spiegel-Drehzustand umfasst, der der ersten Untergruppe der Vielzahl der Mikrospiegel zugeordnet ist;
c. Detektieren des entsprechenden ersten Teils des Lichts, welches von der ersten Untergruppe der Vielzahl der Mikrospiegel mit der Vielzahl der Mikrospiegel des Feldes, die entsprechend dem ersten Muster der zugeordneten Pixel-Spiegel-Drehzustände eingestellt ist, um ein entsprechendes erstes detektiertes Signal der entsprechenden Gruppe von komplementär detektierten Signalen zu erzeugen;
d. Einstellen des Pixel-Spiegel-Drehzustandes von jedem der Vielzahl der Mikrospiegel des Feldes, um ein zweites Muster von zugeordneten Pixel-Spiegel-Drehzuständen an einem entsprechenden zweiten Zeitpunkt zu bilden, wobei das zweite Muster der zugeordneten Pixel-Spiegel-Drehzustände eine zweite Untergruppe der Vielzahl der Mikrospiegel umfasst, wobei jeder der Mikrospiegel der zweiten Untergruppe der Vielzahl der Mikrospiegel auf den gemeinsamen, ersten Pixel-Spiegel-Drehzustand eingestellt ist;
e. Reflektieren von der Vielzahl von Mikrospiegeln der zweiten Untergruppe eines entsprechenden zweiten Teils des Lichts des ersten Teils des kreisförmigen Interferenzmusters in die erste Richtung entsprechend im gemeinsamen, ersten Pixel-Spiegel-Drehzustand, der der zweiten Untergruppe der Vielzahl der Mikrospiegel zugeordnet ist; und
f. Detektieren eines entsprechenden zweiten Teils des Lichts, welches von der zweiten Untergruppe der Vielzahl der Mikrospiegel reflektiert wird, mit der Vielzahl der Mikrospiegel des Feldes, die entsprechend dem zweiten Muster der zugeordneten Pixel-Spiegel-Drehzustände eingestellt sind, um ein entsprechendes zweites detektiertes Signal des entsprechenden Satzes der komplementär detektierten Signale zu erzeugen, wobei die entsprechenden ersten und zweiten Teile des Lichts kollektiv den Satz der disjunkten Teile des Lichts darstellen.

6. Verfahren zur Verarbeitung eines Interferenzmusters von einem Fabry-Perot Interferometer nach Anspruch 1, worin das wenigstens ein Lichtssignal entweder ein Referenzlichtsignal oder wenigstens ein Rückstreuungs-Lichtsignal oder beides umfasst, das/die einem atmosphärischen Messsystem zugeordnet ist/sind, wobei das Referenzlichtsignal von einer Lichtquelle abgeleitet wird, und wobei das wenigstens eine Rückstreuungs-Lichtsignal von dem Licht der Lichtquelle erhalten wird, das in einer Atmosphäre bestrahlt und davon zurückgestrahlt wurde.

7.  Verfahren zum Verarbeiten eines Interferenzmusters von einem Fabry-Perot Interferometer nach Anspruch 1, worin der Satz der disjunkten Teile des Lichts erste und zweite Teile eines entsprechenden Lichtsignals das wenigstens einen Lichtsignals darstellen, welches von den entsprechenden ersten und zweiten Untergruppen der Vielzahl der Mikrospiegel entsprechend einem effektiven Muster der Vielzahl der Mikrospiegel der digitalen Mikrospiegeleinrichtung (DMD) reflektiert wird, wobei das effektive Muster auf wenigstens eine Funktion anspricht, die mit einer optischen Antwort im Zusammenhang steht, die dem wenigstens einen Teil des kreisförmigen Interferenzmusters zugrunde liegt, und wobei die wenigstens eine Funktion auf wenigstens einen Parameter anspricht.

8.  Verfahren zur Verarbeitung eines Interferenzmusters von einem Fabry-Perot Interferometer nach Anspruch 1, worin der Satz der disjunkten Teile des Lichts erste und zweite Teile eines entsprechenden Lichtsignals des wenigstens einen Lichtsignals darrstellen, welches von entsprechenden ersten und zweiten Untergruppen der Vielzahl der Mikrospiegel entsprechend einem effektiven Muster der Vielzahl der Mikrospiegel der digitalen Mikrospiegeleinrichtung (DMD) reflektiert wird, und wobei das effektive Muster in Antwort auf ein Verfahren definiert wird, welches umfasst:

a. Definieren einer ersten Funktion, die ein Modell einer optischen Antwort, die dem ersten Teil des kreisförmigen Interferenzmusters zugrunde liegt, liefert, wobei die erste Funktion wenigstens einen Parameter umfasst, der eine Charakterisierung des wenigstens einen Lichtsignals liefert;
b. Definieren einer zweiten Funktion, die auf eine teilweisen Ableitung der ersten Funktion in Bezug auf einen der wenigstens einen Parameter anspricht, wobei die ersten und zweiten Funktionen jeweils von einer Variablen abhängen, die einer radialen Dimension des wenigstens einen Teils des kreisförmigen Interferenzmusters in Bezug auf die digitale Mikrospiegeleinrichtung (DMD) zugeordnet ist; und
c. Definieren des effektiven Musters durch Zuordnung der ersten Untergruppe der Vielzahl der Mikrospiegel mit einem ersten Satz von Orten auf der digitalen Mikrospiegeleinrichtung (DMD), an denen die zweite Funktion einen ersten Schwellenwert übersteigt, und Zuordnen einer zweiten Untergruppe der Vielzahl der Mikrospiegel zu einem zweiten Satz von Orten auf der digitalen Mikrospiegeleinrichtung (DMD), an dem die zweite Funktion geringer ist als ein zweiter Schwellenwert;
d. worin der Vorgang der Verarbeitung des entsprechenden Satzes der komplementär detektierten Signale eine Bestimmung eines Wertes von dem wenigstens einen Parameter liefert, der auf den entsprechenden Satz der komplementär detektierten Signale anspricht.

9.  Verfahren zum Verarbeiten eines Interferenzmusters von einem Fabry-Perot Interferometer nach Anspruch 1, worin der Satz der disjunkten Teile des Lichts erste und zweite Teile des entsprechenden Lichtsignals von dem wenigstens einen Lichtsignal darstellt, welches von den entsprechenden ersten und zweiten Untergruppen der Vielzahl der Mikrospiegel entsprechend einem effektiven Muster der Vielzahl der Mikrospiegel der digitalen Mikrospiegeleinrichtung (DMD) reflektiert wird, wobei das effektive Muster durch Zuordnung der ersten Untergruppe der Vielzahl der Mikrospiegel zu einer ersten Vielzahl von Orten auf der digitalen Mikrospiegeleinrichtung (DMD) definiert wird, für die ein Radius relativ zu einem Zentrum des kreisförmigen Interferenzmusters einen ersten Schwellenwert übersteigt, und Zuordnen der zweiten Untergruppe der Vielzahl der Mikrospiegel zu einer zweiten Vielzahl von Orten auf der digitalen Mikrospiegeleinrichtung (DMD), für die der Radius geringer als ein zweiter Schwellenwert ist, wobei die ersten und zweiten Schwellenwerte entweder gleich zueinander oder unterschiedlich voneinander sind.

10. Verfahren zur Verarbeitung eines Interferenzmusters von einem Fabry-Perot Interferometer nach Anspruch 1, worin der Satz der disjunkten Teile des Lichts von einem entsprechenden Muster der zugeordneten Pixel-Spiegel-Drehzustände erzeugt werden, welches auf eine Wahrscheinlichkeitsverteilung anspricht, für die ein Teil der zugeordneten Mikrospiegel in einem von zwei Pixel-Spiegel-Drehzuständen an einer Stelle in der Nachbarschaft zu einem vorgegebenen Radius relativ zu einem Mittelpunkt des kreisförmigen Interferenzmusters von der Wahrscheinlichkeitsverteilung abhängt.

11. System zur Verarbeitung von wenigstens einem Lichtsignal umfassend:

ein Fabry-Perot Interferometer (66) umfassend:

ein Fabry-Perot-Etalon (78) und

eine Abbildungslinse (88), wobei der Fabry-Perot Interferometer so angeordnet ist, dass wenigstens ein Lichtsignal durch wenigstens einen Teil des Fabry-Perot-Etalons und dann auf und durch die Abbildungslinse produziert wird;

wobei das System charakterisiert ist, dass es ferner umfasst:

wenigstens eine digitale Mikrospiegeleinrichtung (114) wobei jede der wenigstens einen digitalen Mikrospiegeleinrichtungen (114) eine Vielzahl von Mikrospiegeln (126) aufweist, die in einem Feld angeordnet sind, wobei jeder Mikrospiegel der Vielzahl der Mikrospiegel eine zugeordnete Reflexionsfläche aufweist, wobei jeder Mikrospiegel und die zugeordnete Reflexionsfläche der Vielzahl der Mikrospiegeln drehbar in eine, einer Vielzahl von Drehzuständen positionierbar ist in Antwort auf ein Mikrospiegelsteuersignal, und wobei jeder Drehzustand der Vielzahl der Drehzustände einer unterschiedlichen Drehposition des Mikrospiegels und der zugeordneten Reflexionsfläche entspricht;

wobei, wenn sie in einem nicht gedrehten Zustand sind, die Vielzahl der Mikrospiegel entlang und im wesentlichen in Übereinstimmung mit einer Referenzfläche angeordnet sind, und

wobei die digitale Mikrospiegeleinrichtung (114) in Bezug auf den Fabry-Perot Interferometer so angeordnet ist, dass die Referenzfläche nominal mit einer lokalen Oberfläche der Abbildungslinse ausgerichtet ist, auf die das wenigstens eine Lichtsignal durch die Abbildungslinse als wenigstens ein erster Teil des zugeordneten kreisförmigen Interferenzmusters abgebildet wird;

wenigstens einen Detektor (68), der so positioniert ist, dass er Licht von dem wenigstens einen Lichtsignal empfangen kann, welches von der Vielzahl der Mikrospiegel der digitalen Mikrospiegeleinrichtung reflektiert wird, wenn die Vielzahl der Mikrospiegel in einer der Vielzahl der Drehzustände positioniert ist;

einen Daten-Prozessor (116), wobei der Daten-Prozessor die Erzeugung des Mikrospiegel-Steuersignals für jeden der Vielzahl der Mikrospiegel liefert, und wobei das Mikrospiegelsteuersignals die Steuerung der ersten Untergruppe der Vielzahl der Mikrospiegel in einen ersten Drehzustand liefert, und wobei das Mikrospiegelsteuersignal die Steuerung einer zweiten Untergruppe der Vielzahl der Mikrospiegel in einen zweiten Drehzustand liefert,

wobei die erste Untergruppe der Vielzahl der Mikrospiegel sich von der zweiten Untergruppe der Vielzahl der Mikrospiegel unterscheidet, und wobei entweder

i. er wenigstens einen Detektor, einen zweiten Detektor und einen ersten und einen zweiten Detektor aufweist, und wobei die ersten und die zweiten Untergruppen der Vielzahl der Mikrospiegel für eine gleichzeitige Reflektion der ersten und zweiten disjunkten Teile von dem wenigstens einen Teil und wenigstens einem zweiten Teil des ersten Teils des entsprechenden kreisförmigen Interferenzmusters an die entsprechenden ersten und zweiten Detektoren, respektive, liefert oder

ii. wobei die erste Untergruppe der Vielzahl der Mikrospiegel in einem ersten Drehzustand eine Reflektion eines ersten disjunkten Teils von wenigstens einem zweiten Teil des ersten Teils des entsprechenden kreisförmigen Interferenzmusters an den wenigstens einen Detektor an einem ersten Zeitpunkt liefert, und wobei eine zweite Untergruppe der Vielzahl der Mikrospiegel in dem ersten Drehzustand eine Reflektion eines zweiten disjunkten Teils des wenigstens einen zweiten Teils des ersten Teils des entsprechenden kreisförmigen Interferenzmusters an den wenigstens einen Detektor an einen zweiten Zeitpunkt liefert, wobei die ersten und zweiten disjunkten Teile in Bezug aufeinander relativ disjunkt sind.

**12.** System zum Verarbeiten von wenigstens einem Lichtsignal nach Anspruch 11, ferner umfassend:

a. eine Lichtquelle, die die Erzeugung eines ersten Lichtstrahls liefert;

b. wenigstens einen Strahlteiler, der zur Aufteilung des ersten Lichtstrahls in einen Referenzlichtstrahl und wenigstens einen zweiten Lichtstrahl liefert, wobei der wenigstens eine Strahlteiler alleine oder in Kombination mit wenigstens einer Strahlformungsoptik für eine Projektion des wenigstens einen zweiten Lichtstrahls in einer Atmosphäre liefert;

c. wenigstens eine Empfangsoptik, die eine Erzeugung von wenigstens einem entsprechenden Rückstreuungs-Lichtsignal von dem Licht des wenigstens einen zweiten Lichtstrahl liefert, das von wenigstens einer Wechselwirkungsregion in der Atmosphäre zurückgestreut wird, wobei das wenigstens eine Wechselwirkungsgebiet durch einen Schnitt von dem wenigstens einen zweiten Lichtstrahl mit wenigstens einem Sichtfeld einer entsprechenden von der wenigstens einen Empfangsoptik definiert wird, wobei der wenigstens eine Lichtstrahl wenigstens ein Referenzlichtsignal von dem Referenztlichtstrahl oder das wenigstens eine entsprechenden Rückstreuungslichtsignal umfasst.

**13.** System zur Verarbeitung von wenigstens einem Lichtsignal nach Anspruch 11, ferner umfassend einen Temperatursensor in thermischer Kommunikation mit dem Fabry-Perot-Etalon und gekoppelt mit dem Datenprozessor, wobei der Temperatursensor eine Übertragung eines Temperatursignals an den Datenprozessor liefert und wobei das Temperatursignal ein Maß für die Temperatur des Fabry-Perot-Etalons liefert.

**14.** System zur Verarbeitung von wenigstens einem Lichtsignal nach Anspruch 11, ferner umfassend ein Temperatursteuersystem in thermischer Kommunikation mit dem Fabry-Perot-Etalon, wobei das Temperatursteuersystem die Beibehaltung einer Temperatur des Fabry-Perot-Etalons liefert.

**15.** System zur Verarbeitung von wenigstens einem Lichtsignal nach Anspruch 11, wobei der Datenprozessor eine Erzeugung von wenigstens einem Maß liefert, welches für das wenigstens eine Lichtsignal repräsentativ ist, welches auf eine Vielzahl von Signalen von dem wenigstens einen Detektor anspricht, wobei die Vielzahl der Signale durch den wenigstens einen Detektor erzeugt werden, der auf eine Detektion der ersten und zweiten disjunkten Teile des wenigstens einen zweiten Teils des ersten Teils des entsprechenden kreisförmigen Interferenzmusters anspricht.

## Revendications

**1.** Procédé de traitement un motif de franges à partir d'un interféromètre Fabry-Perot (66), comprenant: générer au moins une portion d'un motif de franges circulaires avec un interféromètre Fabry-Perot sensible à au moins un signal de lumière incidente, où ladite au moins une portion dudit motif de franges circulaires est formée de lumière à partir dudit au moins un signal de lumière; ledit procédé **caractérisé par** comprenant de plus:

- imaginer ladite au moins une portion dudit motif de franges circulaires à partir dudit interféromètre Fabry-Perot sur un dispositif digital à micromiroirs (114), où ledit dispositif digital à micromiroirs (114) comprend une pluralité de micromiroirs (126) arrangés dans un réseau, où chaque micromiroir de ladite pluralité de mucromiroirs constitue un pixel qui peut être positionné en rotation à une pluralité d'états de rotation différents de pixel-miroir, et chaque état de rotation de pixel-miroir de ladite pluralité d'états de rotation différents de pixel-miroir correspond à une position de rotation particulière associée dudit micromiroir;
- traiter ladite au moins une portion dudit motif de franges circulaires, comprenant: i. établir ledit état de rotation pixel-miroir de chacune de ladite pluralité de micromiroirs dudit réseau pour former au moins un motif d'états de rotation de pixel-miroir associés à au moins un moment correspondant en temps, où chacun dudit au moins un motif d'états de rotation de pixel-miroir associés comprend une pluralité de parties de ladite pluralité de micromiroirs, où pour chaque partie de ladite pluralité de parties, chaque ledit micromiroir de ladite partie est fixé à un ledit état de rotation de pixel-miroir commun, et lesdits micromiroirs desdites différentes parties sont fixés auxdits différents états de rotation pixel-miroir; ii. pour chacune ladite partie de ladite pluralité de micromiroirs, réfléchir de ladite pluralité de micromiroirs de ladite partie de ladite pluralité de micromiroirs une portion correspondante de ladite lumière de ladite au moins une portion dudit motif de franges circulaires, où différentes portions correspondantes de ladite lumière correspondant auxdites différentes parties de ladite pluralité de micromiroirs sont réfléchies en différentes directions en accord avec ledit état de rotation pixel-miroir associé avec ladite partie de ladite pluralité de micromiroirs; iii. pour chacune d'une pluralité desdites parties de ladite pluralité de micromiroirs, détecter ladite portion correspondante de ladite lumière réfléchie de chacune de ladite partie de ladite pluralité de micromiroirs audit au moins un moment en temps, où l'opération de détecter ladite portion correspondante de ladite lumière comprend soit

a) détecter séparément différentes desdites portions correspondantes de ladite lumière pour un ledit motif commun d'états de rotation pixel-miroir associés, où lesdites portions correspondantes différentes de ladite lumière sont relativement disjointes l'une de l'autre et constituent de manière collective un jeu de portions disjointes de ladite lumière, et l'opération de détecter séparément lesdites portions correspondantes différentes de ladite lumière prévoit à générer un jeu correspondant de signaux complémentaires détectés: OR
b) détecter séquentiellement différentes desdites portions correspondantes de ladite lumière pour différents desdits motifs d'états de rotation pixel-miroir associés à différents moments en temps, où lesdites différentes desdites portions correspondantes de ladite lumière sont relativement disjointes l'une à l'égard de l'autre et constituent de manière collective un jeu de portions disjointes de ladite lumière, et l'opération de détecter différentes desdites portions correspondantes de ladite lumière prévoit à générer un jeu correspondant de signaux complémentaires détectés; iv. traiter ledit jeu correspondant de signaux complémentaires détectés de manière à prévoir pour caractériser ledit au moins un signal de lumière incidente sur ledit interféromètre Fabry-Perot.

**2.** Procédé de traitement un motif de franges à partir d'un interféromètre Fabry-Perot selon la revendication 1, où les opérations de fixer lesdits états de rotation de pixel-miroir, réfléchir de ladite pluralité de micromiroirs et détecter ladite portion correspondante de ladite lumière pour chacune de ladite partie de ladite pluralité de parties de ladite pluralité de micromiroirs sont répétées pour une pluralité de jeux desdites portions disjointes de ladite lumière pour générer une pluralité correspondante de jeux desdits signaux complémentaires détectés, où ladite pluralité de jeux desdites portions disjointes de ladite lumière sont algébriquement et spatialement indépendantes l'une à l'égard de l'autre, et l'opération de traiter ledit jeu correspondant de signaux complémentaires détectés est réalisée pour ladite pluralité correspondante de jeux desdits signaux complémentaires détectés pour prévoir à caractériser au moins un signal de lumière incidente sur ledit interféromètre Fabry-Perot.

**3.** Procédé de traitement un motif de franges à partir d'un interféromètre Fabry-Perot selon la revendication 1, où ledit au moins un signal de lumière comprend une pluralité de signaux de lumière qui sont incidents sur différentes portions d'un étalon Fabry-Perot dudit interféromètre Fabry-Perot, l'opération de générer ladite au moins une portion dudit motif de franges circulaires comprend générer une pluralité de différentes portions dudit motif de franges circulaires, où chaque portion différente de ladite pluralité de portions différentes dudit motif de franges circulaires est générée pour ledit signal de lumière différent correspondant de ladite pluralité de signaux de lumière, et l'opération de traiter ladite au moins une portion dudit motif de franges circulaires est réalisée séparément pour différentes desdites portions différentes dudit motif de franges circulaires.

**4.** Procédé de traitement un motif de franges à partir d'un interféromètre Fabry-Perot selon la revendication 1, où pour chaque ledit jeu de portions disjointes de ladite lumière, ledit au moins un motif d'états de rotation pixel-miroir associés comprend un seul motif correspondant d'états de rotation pixel-miroir associés correspondant audit jeu de portions disjointes de ladite lumière, où ledit seul motif correspondant d'états de rotation pixel-miroir associés comprend:

  a. une première partie de ladite pluralité de micromiroirs dans un premier état de rotation pixel-miroir, où ladite première partie de ladite pluralité de micromiroirs prévoit à réfléchir une première portion de ladite lumière dans une première direction; et
  b. une seconde partie de ladite pluralité de micromiroirs dans un second état de rotation pixel-miroir, où ladite seconde partie de ladite pluralité de micromiroirs prévoit à réfléchir une seconde portion de ladite lumière dans une seconde direction différente de ladite première direction; et
  l'opération de détecter séparément lesdites différentes desdites portions correspondantes de ladite lumière comprend détecter séparément lesdites première et seconde portions de ladite lumière.

**5.** Procédé de traitement un motif de franges à partir d'un interféromètre Fabry-Perot selon la revendication 1, où l'opération de détecter séquentiellement différentes desdites portions correspondantes de ladite lumière pour différents desdits motifs d'états de rotation pixel-miroir associés auxdits différents moments en temps comprend:

  a. fixer ledit état de rotation pixel-miroir de chacune de ladite pluralité de micromiroirs dudit réseau pour former un premier dudit motif d'états de rotation pixel-miroir associés à un premier moment en temps correspondant, où ledit premier dudit motif d'états de rotation pixel-miroir associés comprend une première partie de ladite pluralité de micromiroirs, où chacun dudit micromiroir de ladite première partie de ladite pluralité de micromiroirs est fixé à un premier état de rotation pixel-miroir commun;
  b. réfléchir de ladite pluralité de micromiroirs de ladite première partie une première portion correspondante de ladite lumière d'une première portion dudit motif de franges circulaires dans une première direction en accord avec ledit premier état de rotation pixel-miroir commun associé avec ladite première partie de ladite pluralité de micromiroirs;
  c. détecter ladite première portion correspondante de ladite lumière réfléchie de ladite première partie de ladite pluralité de micromiroirs avec ladite pluralité de micromiroirs dudit réseau fixé en accord avec ledit premier dudit motif d'états de rotation pixel-miroir associés pour générer un premier signal correspondant détecté dudit jeu correspondant de signaux complémentaires détectés;
  d. fixer ledit état de rotation pixel-miroir de chacun de ladite pluralité de micromiroirs dudit réseau pour former un second dudit motif d'états de rotation pixel-miroir associés à un second moment en temps correspondant, où ledit second dudit motif d'états de rotation pixel-miroir associés comprend une seconde partie de ladite pluralité de micromiroirs, où chacun dudit micromiroir de ladite seconde partie de ladite pluralité de micromiroirs est fixé audit premier état de rotation pixel-miroir commun;

e. réfléchir de ladite pluralité de micromiroirs de ladite seconde partie une seconde portion correspondante de ladite lumière de ladite première portion dudit motif de franges circulaires dans ladite première direction en accord avec ledit premier état de rotation pixel-miroir commun associé avec ladite seconde partie de ladite pluralité de micromiroirs; et

f. détecter ladite seconde portion correspondante de ladite lumière réfléchie de ladite seconde partie de ladite pluralité de micromiroirs avec ladite pluralité de micromiroirs dudit réseau fixé en accord avec ledit second dudit motif d'états de rotation pixel-miroir associés pour générer un second signal détecté correspondant dudit jeu correspondant de signaux complémentaires détectés, où lesdites première et seconde portions correspondantes de ladite lumière constituent de manière collective ledit jeu de portions disjointes de ladite lumière.

6. Procédé de traitement un motif de franges à partir d'un interféromètre Fabry-Perot selon la revendication 1, où ledit au moins un signal de lumière comprend soit un signal de lumière de référence soit au moins un signal de lumière rétrodiffusé, ou tous les deux, associés avec un système de mesure atmosphérique, où ledit signal de référence est dérivé d'une source de lumière, et ledit au moins un signal de lumière rétrodiffusé est reçu de la lumière de ladite source de lumière qui a été projetée dans un atmosphère et rétrodiffusé de là.

7. Procédé de traitement un motif de franges à partir d'un interféromètre Fabry-Perot selon la revendication 1, où ledit jeu desdites portions disjointes de ladite lumière constitue les première et seconde portions d'un signal de lumière correspondant dudit au moins un signal de lumière réfléchi des première et seconde parties respectives de ladite pluralité de micromiroirs en accord avec un motif effectif de ladite pluralité de micromiroirs dudit dispositif digital à micromiroirs (DMD), ledit motif effectif est sensible à au moins une fonction en relation avec un réponse optique provenant de ladite au moins une portion dudit motif de franges circulaires, et ledit motif de franges circulaires, et ladite au moins une fonction est sensible à au moins un paramètre.

8. Procédé de traitement un motif de franges à partir d'un interféromètre Fabry-Perot selon la revendication 1, où ledit jeu desdites portions disjointes de ladite lumière constitue les première et seconde portions d'un signal de lumière correspondant dudit au moins un signal de lumière réfléchi desdites première et seconde parties respectives de ladite pluralité de micromiroirs en accord avec un motif effectif de ladite pluralité de micromiroirs dudit dispositif digital à micromiroirs (DMD), et ledit motif effectif est défini sensible à un procédé comprenant:

a. définir une première fonction prévoyant un motif d'une réponse optique provenant dudit au moins une portion dudit motif de franges circulaires, où ladite première fonction fait incorporer au moins un paramètre qui prévoit à caractériser ledit au moins un signal de lumière;

b. définir une seconde fonction sensible à un dérivé partiel de ladite première fonction à l'égard d'un dudit au moins un paramètre, où lesdites première et seconde fonctions sont chacune dépendente d'une variable associée avec une dimension radiale de ladite au moins une portion dudit motif de franges circulaires relatif audit dispositif digital à micromiroirs (DMD); et

c. définir ledit motif effectif en associant ladite première partie de ladite pluralité de micromiroirs avec un premier jeu de locations sur ledit dispositif digital à micromiroirs (DMD) pour lequel ladite seconde fonction dépasse une première valeur de seuil, et en associant ladite seconde partie de ladite pluralité de micromiroirs avec un second jeu de locations sur ledit dispositif digital à micromiroirs (DMD) pour lequel ladite seconde fonction est moins qu' une seconde valeur de seuil;

d. où l'opération de traiter ledit jeu correspondant de signaux complémentaires détectés prévoit à déterminer une valeur dudit au moins un paramètre sensible audit jeu correspondant de signaux complémentaires détectés.

9. Procédé de traitement un motif de franges à partir d'un interféromètre Fabry-Perot selon la revendication 1, où ledit jeu desdites portions disjointes de ladite lumière constitue les première et seconde portions d'un signal de lumière correspondant dudit au moins un signal de lumière réfléchi desdites première et seconde parties respectives de ladite pluralité de micromiroirs en accord avec un motif effectif de ladite pluralité de micromiroirs dudit dispositif digital à micromiroirs (DMD), et ledit motif effectif est défini en associant ladite première partie de ladite pluralité de micromiroirs avec une première pluralité de locations sur ledit dispositif digital à micromiroirs (DMD) pour lequel un rayon relatif au centre dudit motif de franges circulaires dépasse une première valeur de seuil, et en associant ladite seconde partie de ladite pluralité de micromiroirs avec une seconde pluralité de locations sur ledit dispositif digital à micromiroirs (DMD) pour lequel ledit rayon est moins qu' une seconde valeur de seuil, où lesdites première et seconde valeurs de seuil sont soit égales, soit différentes l'une de l'autre.

10. Procédé de traitement un motif de franges à partir d'un interféromètre Fabry-Perot selon la revendication 1, où ledit jeu desdites portions disjointes de ladite lumière est généré à partir dudit motif correspondant d'états de rotation pixel-miroir associés qui est sensible à une distribution de probabilité pour laquelle une fraction desdits micromiroirs associés dans un desdits deux états de rotation pixel-miroir à une location en proximité d'un rayon donné relatif à un centre dudit motif de franges circulaires est dépendant sur ladite distribution de probabilité.

**11.** Système de traitement au moins un signal de lumière, comprenant:

- un interféromètre Fabry-Perot (66), comprenant:
- un étalon Fabry-Perot (78); et
- une lentille d'images (88), où ledit interféromètre Fabry-Perot est arrangé de sorte qu'au moins un signal de lumière soit projeté par au moins une portion dudit étalon Fabry-Perot et puis sur et par ladite lentille d'images; ledit système **caractérisé par** comprenant de plus:
- au moins un dispositif digital à micromiroirs (114), où chaque ledit au moins un dispositif digital à micromiroirs (114) comprend une pluralité de micromiroirs (126) arrangés dans un réseau, chaque micromiroir de ladite pluralité de micromiroirs comprend une surface réfléchissante associée, chaque ledit micromiroir et ladite surface réfléchissante associée de ladite pluralité de micromiroirs est positionnable en rotation à n'importe laquelle d'une pluralité d'états de rotation sensible à un signal de commande de micromiroirs, et chaque état de rotation de ladite pluralité d'états de rotation correspond à une position de rotation différente dudit micromiroir et de ladite surface réfléchissante associée; quand dans un état non tourné, ladite pluralité de micromiroirs sont arrangés le long et coïncident substantiellement avec une surface de référence, et ledit dispositif digital à micromiroirs (114),- est logé relatif audit interféromètre Fabry-Perot (66) de sorte que ladite surface de référence soit nominalement alignée avec une surface focale de ladite lentille d'images sur laquelle au moins un signal de lumière est imagé par ladite lentille d'images comme au moins une première portion d'un motif de franges circulaires correspondant;
- au moins un détecteur (68) positionné pour être capable de recevoir la lumière d'au moins un signal de lumière réfléchi par ladite pluralité de micromiroirs dudit dispositif digital à micromiroirs quand ladite pluralité de micromiroirs sont positionnés dans l'une de ladite pluralité d'états de rotation;
- un processeur de données (116), où ledit processeur de données prévoit à générer ledit signal de commande de micromiroirs pour chacune de ladite pluralité de micromiroirs, et ledit signal de commande de micromiroirs prévoit à commander une première partie de ladite pluralité de micromiroirs à un premier ledit état de rotation, et ledit signal de commande de micromiroirs prévoit à commander une seconde partie de ladite pluralité de micromiroirs à un second ledit état de rotation, où ladite première partie de ladite pluralité de micromiroirs est différente de ladite seconde partie de ladite pluralité de micromiroirs, et soit

  i. ledit au moins un détecteur comprend les premier et second détecteurs et lesdites première et seconde parties de ladite pluralité de micromiroirs prévoient pour réfléchir simultanément les première et seconde portions disjointes d'au moins une seconde portion de ladite première portion dudit motif de franges circulaires correspondant pour correspondre lesdits premier et second détecteurs, respectivement, OR
  ii. ladite première partie de ladite pluralité de micromiroirs dans un premier ledit état de rotation prévoit à réfléchir une première portion disjointe d'au moins une seconde portion de ladite première portion dudit motif de franges circulaires correspondant audit au moins un détecteur à un premier moment en temps, et ladite seconde partie de ladite pluralité de micromiroirs dans ledit premier dudit état de rotation prévoit à réfléchir une seconde portion disjointe de ladite au moins ladite seconde portion de ladite première portion dudit motif de franges circulaires correspondant audit au moins un détecteur à un second moment en temps, où lesdites première et seconde portions disjointes sont relativement disjointes l'une à l'égard de l'autre.

**12.** Système de traitement au moins un signal de lumière selon la revendication 11, comprenant de plus:

  a. une source de lumière qui prévoit à générer un premier faisceau de lumière;
  b. au moins un diviseur de faisceau qui prévoit diviser ledit premier faisceau de lumière dans un faisceau de lumière de référence et au moins un second faisceau de lumière, où ledit au moins un diviseur de faisceau seul ou en combinaison avec au moins une optique de formation de faisceau prévoit de faire saillir ledit au moins un second faisceau de lumière dans l'atmosphère;
  c. au moins une optique de réception qui prévoit à générer au moins un signal de lumière rétrodiffusé correspondant de la lumière dudit au moins un second faisceau de lumière rétrodiffusée d'au moins une région d'interaction dans ladite atmosphère, où ladite au moins une région d'interaction est définie par une intersection dudit au moins un second faisceau de lumière avec au moins un champs de vue d'une de ladite au moins une optique de réception correspondante, où au moins un signal de lumière comprend au moins l'un d'entre un signal de lumière de reference dudit faisceau de lumière de reference et ledit au moins un signal de lumière rétrodiffusée correspondant.

13. Système de traitement au moins un signal de lumière selon la revendication 11, comprenant de plus un capteur de température en communication thermique avec ledit étalon Fabry-Perot et couplé en fonctionnement audit processeur de données, où ledit capteur de température prévoit à transmettre un signal de température audit processeur de données et ledit signal de température prévoit une mesure de température dudit étalon Fabry-Perot.

14. Système de traitement au moins un signal de lumière selon la revendication 11, comprenant de plus un système de contrôle de température en communication thermique avec ledit étalon Fabry-Perot où ledit système de contrôle de température prévoit à maintenir une température dudit étalon Fabry-Perot.

15. Système de traitement au moins un signal de lumière selon la revendication 11, où ledit processeur de données prévoit à générer au moins une mesure représentative d'au moins un signal de lumière sensible à une pluralité de signaux dudit au moins un détecteur, où ladite pluralité de signaux sont générés par ledit au moins un détecteur sensible à au moins une détection desdites première et seconde portions disjointes de ladite au moins ladite seconde portion de ladite première portion dudit motif de franges circulaires correspondant.

*Fig. 1*

**Fig. 2**

**Fig. 3**

**Fig. 4**

*Fig. 5a*

*Fig. 5b*

**_Fig. 6_**

**Fig. 7**

Fig. 8a

Fig. 8b

Fig. 8c

Fig. 9a

Fig. 9b

**Fig. 10**

**Fig. 11**

EP 2 422 225 B1

Fig. 12a

Fig. 12b

Fig. 12c

## Total Response Velocity Derivative

*Fig. 13*

## Molecular Response Temperature Derivative

*Fig. 14*

**_Fig. 15_**

**_Fig. 16_**

**_Fig. 17_**

**_Fig. 18_**

**_Fig. 19_**

Fig. 20a — Aerosol — 150, 150.1

Fig. 20b — Molecular — 150, 150.2

Fig. 20c — Velocity — 150, 150.3

Fig. 20d — Temperature — 150, 150.4

Fig. 20e — Background — 150, 150.5

Fig. 21

Fig. 22

Randomly Select Pattern Thresholds, $\mathbf{T}_K$ and Time Fractions, $P_K$

Compute Patterns, $\Omega_K$

Compute Statistical Error, $\sigma$

Compute Cost Function, $J(\sigma_K)$

Cost< Previous Cost

Store State of Pattern Thresholds, Time Fractions and cost

Max Iterations Exceeded

Return State of Pattern Thresholds, Time Fractions and cost

**Fig. 23**

Errors, ratio = 0.9

Optimal Solutions

Performance Limit Curve

**Fig. 24**

Spawn a Mutated Child Representing a Candidate Set of Patterns, $\Omega_K$, Pattern Thresholds, $\mathbf{\tau}_K$, and Time Fractions, $P_K$

Compute Patterns, $\Omega_K$

Compute Statistical Error, $\sigma$

Compute Cost Function, $J(\sigma_K)$

Cost< Previous Cost

Y — Store State of Pattern Thresholds, Time Fractions and cost

N

Max Iterations Exceeded

N

Y — Return State of Pattern Thresholds, Time Fractions and cost

**Fig. 25**

*Fig. 26*

*Fig. 27*

Un—Seeded
Laser Data

Measured
Continiuum
Distribution

Fabry—Perot
Instrument
Model

Fabry—Perot Model Variables
1. Basic Parameters
Gap
Reflectivity
Wavelength
Focal Properties
Index Of Refraction
2. Broadening Terms
Befocus
Laser Pulse Length
Thermal Broadening

Fabry—Perot
Fringe Data

Non—Linear Least
Square Algorithm

Best Fit Observables
1. Wind (U)
2. Molecular Counts
3. Aerosol Counts
4. Temperature
5. Background Counts

**Fig. 28**

Fig. 29

Fig. 30

**Fig. 31**

**Fig. 32**

**Fig. 33**

**FIG. 34**

**FIG. 35**

**FIG. 36**

*3700*

Characterize Etalon Using Reference Signal —*3702*

For Each Fringe Of Interest —*3704*

$R_i = f(X_i)$ —*3706*

Solve For
$U_i, t_i, M_i, A_i, B_i$
From $I(x_i)$ —*3708*

N ◇ Done —*3710*

Y

*3716*

For A Given Range r*
Interpolate To Give
$U(r^*), t(r^*), M(r^*), A(r^*), B(r^*)$

$\underline{U}, \underline{t}, \underline{M}, \underline{A}, \underline{B}, \underline{R}$ —*3712*

*3714*

$U(r), t(r), M(r), A(r), B(r)$

## FIG. 37

**FIG. 38**

Stray Light
Block

314'

314

76"

156

114

Interferometer
Assembly

66

196,
197

152

Digital Micromirror
Device in FPI Plane

76'

154

120,120'

Photomultipler
Detector

(160,162)
or
(160,318)
or
(162,318)

Data
Processor

116

194.2

**FIG. 39**

FIG. 40a

FIG. 40b

FIG. 40c

**FIG. 41a**

**FIG. 41b**

**FIG. 41c**

EP 2 422 225 B1

**Fig. 42a**

**Fig. 42b**

**Fig. 43**

*4400*

*4402* — Bin (*,*)=0

*4404* — For Each Row (i)

*4406* — For Each Column (j)

*4408* — Pixel (i,j)

*4410* — $X_j = j \cdot \alpha_x - x_0 ; Y_i = i \cdot \alpha_y - y_0$

*4412* —
Transform
$$(X_j, Y_i) \rightarrow (R, \theta)$$
$$R = \sqrt{X_j^2 + Y_i^2} \qquad \theta = Tan^{-1}(\frac{Y_i}{X_j})$$

*4420*

All Pixels Binned ?

N

Y

*4414* — θ Within Region Of Interest (ROI) ? — N

Y

*4416* —
Determine
$K = Bin\ Index\ (R) = \dfrac{R}{\beta} - k_0$

*4418* —
Bin (k, ROI)
+=
Pixel (i,j)

Return Binned Fringe Pattern

*4422*

*4414'* —
(R, **θ**) Within Region Of Interest ?

**Fig. 44a**

**Fig. 44b**

4500

```
                          ┌─────────┐
                          │  Start  │
                          └─────────┘
                               │
        ┌──────────────────────────────────────────┐
4502 ───│    For Each Region Of Interest            │
        │       e.g.  ROI=1,...,4                   │
        └──────────────────────────────────────────┘
                               │
                 ┌─────────────────────────┐
4504 ────────────│    Bin (*,ROI)=0         │
                 └─────────────────────────┘
                               │
              ┌──────────────────────────────┐
4506 ─────────│   N(ROI)=# Pixels In ROI     │
              └──────────────────────────────┘
                               │
            ┌──────────────────────────────────┐
4508 ───────│    For Each Pixel m In ROI       │
            │       i.e.  m=1...N(ROI)         │
            └──────────────────────────────────┘
                               │
      ┌────────────────────────────────────────────┐
4510 ─│     j(m,ROI)=Index Of Pixel (m)             │
      │     i(m,ROI)=Index Of Pixel (m)             │
      │     k(m,ROI)=Radial Bin Index Of Pixel (m)  │
      └────────────────────────────────────────────┘
                               │
   ┌──────────────────────────────────────────────────────┐
4512│ Bin(k(m,ROI),ROI)+=Pixel Value (i(m,ROI),j(m,ROI))   │
   └──────────────────────────────────────────────────────┘
                               │
                          ╱─────────╲
                         ╱ All Pixels ╲
4514 ──────────         ╱    In ROI     ╲   N
                        ╲   Binned      ╱ ────────►
                         ╲     ?       ╱
                          ╲─────────╱
                               │ Y
                          ╱─────────╲
                         ╱  All ROI  ╲   N
4516 ──────────         ╱   Binned    ╲ ────────►
                        ╲     ?       ╱
                         ╲─────────╱
                               │ Y
              ┌──────────────────────────────┐
4518 ─────────│    Return Binned Data        │
              └──────────────────────────────┘
```

**Fig. 45**

EP 2 422 225 B1

Raw Data

4602 — Line Of Sight $V_1$

4602 — Line Of Sight $V_2$

4602 — Line Of Sight $V_3$

$V_1, V_2, V_3$ → Static Density $\rho$ — 4604

$V_1, V_2, V_3$ → Static Air Temperature $T_s$ — 4606

4608 — Transform From Light Of Sight Frame Of Reference To OADS Frame Of Reference $(x_m, y_m, z_m)$ And Then To Aircrafts's $x, y, z$, Frame Of Reference

Transformed Data

$V_x$

$V_y$

$V_z$

$V_x, V_y, V_z$ → True Airspeed $V_T$ — 4610

$V_z$ → Vertical Speed $H'_p$

$V_y, V_T$ → Sideslip — 4612

$V_x, V_z$ → Angle of Attack — 4614

**FIG. 46**

FIG. 47

EP 2 422 225 B1

*Fig. 48*

## REFERENCES CITED IN THE DESCRIPTION

**Patent documents cited in the description**

- US 2006262324 A
- US 7495774 B
- US 5535047 A
- US 4893003 A
- US 6613908 B

**Non-patent literature cited in the description**

- **P.B. HAYS ; R.G. ROBLE.** A Technique for Recovering Doppler Line Profiles from Fabry-Perot Interferometer Fringes of very Low Intensity. *Applied Optics,* 1971, vol. 10, 193-200
- **J. NOCEDAL ; S. WRIGHT.** Numerical Optimization. Springer-Verlag, 1999, 194-201
- **D. LUENBERGER.** Optimization by Vector Space Methods. John Wiley & Sons, Inc, 1969, 15
- **T. L. KILLEEN ; P.B. HAYS.** Doppler line profile analysis for a multichannel Fabry-Perot interferometer. *Applied Optics,* 1984, vol. 23, 612
- **W.H. PRESS ; S.A. TEUKOLSKY ; W.T VETTERLING ; B.P. FLANNERY.** Numerical Recipes in C, The Art of Scientific Computing. Cambridge University Press, 1992, 656-661, 681-706